(19) Europäisches Patentamt
European Patent Office
Office européen des brevets

(11) EP 4 692 134 A1

(12) **EUROPEAN PATENT APPLICATION**
published in accordance with Art. 153(4) EPC

(43) Date of publication:
**11.02.2026 Bulletin 2026/07**

(21) Application number: **24780936.1**

(22) Date of filing: **01.04.2024**

(51) International Patent Classification (IPC):
***C08F 4/654*** *(2006.01)* ***C08F 10/00*** *(2006.01)*

(52) Cooperative Patent Classification (CPC):
**C08F 4/654; C08F 10/00**

(86) International application number:
**PCT/JP2024/013471**

(87) International publication number:
**WO 2024/204844 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058756**

(71) Applicant: **Mitsui Chemicals, Inc.**
**Tokyo 104-0028 (JP)**

(72) Inventors:
- **ISOGAI, Makoto**
  **Sodegaura-shi, Chiba 299-0265 (JP)**
- **KIMURA, Takashi**
  **Kuga-gun, Yamaguchi 740-0061 (JP)**
- **TAKANO, Shotaro**
  **Sodegaura-shi, Chiba 299-0265 (JP)**
- **YAMADA, Wataru**
  **Sodegaura-shi, Chiba 299-0265 (JP)**

(74) Representative: **J A Kemp LLP**
**80 Turnmill Street**
**London EC1M 5QU (GB)**

(54) **SOLID TITANIUM CATALYST COMPONENT, CATALYST FOR OLEFIN POLYMERIZATION, AND METHOD FOR POLYMERIZING OLEFIN**

(57) A solid titanium catalyst component (I) including titanium, magnesium, halogen, and a compound (a) represented by the following formula (1). A catalyst for olefin polymerization, including the solid titanium catalyst component (I) and an organometallic compound catalyst component (II) containing a metal element selected from Groups 1, 2, and 13 of the periodic table. An olefin polymerization method, including polymerizing an olefin in the presence of the catalyst for olefin polymerization.

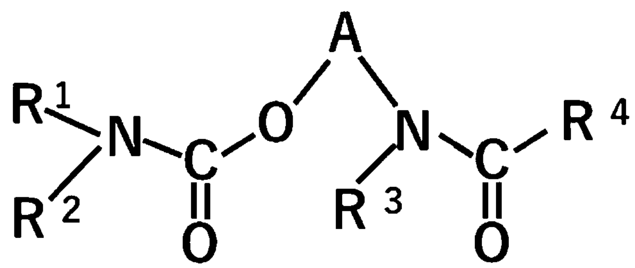

EP 4 692 134 A1

## Description

Technical Field

The present invention relates to a solid titanium catalyst component, a catalyst for olefin polymerization containing the solid titanium catalyst component, and a method for polymerizing an olefin using the catalyst for olefin polymerization.

Background Art

To date, known catalysts that are used to produce an olefin polymer such as an ethylene homopolymer, an α-olefin homopolymer or an ethylene/α-olefin copolymer include catalysts containing a titanium compound supported on an activated magnesium halide. Hereinafter, "homopolymerization" and "copolymerization" may be collectively referred to as "polymerization".

For example, catalysts containing titanium tetrachloride or titanium trichloride called Ziegler-Natta catalysts, and catalysts containing an organometallic compound and a solid titanium catalyst component composed of magnesium, titanium, halogen, and an electron donor are widely known as such catalysts for olefin polymerization.

The latter catalysts show high activity in the polymerization of α-olefins such as ethylene, propylene, and 1-butene. The resulting α-olefin polymers may have high stereoregularity.

It is reported that excellent polymerization activity and stereospecificity are demonstrated when, among the above catalysts, a catalyst composed of a solid titanium catalyst component carrying an electron donor selected from carboxylic acid esters typically represented by phthalic acid esters, an aluminum-alkyl compound as a cocatalyst component, and a silicon compound having at least one Si-OR (wherein R is a hydrocarbon group) is used in particular (e.g., Patent Literature 1). In addition to phthalic acid esters, a large number of electron donors such as polyether compounds are being researched.

Concerning the research involving an ester compound as an electron donor, a catalyst containing a carboxylic acid ester having two or more ester groups (e.g., Patent Literature 2) is also disclosed. The present applicant also reported that an ester compound having a specific cyclic structure provides, in a highly active manner, a polyolefin having a broad molecular weight distribution (Patent Literatures 3 to 5).

A catalyst having a substituted succinic acid ester as an electron donor is reported as a catalyst that provides a polyolefin having a broad molecular weight distribution. The present applicant also reported a catalyst containing a polycarboxylic acid ester having a specific cyclic structure (Patent Literature 6).

Citation List

Patent Literature

Patent Literature 1: JP57-63310A
Patent Literature 2: JP2005-517746A
Patent Literature 3: WO2008/010459
Patent Literature 4: WO2022/045232
Patent Literature 5: WO2022/138634
Patent Literature 6: WO2006/077945

Summary of Invention

Technical Problem

Polypropylene (a propylene polymer) representing a polymer of an olefin having 3 or more carbon atoms is known to have a potential to show heat resistance and rigidity comparable to general-purpose engineering plastics while having a hydrocarbon structure. Polyolefin, which is a hydrocarbon structure, is a material entailing relatively low environmental burdens by barely generating toxic gas during combustive disposal or thermal recycle (a recycling method for recovering the thermal energy of combustion as, e.g., electric power).

It is also known that the heat resistance of the propylene polymer is greatly dependent on the stereoregularity thereof, and that the rigidity is affected by not only the stereoregularity but also the molecular weight distribution. While techniques have been developed that control stereoregularity to a considerable degree, it is expected with recent

advancement of molding technology that polymers having higher stereoregularity may exhibit unexpected physical properties. Simultaneously having a broader molecular weight distribution may further improve the physical-property balance as well. On the other hand, from the viewpoint of environmental protection and economy, development of catalysts showing higher activity is required. Examples of such catalysts are the catalysts disclosed in the above-described Patent Literatures 4 to 6, a feature of which is that the structure of the electron donor component is a compound whose main backbone is an alicyclic structure, and it is observed that compounds with a complicated alicyclic structure tend to show high performance.

Accordingly, an object of the present invention is to provide a solid titanium catalyst component, a catalyst for olefin polymerization, and a method for polymerizing an olefin that enable an olefin polymer having a higher stereoregularity and a better molecular weight distribution than conventional polymers to be produced in a highly active manner.

Solution to Problem

As a result of diligent research, the present inventors have found that a solid titanium catalyst component containing a compound having a plurality of specific nitrogen- and oxygen-containing functional groups enables a polymer having a broad molecular weight distribution and an extremely high stereoregularity to be produced in a highly active manner, and have completed the present invention. Note that the main backbone of the above-described compound is not limited to alicyclic structures. Examples of the present invention are shown below.

[1] A solid titanium catalyst component (I) including titanium, magnesium, halogen, and a compound (a) represented by the following formula (1):

[Chem. 1]

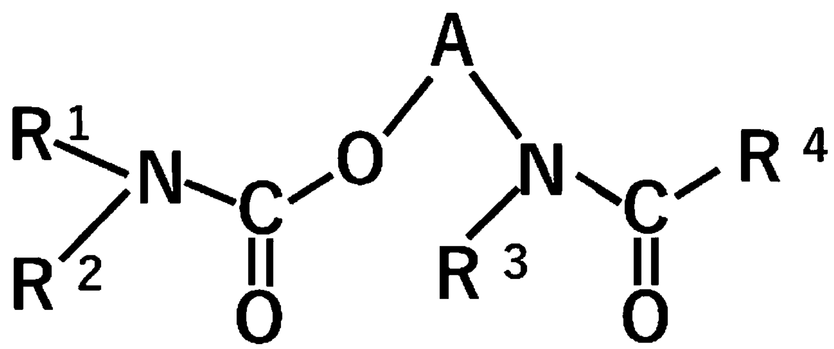

(1)

wherein

A is a substituent having a "$-CR_2-R^{100}-CR_2-$" structure,
$R^1$ and $R^2$ are each a substituent having an "$R^{10}-CR_2-$" structure,
$R^3$ is a hydrogen atom or a substituent having an "$R^{10}-CR_2-$" structure,
$R^4$ is a substituent selected from a substituent having an "$R^{10}-CR_2-$" structure, a substituent having an "$R^{10}-At^{16}-$" structure, and a substituent having an "$R^{10}_2-At^{15}-$" structure,
$At^{15}$ is a Group 15 atom of the periodic table and $At^{16}$ is a Group 16 atom of the periodic table,
R and $R^{10}$ are each a group containing an atom selected from carbon, hydrogen, and elements in Groups 15, 16, and 17 of the periodic table,
$R^{100}$ is each a group containing an atom selected from carbon, hydrogen, and elements in Groups 15, 16, and 17 of the periodic table, or a bond selected from a single bond, a double bond, and a triple bond,
$R^1$ to $R^4$ and A may be bonded to each other to form a monocyclic ring or a polycyclic ring, and
a plurality of R and $R^{100}$ in A may be bonded to each other to form a monocyclic ring or a polycyclic ring, or form a multiple bond.

[2] The solid titanium catalyst component (I) according to item [1], wherein $R^{100}$ is a group containing an atom selected from carbon, hydrogen, and elements in Groups 15, 16, and 17 of the periodic table.
[3] The solid titanium catalyst component (I) according to item [1] or [2], wherein A is a cyclic structure.

[4] The solid titanium catalyst component (I) according to any of items [1] to [3], wherein A is an aromatic structure.
[5] The solid titanium catalyst component (I) according to any of items [1] to [4], wherein $R^3$ is a substituent having an "$R^{10}$-$CR_2$-" structure.
[6] The solid titanium catalyst component (I) according to any of items [1] to [5], wherein $R^4$ is a substituent having an "$R^{10}$-$CR_2$-" structure.
[7] The solid titanium catalyst component (I) according to any of items [1] to [6], wherein $At^{15}$ is a nitrogen atom.
[8] The solid titanium catalyst component (I) according to any of items [1] to [7], wherein $At^{16}$ is an oxygen atom.
[9] A catalyst for olefin polymerization, including the solid titanium catalyst component (I) according to any of items [1] to [8] and an organometallic compound catalyst component (II) containing a metal element selected from Groups 1, 2, and 13 of the periodic table.
[10] The catalyst for olefin polymerization according to item [9], further including an electron donor (III).
[11] An olefin polymerization method, including polymerizing an olefin in the presence of the catalyst for olefin polymerization according to item [9] or [10].

Advantageous Effects of Invention

According to the present invention, an olefin polymer having an extremely high stereoregularity, having a high melting point and heat of fusion, and having a broad molecular weight distribution can be produced in a highly active manner. For applications such as film, a polymer that can be expected to have excellent transparency can be produced as well.

It can be expected that the use of the solid titanium catalyst component, catalyst for olefin polymerization, and method for polymerizing an olefin of the present invention enables an olefin polymer having, for example, not only moldability and rigidity but also higher heat resistance to be produced.

Description of Embodiments

Hereinafter, the solid titanium catalyst component (I), catalyst for olefin polymerization, method for producing an olefin polymer, and propylene polymer according to the present invention will now be described in detail.

[Solid titanium catalyst component (I)]

The solid titanium catalyst component (I) according to the present invention contains titanium, magnesium, halogen, and a compound (a) with a specific structure containing a plurality of types of heteroatoms.

<Compound (a)>

The compound (a) is represented by the following formula (1):

[Chem. 2]

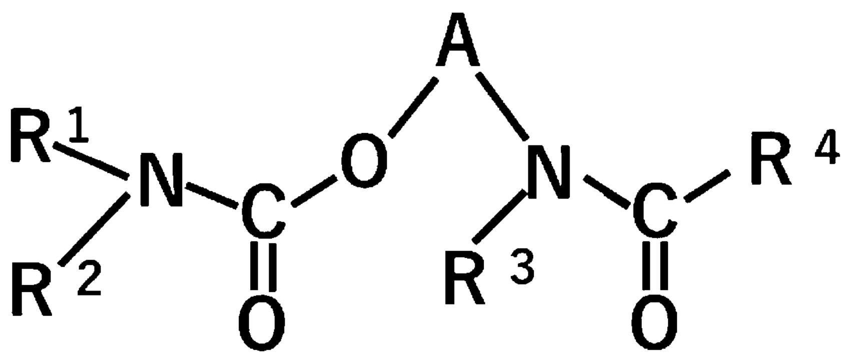

(1)

wherein

A is a substituent having a "-$CR_2$-$R^{100}$-$CR_2$-" structure,

$R^1$ and $R^2$ are each a substituent having an "$R^{10}$-$CR_2$-" structure,

$R^3$ is a hydrogen atom or a substituent having an "$R^{10}$-$CR_2$- " structure,

$R^4$ is a substituent selected from a substituent having an "$R^{10}$-$CR_2$-" structure, a substituent having an "$R^{10}$-$At^{16}$-" structure, and a substituent having an "$R^{10}_2$-$At^{15}$-" structure,

$At^{15}$ is a Group 15 atom of the periodic table and $At^{16}$ is a Group 16 atom of the periodic table,

R and $R^{10}$ are each a group containing an atom selected from carbon, hydrogen, and elements in Groups 15, 16, and 17 of the periodic table,

$R^{100}$ is each a group containing an atom selected from carbon, hydrogen, and elements in Groups 15, 16, and 17 of the periodic table, or a bond selected from a single bond, a double bond, and a triple bond,

$R^1$ to $R^4$ and A may be bonded to each other to form a monocyclic ring or a polycyclic ring, and

a plurality of R and $R^{100}$ in A may be bonded to each other to form a monocyclic ring or a polycyclic ring, or form a multiple bond.

The Group 15 atom $At^{15}$ of the periodic table is preferably an atom selected from nitrogen, phosphorus, arsenic, antimony, etc., more preferably an atom selected from nitrogen and phosphorus, and particularly preferably a nitrogen atom.

The Group 16 atom $At^{16}$ of the periodic table is preferably an atom selected from oxygen, sulfur, selenium, etc., more preferably an atom selected from oxygen and sulfur, and particularly preferably an oxygen atom.

Note that the symbol "-" represents a covalent bond, and the word "atom" may refer to the atom itself, but the description also includes structures having a covalent bond in a compound or substituent. For example, as for an oxygen atom, the case when denoted as "-O-" may be referred to as an oxygen atom.

R and $R^{100}$ are each a group containing an atom selected from carbon, hydrogen, and elements in Groups 15, 16, and 17 of the periodic table. Examples of the Group 15 and Group 16 elements may include the same elements as $At^{15}$ and $At^{16}$ described above. Preferable examples of the Group 17 elements may include fluorine, chlorine, bromine, and iodine, with atoms selected from fluorine, chlorine, and bromine being more preferable, with atoms selected from fluorine and chlorine being even more preferable, and in particular, chlorine.

$R^{100}$ includes the same groups as R and $R^{10}$, as well as cases where it represents a bond selected from a single bond, a double bond, and a triple bond. As such a structure, for example, the substituent having a "-$CR_2$-$R^{100}$-$CR_2$-" structure can also be represented by the structural formula specified by the following formula (1-1).

[Chem. 3]

$$-R_2C\!-\!\left(R^{101}\right)_n\!-\!CR_2- \qquad (1-1)$$

In the above formula (1-1), n is 0 or 1 and $R^{101}$ is a group containing an atom selected from carbon, hydrogen, and elements in Groups 15, 16, and 17 of the periodic table.

$R^{101}$ is a group similar to R and $R^{10}$, containing an atom selected from carbon, hydrogen, and elements in Groups 15, 16, and 17 of the periodic table.

In the above formula (1-1), the case where n = 0 corresponds to a structure in which two $CR_2$ are linked by a single bond.

These substituents can be bonded to each other to form a cyclic structure, a heterocyclic structure, an aromatic structure, etc. Note that, in the present invention, double and triple bonds are regarded as a type of cyclic structure, as a 2-membered ring, unless otherwise specified.

There may be a plurality of R and $R^{10}$, each of which may have the same structure or may have a different structure. Specific examples of such substituents include substituted or unsubstituted hydrocarbon groups having from 1 to 30 carbon atoms. Examples of such substituents may include aliphatic substituents, alicyclic substituents, and hydrocarbon groups having an aryl group and having 6 to 20 carbon atoms. They may have a structure containing an atom of Groups 15 to 17 of the periodic table (sometimes, referred to as a heteroatom in the present invention), as described above. Preferably, they are hydrocarbon groups composed solely of carbon and hydrogen.

Examples of the hydrocarbon groups described above may include monovalent hydrocarbon groups having preferably 1 to 20 carbon atoms, preferably 1 to 10 carbon atoms, more preferably 2 to 8 carbon atoms, even more preferably 4 to 8 carbon atoms, and particularly preferably 4 to 6 carbon atoms. Specific examples of such hydrocarbon groups include aliphatic hydrocarbon groups, alicyclic hydrocarbon groups, and aromatic hydrocarbon groups, such as a methyl group, an ethyl group, a n-propyl group, an isopropyl group, a n-butyl group, an isobutyl group, a hexyl group, a heptyl group, an octyl group, a 2-ethylhexyl group, a decyl group, a dodecyl group, a tetradecyl group, a hexadecyl group,

an octadecyl group, an eicosyl group, a cyclohexyl group, a substituted or unsubstituted aryl group such as a phenyl group, and a substituted or unsubstituted cycloalkenyl group. Among these, for example, a n-butyl group, an isobutyl group, a hexyl group, an octyl group, and a phenyl group are preferable, and a n-butyl group, an isobutyl group, and a phenyl group are even more preferable.

The hydrocarbon groups described above may be hydrocarbon groups containing a heteroatom such as nitrogen, oxygen, phosphorus, and halogen, as described above. Such heteroatoms are especially oxygen and nitrogen. Such substituents can be selected from known structures. More specifically, suitable examples thereof may include a carbonyl structure-containing group such as a carboxylic acid ester group, an aldehyde group, an acetyl group, or an oxycarbonylalkyl group, an alkoxy group, a substituted or unsubstituted alkoxy group, a substituted or unsubstituted alkenyloxy group, a substituted or unsubstituted cycloalkyloxy group, a substituted or unsubstituted cycloalkenyloxy group, a substituted or unsubstituted aryloxy group, a substituted or unsubstituted heteroaryl group, a substituted or unsubstituted heteroaryloxy group, and a siloxy group.

Preferable examples of $R^{100}$ may include divalent or trivalent structures of the substituent structures exemplified for R and $R^{10}$ described above. Specific examples thereof include polyvalent substituents of aliphatic hydrocarbon groups, alicyclic hydrocarbon groups, and aromatic hydrocarbon groups, such as a methylene group, an ethylene group, a 1,3-propylene group, a 1-methylethylene group (an isopropylene group), a n-butylene group, a 1-methyl-1,3-propylene group (an isobutylene group), a 1,6-hexamethylene group, a 1,7-heptamethylene group, a 1,8-octamethylene group, a 2-ethyl-1,6-hexamethylene group, etc., a substituted or unsubstituted arylene group, such as a phenylene group and a naphthylene group, and a substituted or unsubstituted cycloalkylene group. Among these, an ethylene group, a propylene group, a butylene group, a phenylene group, a naphthalene group, a dibenzyl group, a naphthalenedimethylene group, etc. are preferable.

Examples thereof may also include polyvalent substituents such as aliphatic hydrocarbon groups, alicyclic hydrocarbon groups, and aromatic hydrocarbon groups exemplified by heteroatom-containing divalent substituents, etc., as well as heteroatom-containing groups corresponding to the above, such as an oxymethylene group, an oxyethylene group, a 1-oxy,1,3-propylene group, a 1-oxy-1-methylethylene group, a 1-oxy n-butylene group, a 1-oxy-1-methyl-propylene group, 1-oxy-hexamethylene group, etc., a substituted or unsubstituted oxyarylene group such as an oxyphenylene group and an oxynaphthylene group, a substituted or unsubstituted oxycycloalkylene group, etc., as well as a dioxymethylene group, a 1,2-dioxyethylene group, a 1,3-dioxy,1,3-propylene group, a 1,2-dioxy-1-methylethylene group, a 1,4-dioxy n-butylene group, a 1,3-dioxy-1-methyl-propylene group, a 1-oxy-hexamethylene group, etc., a substituted or unsubstituted dioxyarylene group such as a dioxyphenylene group and a dioxynaphthylene group, and a substituted or unsubstituted dioxycycloalkylene group. Among these, an ethylene group, a propylene group, a butylene group, a phenylene group, a naphthalene group, a dibenzyl group, a naphthalenedimethylene group, etc. are preferable.

Furthermore, $R^{100}$ may refer only to a bond. That is, A may take a "$-CR_2-CR_2-$" structure, a "-RC=CR-" structure, and a carbon-carbon triple bond structure.

Alternatively, $R^{100}$ can be bonded to R to form a ring structure. $R^{100}$ and R can also be directly bonded to form a double bond (this can be regarded as a 2-membered ring). In the present invention, the formation of such a ring structure may be preferable.

A is a substituent having a "$-CR_2-R^{100}-CR_2-$" structure.

Specific examples of such a substituent may include the same structures as those exemplified for $R^{100}$ described above. The difference from $R^{100}$ may be considered to be that the elements at its terminals (the sites bonded to nitrogen and oxygen of functional groups such as carbamate and amide groups, as described later) are limited to carbon. Accordingly, as for a preferable aspect, an ethylene group, a propylene group, a butylene group, a phenylene group, a naphthalene group, a dibenzyl group, a naphthalenedimethylene group, etc. are preferable. It is more preferably a bulky branched aliphatic structure, an alicyclic structure, or an aromatic hydrocarbon group, even more preferably an aromatic structure, and in particular, examples thereof may include a phenylene group, a naphthalene group, and substituted products thereof. Particularly, it is a naphthalene group or a substituted naphthalene group, and more specifically, a structure having a 1,9-naphthalene backbone.

As will be described later, for the preferable structure of A, a relatively rigid and low displacement structure may be preferable, as described above. In addition, since it is a structure bonded to carbamate and amide groups via heteroatoms, it is preferably a structure containing a multiple bond. The structure containing a multiple bond is expected to make better use of its electronically active nature.

$R^1$ and $R^2$ are each a substituent having an "$R^{10}-CR_2-$" structure. Examples of such a substituent are substantially the same as the substituents exemplified for R and $R^{10}$ described above, but the moiety bonded to nitrogen of the carbamate group, described later, is limited to carbon. For example, structures bonded to other groups via oxygen or nitrogen, such as alkoxy and amino groups, are not included. As for preferable specific examples of such a substituent, an ethyl group, a propyl group, an isopropyl group, a n-butyl group, an isobutyl group, a hexyl group, an octyl group, a phenyl group, etc. are preferable, an ethyl group, a propyl group, an isopropyl group, a n-butyl group, an isobutyl group, and a phenyl group are even more preferable, and an ethyl group, a propyl group, an isopropyl group, and a phenyl group are

particularly preferable.

$R^3$ is the content of the definition of $R^1$ and $R^2$ to which a hydrogen atom is added. It is preferably a substituent having a "$R^{10}$-$CR_2$-" structure. Therefore, specific examples of preferable substituents are also the same as for $R^1$ and $R^2$.

$R^4$ is a substituent selected from a substituent having an "$R^{10}$-$CR_2$-" structure, a substituent having an "$R^{10}$-$At^{16}$-" structure, and a substituent having an "$R^{10}_2$-$At^{15}$-" structure. Specific examples of this $R^4$ are almost the same as the substituents exemplified for R, $R^{10}$, $R^1$, and $R^2$ described above. Oxygen is the preferable example for $At^{16}$, and nitrogen is the preferable example for $At^{15}$. Specific examples of the "$R^{10}$-$At^{16}$-" structure may include alkoxy groups and aryloxy groups, and more specific preferable substituents may include an ethoxy group, a propoxy group, a butoxy group, an acetyloxy group, an ethylcarbonyloxy group, a methalloyloxy group, a phenoxy group, a substituted phenoxy group, etc.

Specific examples of the "$R^{10}$-$At^{15}$-" structure may include a dimethylamino group, a diethylamino group, a dipropylamino group, a diisopropylamino group, a dibutylamino group, a methylethylamino group, a methylpropylamino group, a diphenylamino group, and a ditolylamino group.

The compound (a) of the present invention is characterized by a structure having a carbamate structure substituent and an amide structure substituent, as shown in the formula (1). In particular, it is characterized by that the substituent having a carbamate structure is bonded to A via oxygen (O-) and the substituent with an amide structure is bonded to A via nitrogen (N-). (In the present invention, the carbamate group and amide group described above are sometimes simply referred to as functional groups.)

Since the compound (a) of the present invention has such a specific structure, the solid titanium catalyst component tends to have an excellent balance between, for example, activity, stereospecificity, molecular weight controllability, and reaction control. Although the reason why it has such an effect is not clear at present, the present inventors speculate as follows.

As described above, in the functional groups described above bonded to A, the atoms directly bonded to A are different elements, nitrogen and oxygen, and it is possible to consider the possibility that compound (a) is electronically unbalanced and has a structure with active electron motion due to the uneven distribution of the electron cloud. Furthermore, both of these functional groups are groups that have structures in which two or more heteroatoms are contained, and furthermore, these heteroatoms are bonded via one carbon atom. From this viewpoint as well, the structure can be considered as one in which uneven distribution of electron cloud can occur. That is, the structure is considered to be active in electron motion in a double or triple sense. In addition, the molecular structure also allows for an asymmetric structure, which is expected to enable more diverse active species to be formed.

The ability to form such a variety of active species is expected to produce a polymer with a broad molecular weight distribution. Also, the electronic uneven distribution is expected to activate appropriate electron donation to the titanium compound component, which will be described later. This is probably one of the reasons for the higher polymerization activity. In addition, such high activity also enables active species to be formed whose molecular weight can be increased, and therefore, as will be described later, the use of the solid titanium catalyst component of the present invention can be considered to easily provide an olefin polymer with a molecular weight distribution that spreads toward the high molecular weight side.

Meanwhile, if too many diverse active species are formed, it may be easier to take active species with low activity and stereospecificity. For this reason, it may be preferable for the A substituent in the formula (1) to have a rigid structure to some extent.

Examples of such compounds (a) may include the following structures. Some structural formulae of the exemplary compounds below have stereoisomers, and while some isomeric structures are depicted, there may be other isomeric structures that are not exemplified.

[Chem. 4]

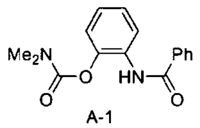
A-1
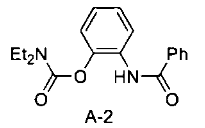
A-2
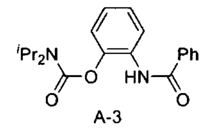
A-3
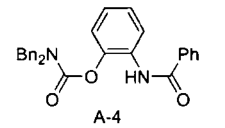
A-4
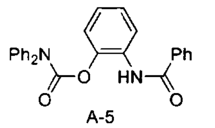
A-5
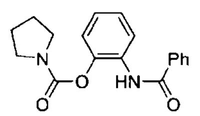
A-6
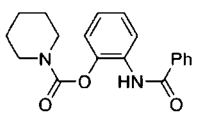
A-7
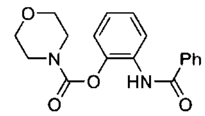
A-8
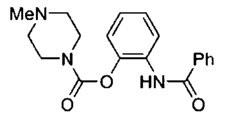
A-9
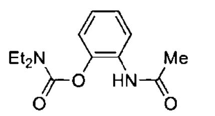
A-10
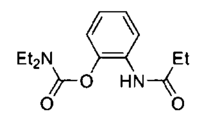
A-11
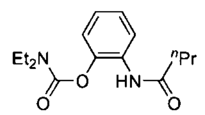
A-12
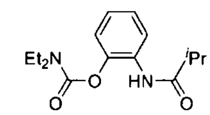
A-13
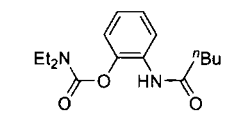
A-14
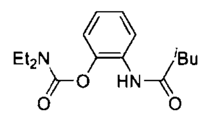
A-15
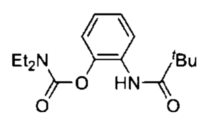
A-16
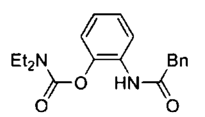
A-17
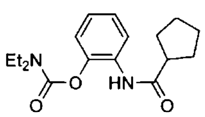
A-18
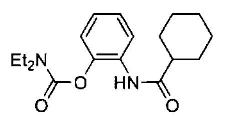
A-19
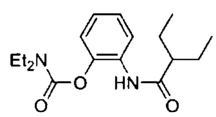
A-20
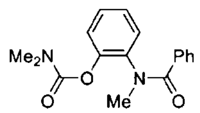
A-21
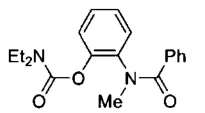
A-22
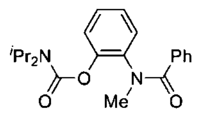
A-23
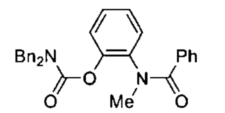
A-24
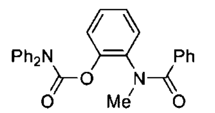
A-25
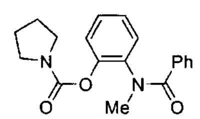
A-26
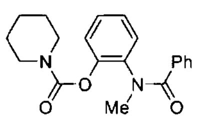
A-27
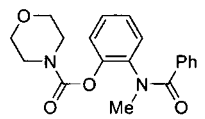
A-28
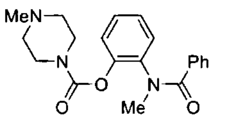
A-29
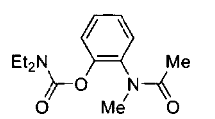
A-30
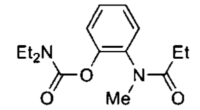
A-31
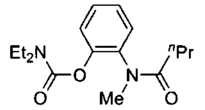
A-32
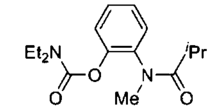
A-33
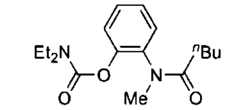
A-34
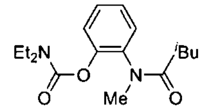
A-35
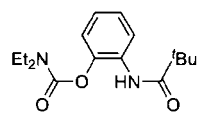
A-36
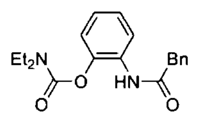
A-37
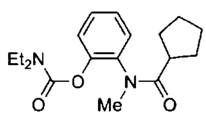
A-38
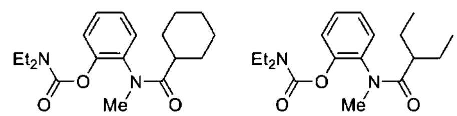
A-39 A-40
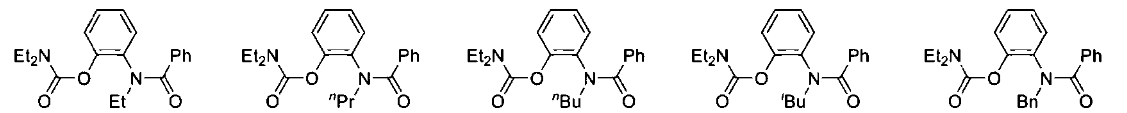
A-41 A-42 A-43 A-44 A-45

[Chem. 5]

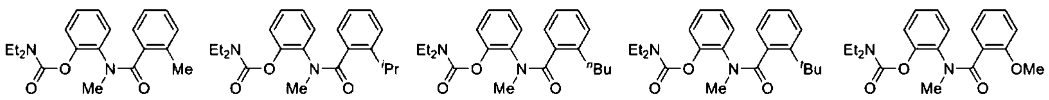

A-46 A-47 A-48 A-49 A-50

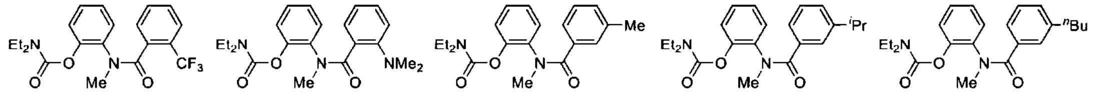

A-51 A-52 A-53 A-54 A-55

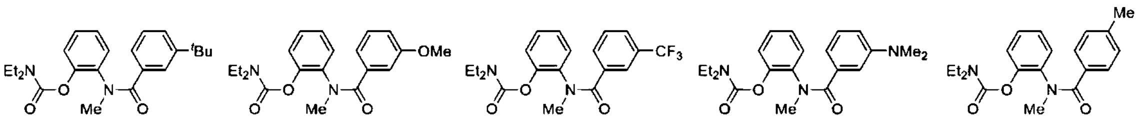

A-56 A-57 A-58 A-59 A-60

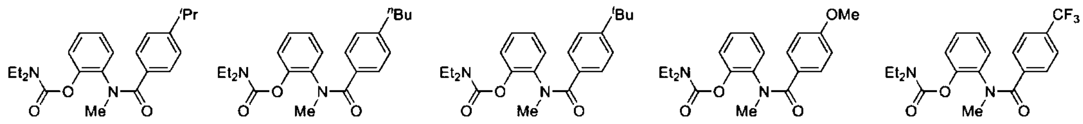

A-61 A-62 A-63 A-64 A-65

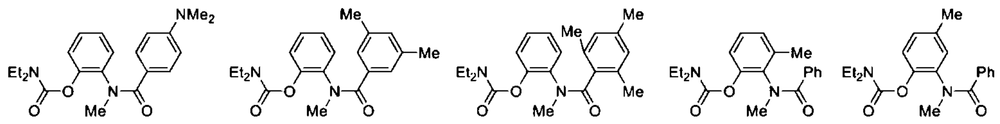

A-66 A-67 A-68 A-69 A-70

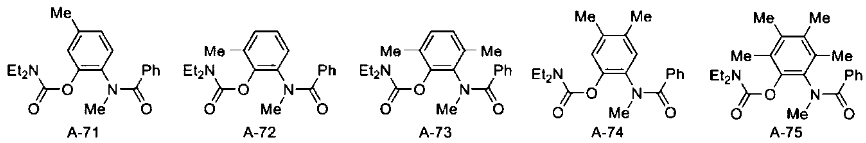

A-71 A-72 A-73 A-74 A-75

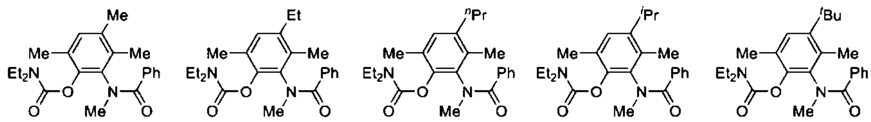

A-76 A-77 A-78 A-79 A-80

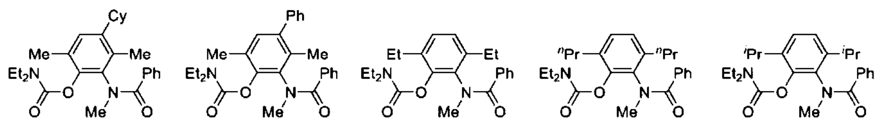

A-81 A-82 A-83 A-84 A-85

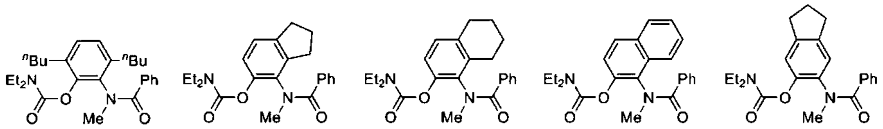

A-86 A-87 A-88 A-89 A-90

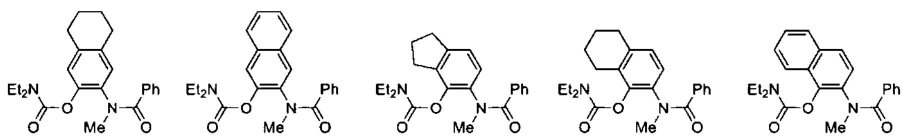

A-91 A-92 A-93 A-94 A-95

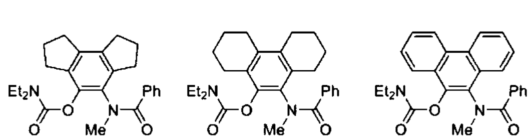

A-96 A-97 A-98

[Chem. 6]

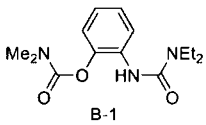
B-1
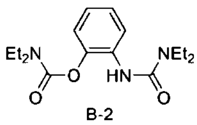
B-2
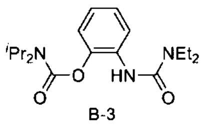
B-3
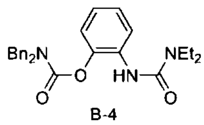
B-4
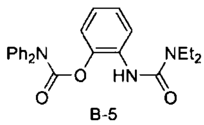
B-5
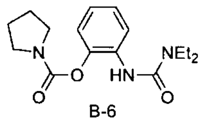
B-6
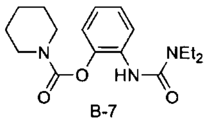
B-7
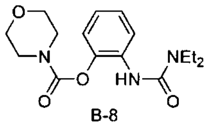
B-8
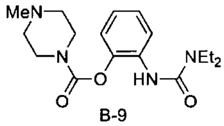
B-9
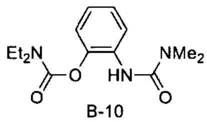
B-10
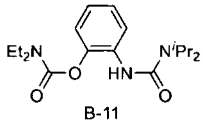
B-11
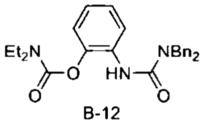
B-12
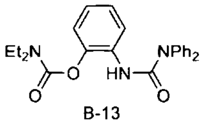
B-13
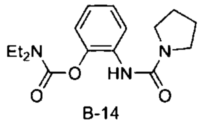
B-14
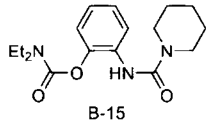
B-15
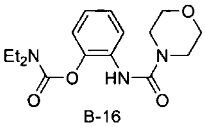
B-16
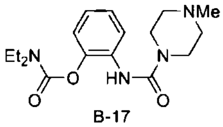
B-17
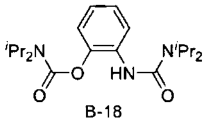
B-18
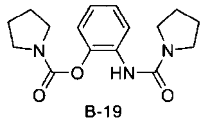
B-19
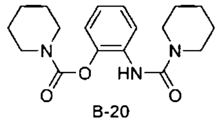
B-20
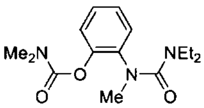
B-21
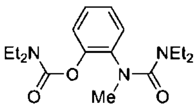
B-22
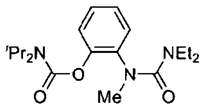
B-23
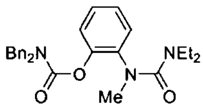
B-24
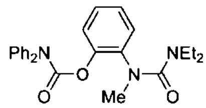
B-25
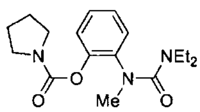
B-26
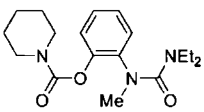
B-27
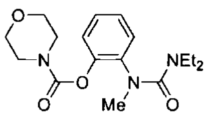
B-28
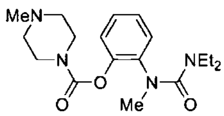
B-29
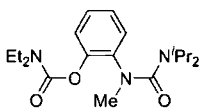
B-30
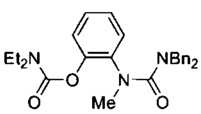
B-31
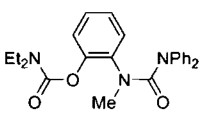
B-32
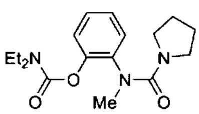
B-33
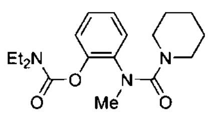
B-34
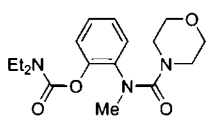
B-35
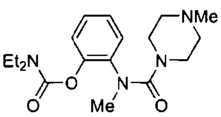
B-36
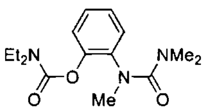
B-37
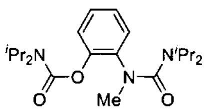
B-38
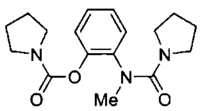
B-39
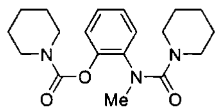
B-40

[Chem. 7]

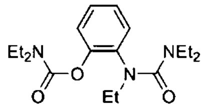
B-41

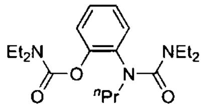
B-42

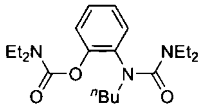
B-43

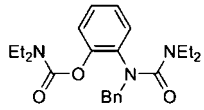
B-44

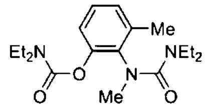
B-45

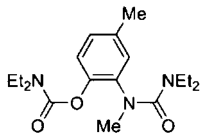
B-46

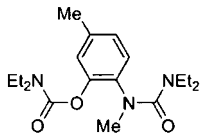
B-47

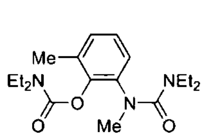
B-48

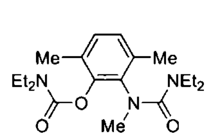
B-49

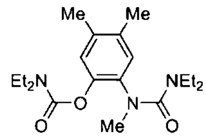
B-50

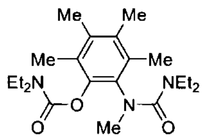
B-51

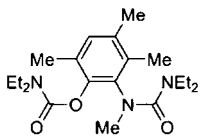
B-52

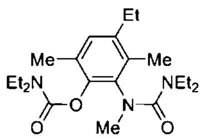
B-53

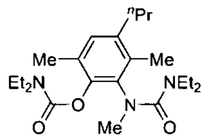
B-54

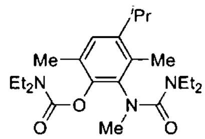
B-55

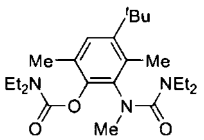
B-56

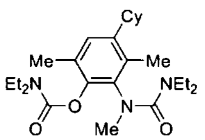
B-57

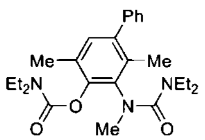
B-58

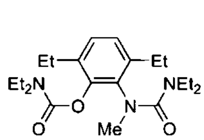
B-59

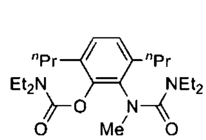
B-60

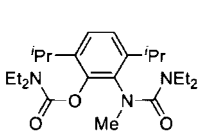
B-61

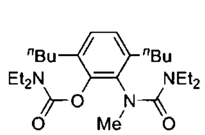
B-62

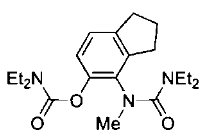
B-63

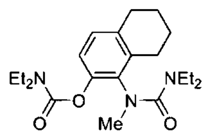
B-64

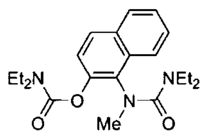
B-65

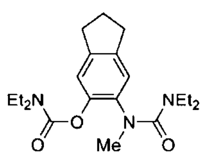
B-66

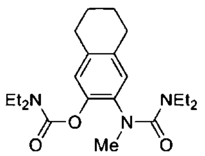
B-67

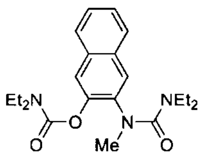
B-68

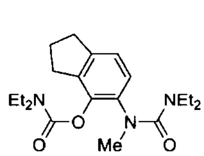
B-69

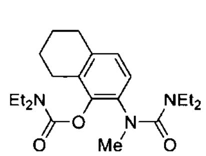
B-70

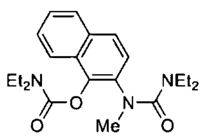
B-71

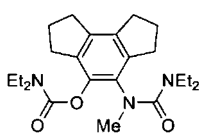
B-72

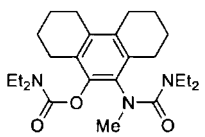
B-73

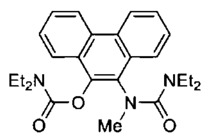
B-74

[Chem. 8]

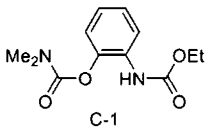
C-1

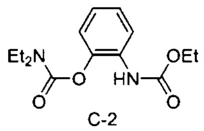
C-2

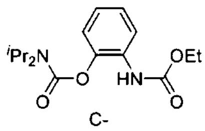
C-3

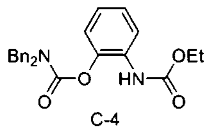
C-4

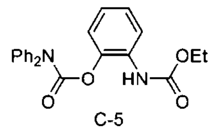
C-5

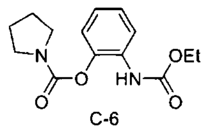
C-6

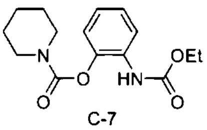
C-7

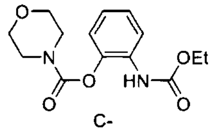
C-8

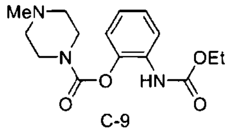
C-9

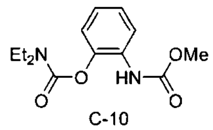
C-10

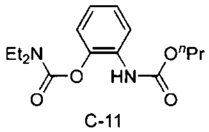
C-11

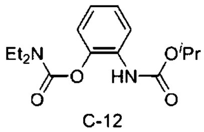
C-12

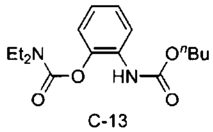
C-13

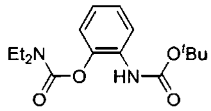
C-14

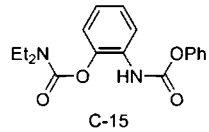
C-15

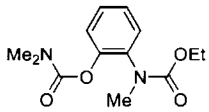
C-16

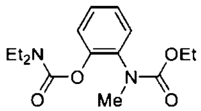
C-17

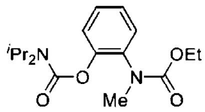
C-18

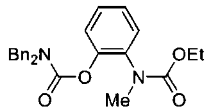
C-19

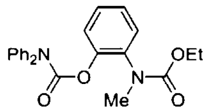
C-20

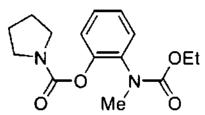
C-21

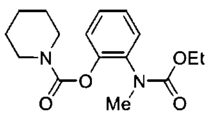
C-22

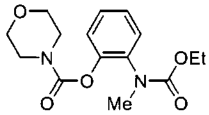
C-23

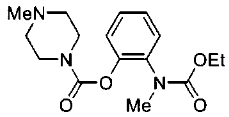
C-24

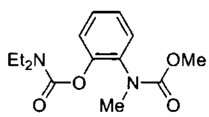
C-25

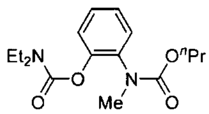
C-26

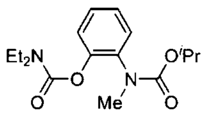
C-27

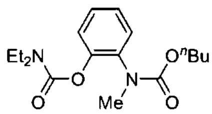
C-28

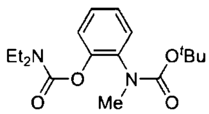
C-29

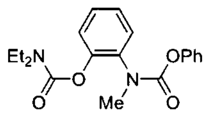
C-30

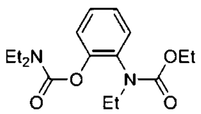
C-31

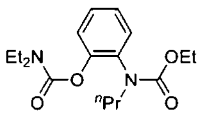
C-32

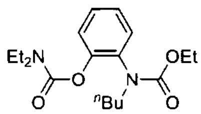
C-33

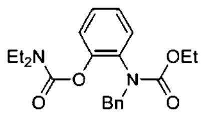
C-34

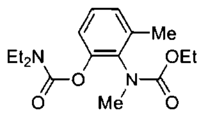
C-35

[Chem. 9]

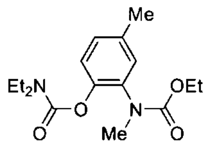
C-36

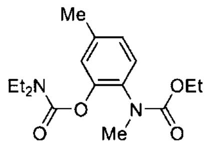
C-37

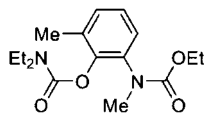
C-38

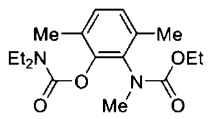
C-39

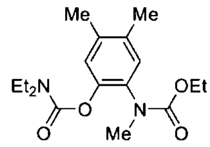
C-40

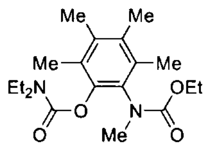
C-41

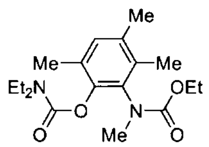
C-42

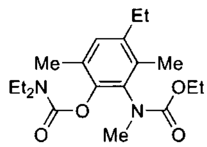
C-43

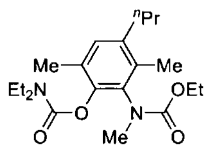
C-44

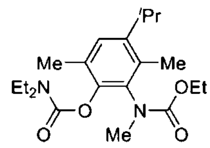
C-45

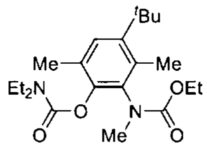
C-46

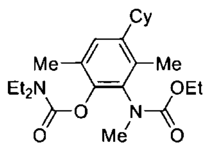
C-47

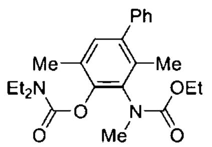
C-48

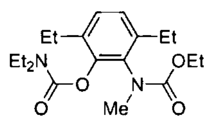
C-49

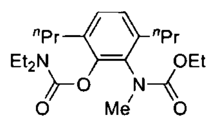
C-50

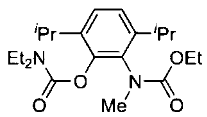
C-51

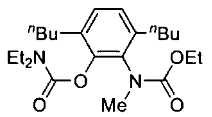
C-52

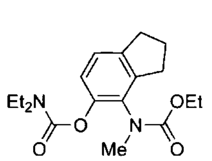
C-53

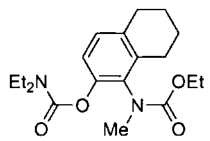
C-54

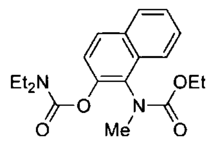
C-55

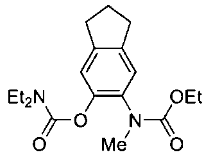
C-56

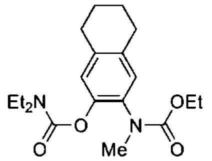
C-57

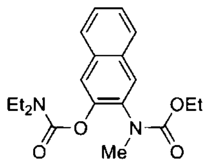
C-58

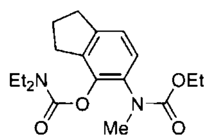
C-59

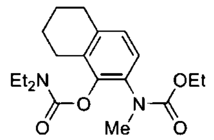
C-60

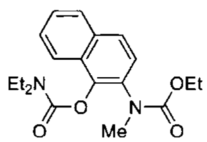
C-61

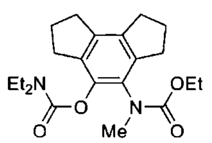
C-62

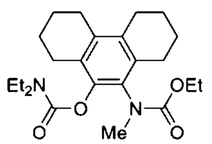
C-63

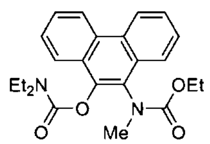
C-64

[Chem. 10]

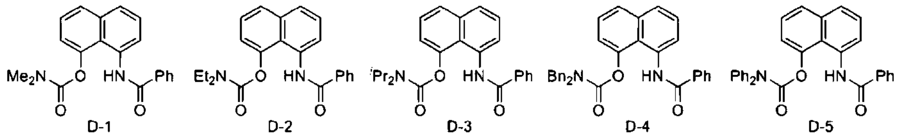

D-1 D-2 D-3 D-4 D-5

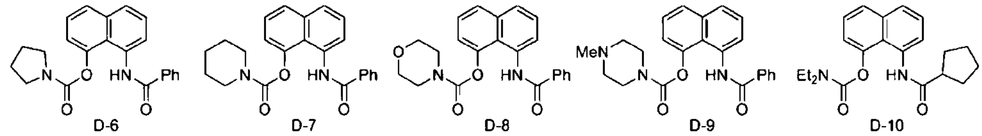

D-6 D-7 D-8 D-9 D-10

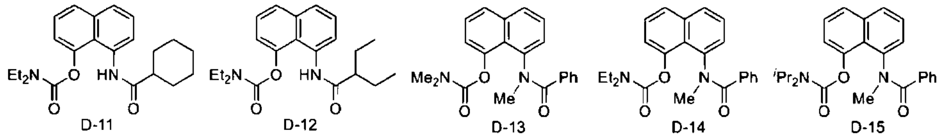

D-11 D-12 D-13 D-14 D-15

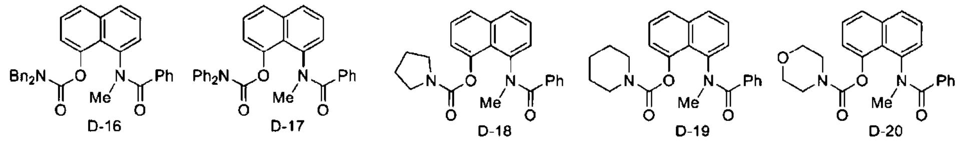

D-16 D-17 D-18 D-19 D-20

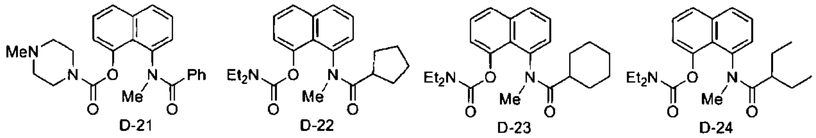

D-21 D-22 D-23 D-24

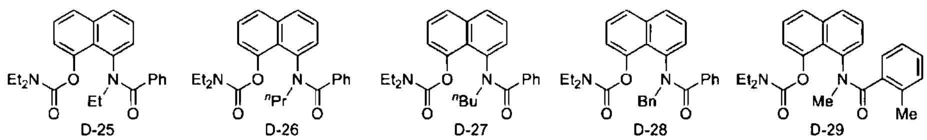

D-25 D-26 D-27 D-28 D-29

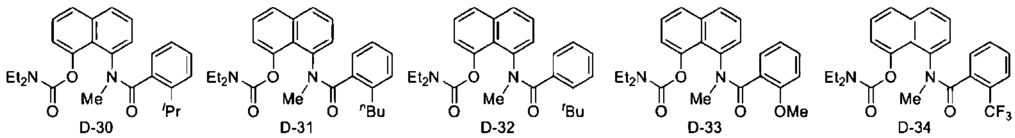

D-30 D-31 D-32 D-33 D-34

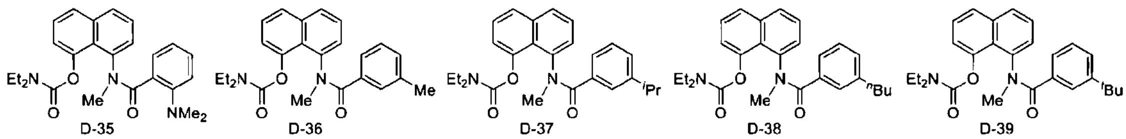

D-35 D-36 D-37 D-38 D-39

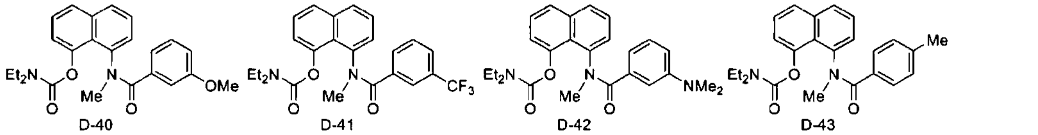

D-40 D-41 D-42 D-43

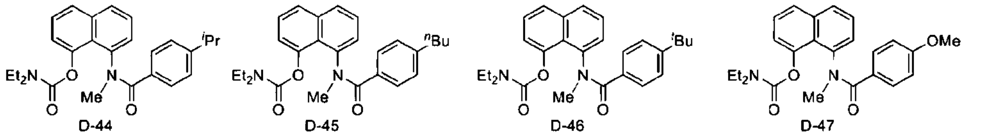

D-44 D-45 D-46 D-47

[Chem. 11]

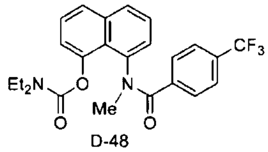
D-48

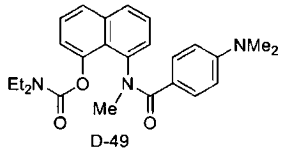
D-49

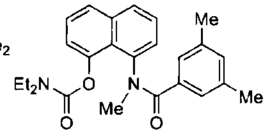
D-50

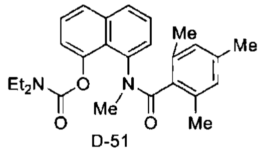
D-51

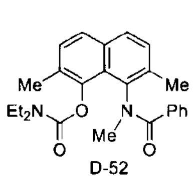
D-52

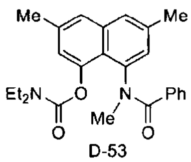
D-53

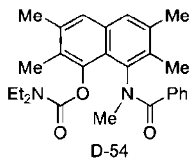
D-54

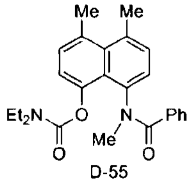
D-55

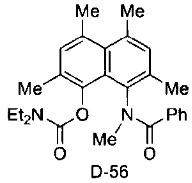
D-56

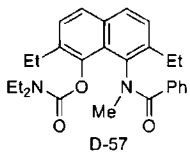
D-57

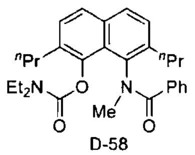
D-58

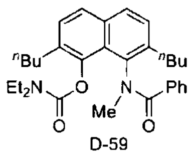
D-59

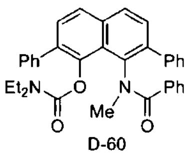
D-60

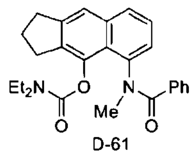
D-61

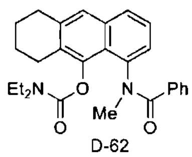
D-62

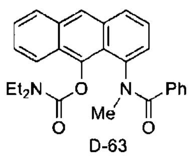
D-63

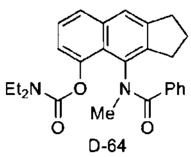
D-64

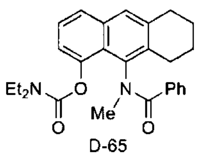
D-65

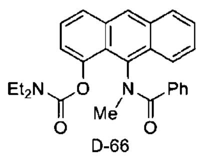
D-66

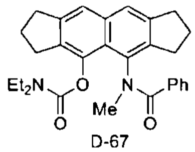
D-67

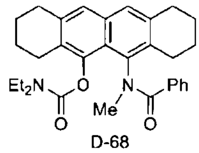
D-68

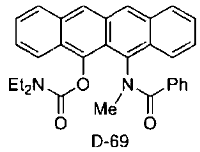
D-69

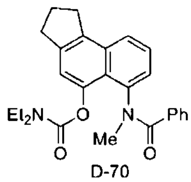
D-70

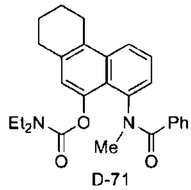
D-71

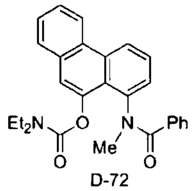
D-72

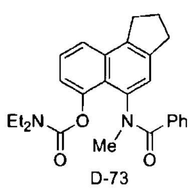
D-73

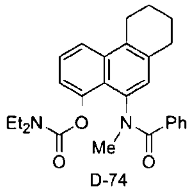
D-74

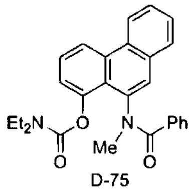
D-75

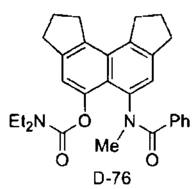
D-76

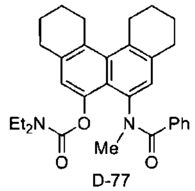
D-77

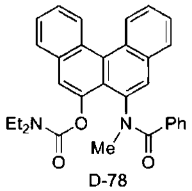
D-78

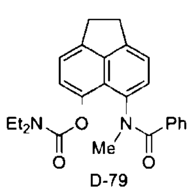
D-79

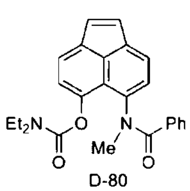
D-80

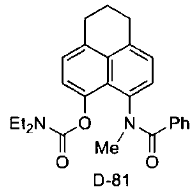
D-81

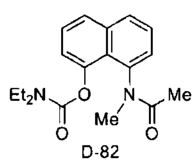
D-82

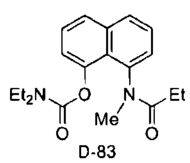
D-83

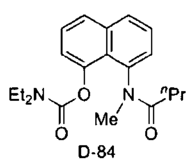
D-84

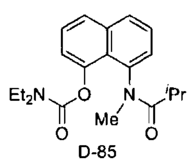
D-85

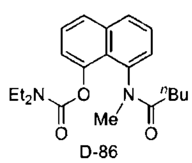
D-86

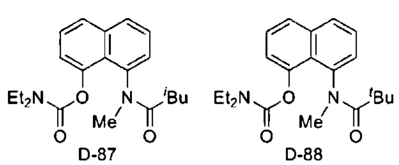
D-87

D-88

[Chem. 12]

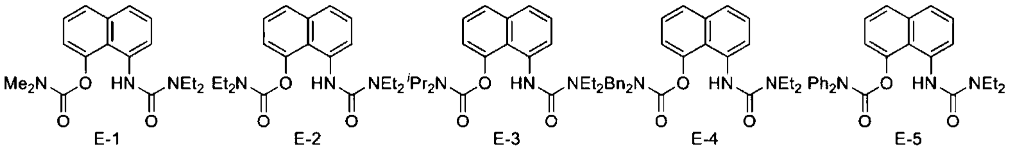

E-1 E-2 E-3 E-4 E-5

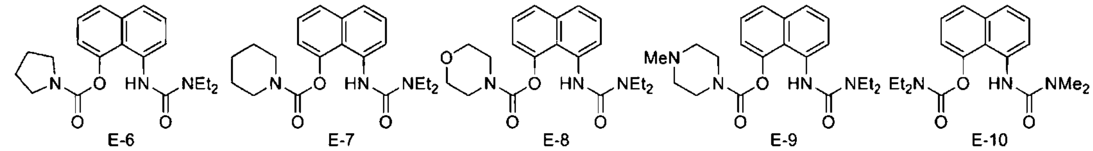

E-6 E-7 E-8 E-9 E-10

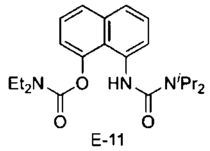

E-11

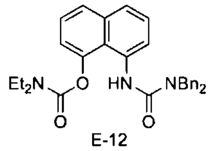

E-12

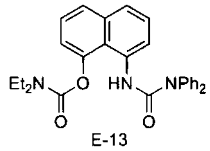

E-13

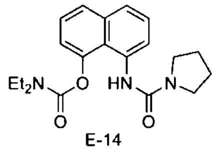

E-14

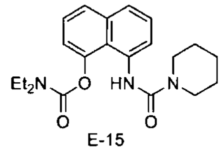

E-15

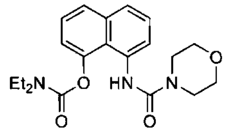

E-16

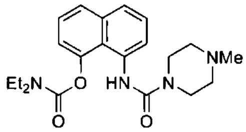

E-17

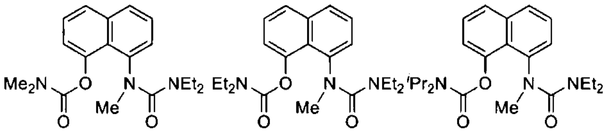

E-18 E-19 E-20

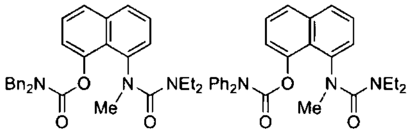

E-21 E-22

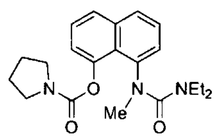

E-23

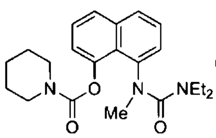

E-24

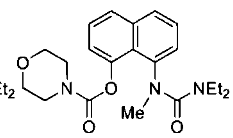

E-25

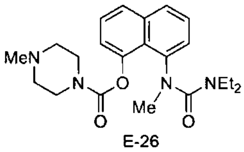

E-26

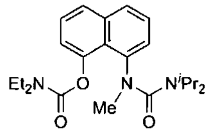

E-27

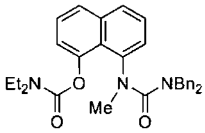

E-28

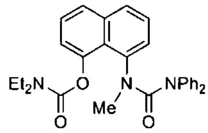

E-29

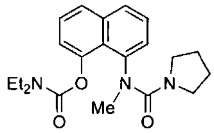

E-30

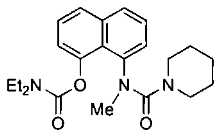

E-31

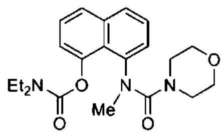

E-32

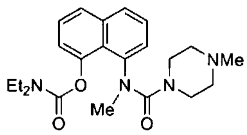

E-33

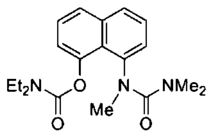

E-34

[Chem. 13]

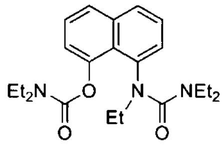
E-35

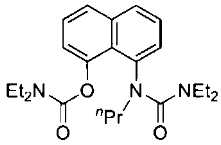
E-36

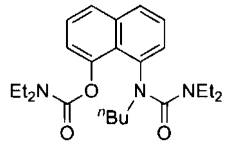
E-37

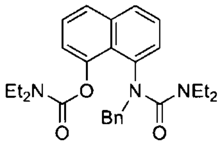
E-38

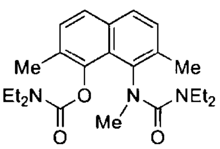
E-39

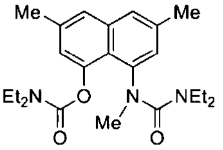
E-40

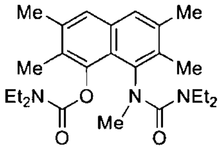
E-41

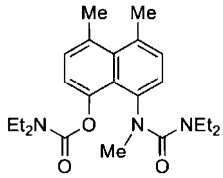
E-42

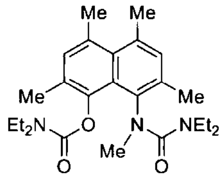
E-43

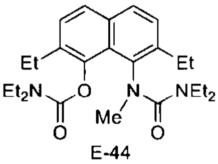
E-44

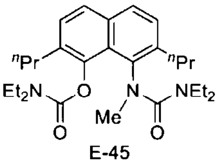
E-45

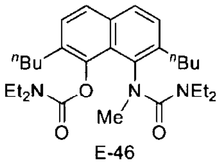
E-46

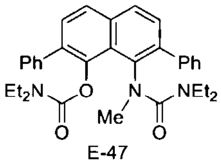
E-47

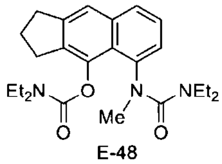
E-48

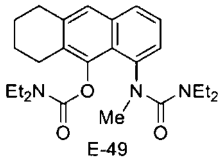
E-49

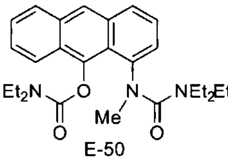
E-50

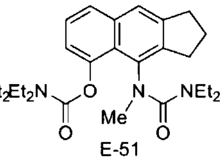
E-51

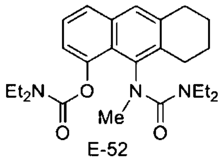
E-52

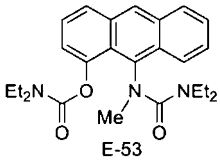
E-53

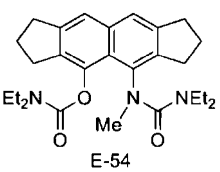
E-54

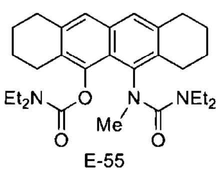
E-55

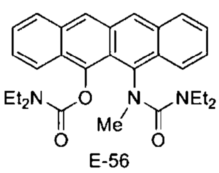
E-56

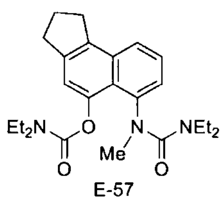
E-57

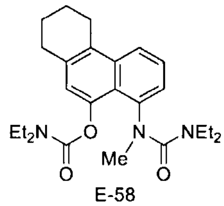
E-58

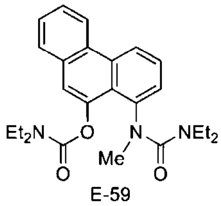
E-59

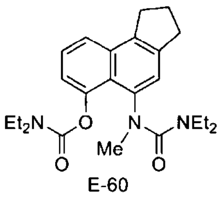
E-60

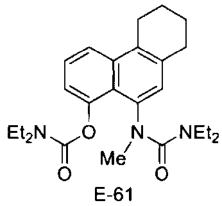
E-61

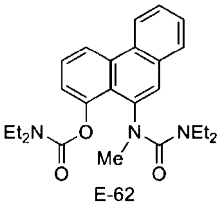
E-62

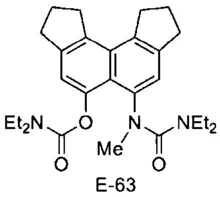
E-63

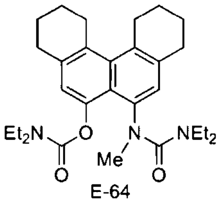
E-64

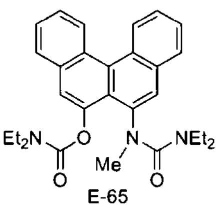
E-65

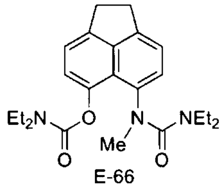
E-66

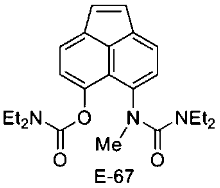
E-67

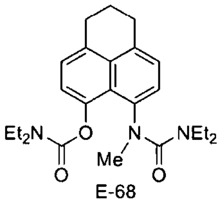
E-68

[Chem. 14]

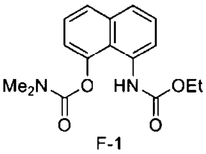
F-1
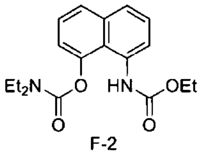
F-2
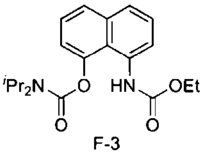
F-3
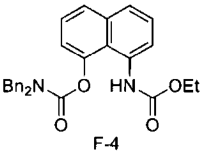
F-4
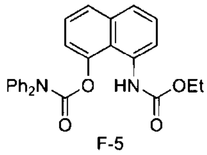
F-5

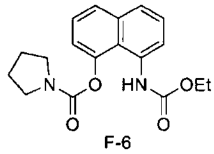
F-6
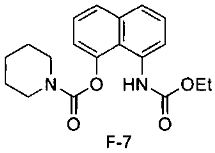
F-7
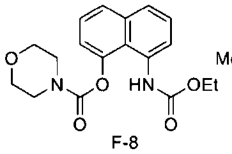
F-8
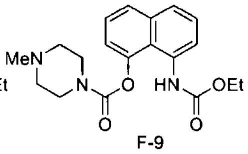
F-9
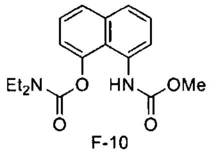
F-10

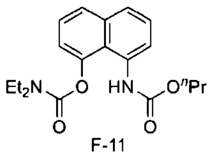
F-11
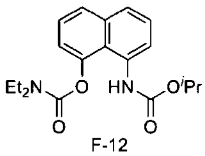
F-12
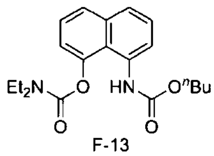
F-13
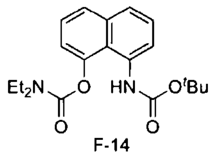
F-14
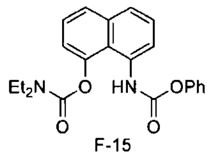
F-15

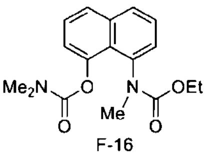
F-16
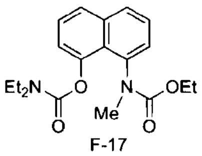
F-17
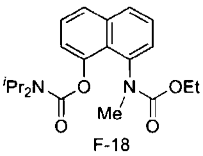
F-18
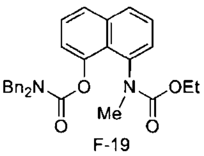
F-19
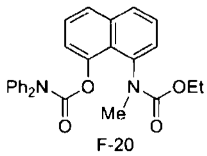
F-20

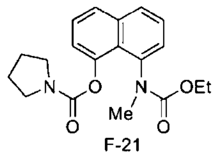
F-21
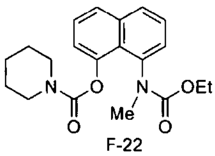
F-22
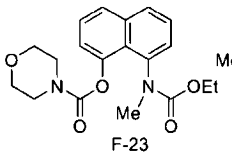
F-23
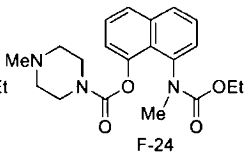
F-24
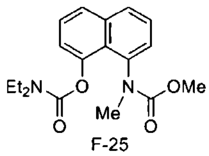
F-25

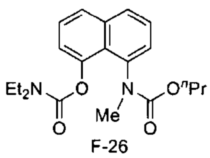
F-26
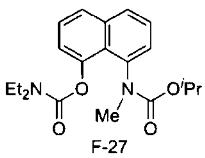
F-27
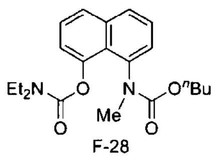
F-28
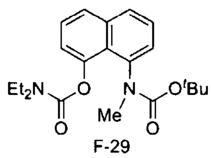
F-29
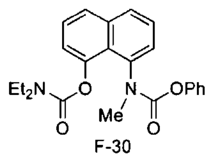
F-30

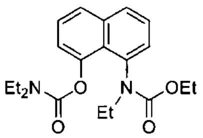
F-31
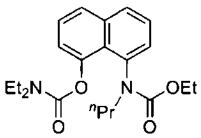
F-32
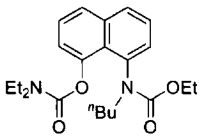
F-33
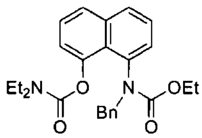
F-34

[Chem. 15]

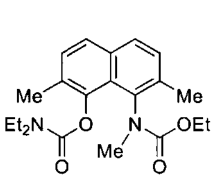 F-35 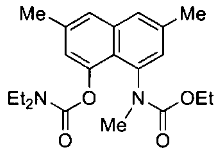 F-36 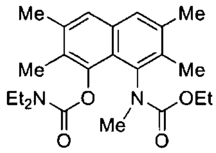 F-37 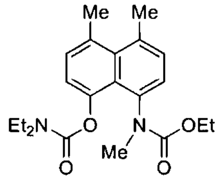 F-38 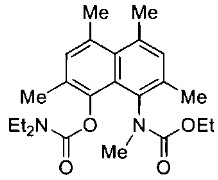 F-39

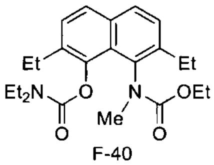 F-40 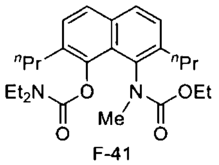 F-41 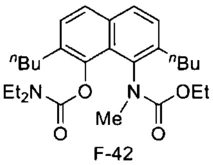 F-42 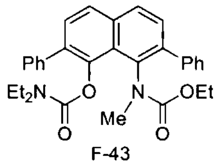 F-43 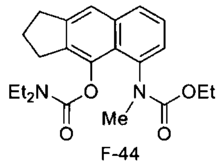 F-44

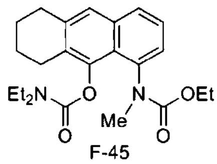 F-45 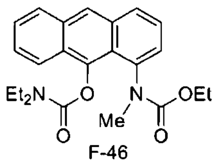 F-46 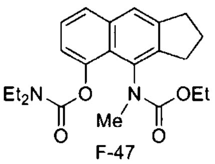 F-47 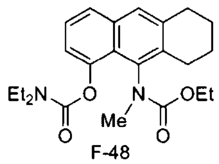 F-48 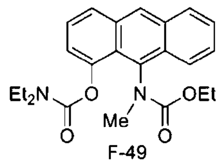 F-49

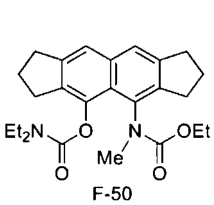 F-50 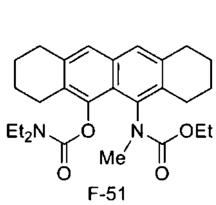 F-51 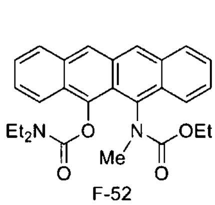 F-52 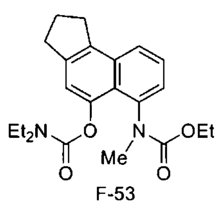 F-53 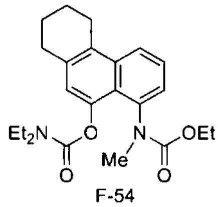 F-54

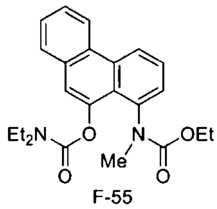 F-55 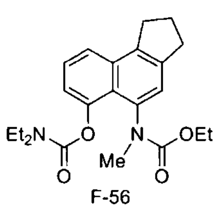 F-56 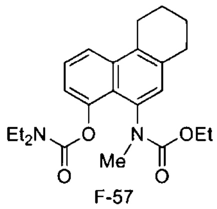 F-57 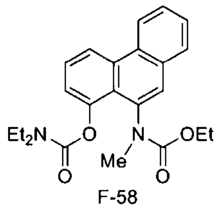 F-58 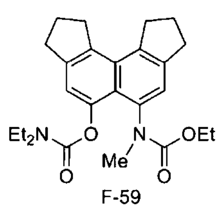 F-59

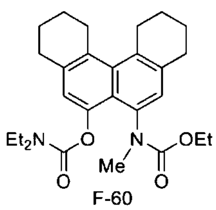 F-60 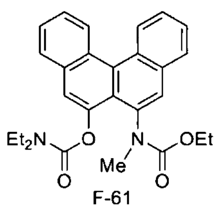 F-61 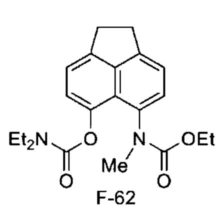 F-62 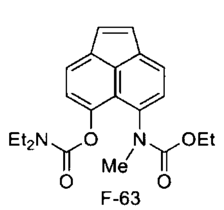 F-63 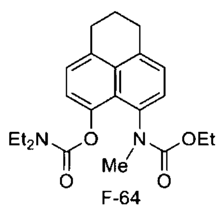 F-64

[Chem. 16]

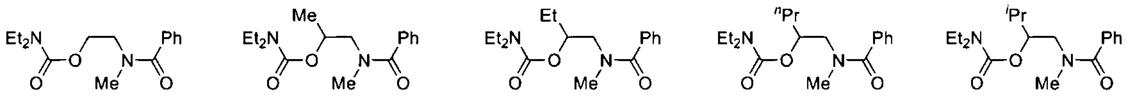

G-1 G-2 G-3 G-4 G-5

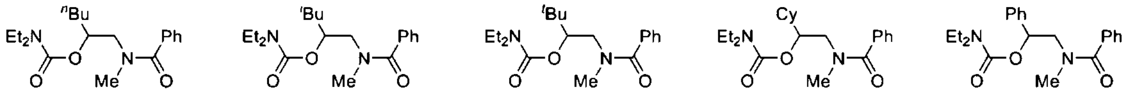

G-6 G-7 G-8 G-9 G-10

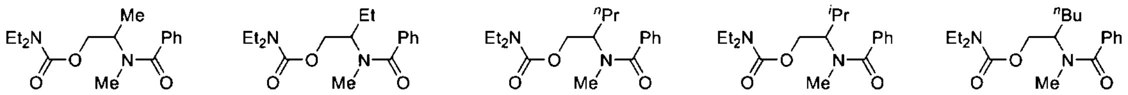

G-11 G-12 G-13 G-14 G-15

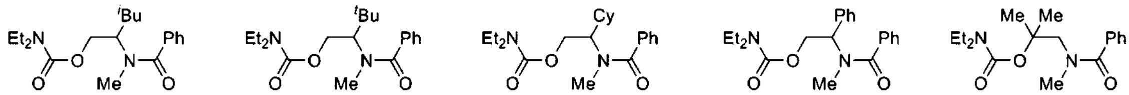

G-16 G-17 G-18 G-19 G-20

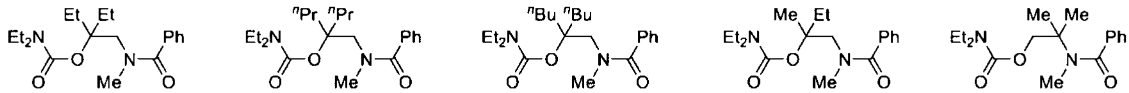

G-21 G-22 G-23 G-24 G-25

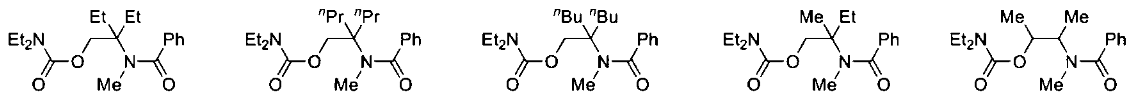

G-26 G-27 G-28 G-29 G-30

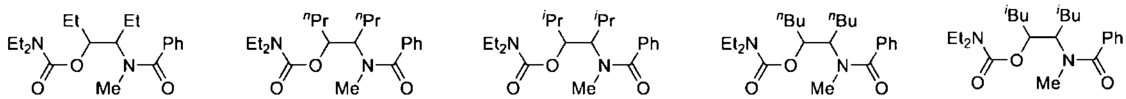

G-31 G-32 G-33 G-34 G-35

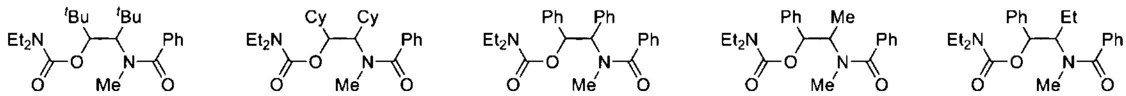

G-36 G-37 G-38 G-39 G-40

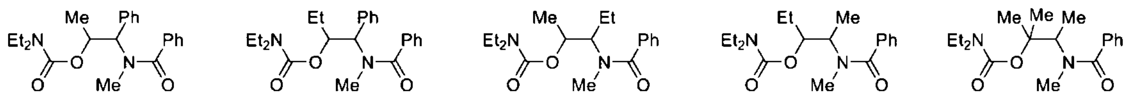

G-41 G-42 G-43 G-44 G-45

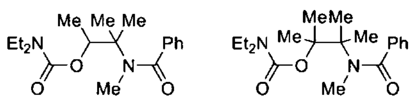

G-46 G-47

[Chem. 17]

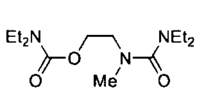
H-1

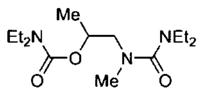
H-2

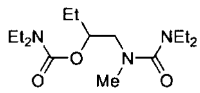
H-3

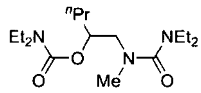
H-4

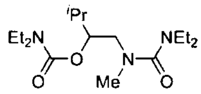
H-5

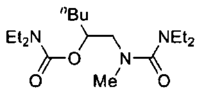
H-6

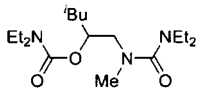
H-7

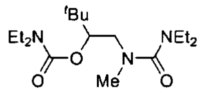
H-8

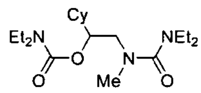
H-9

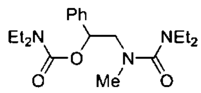
H-10

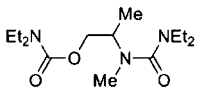
H-11

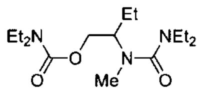
H-12

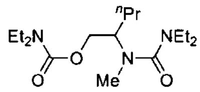
H-13

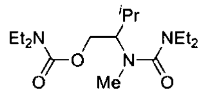
H-14

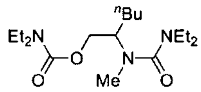
H-15

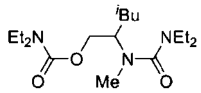
H-16

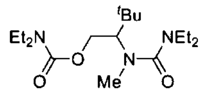
H-17

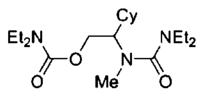
H-18

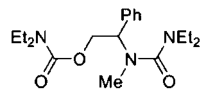
H-19

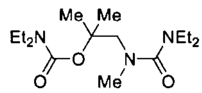
H-20

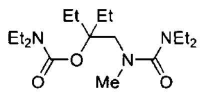
H-21

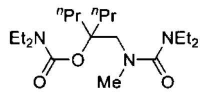
H-22

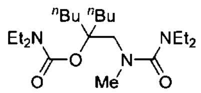
H-23

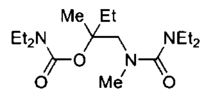
H-24

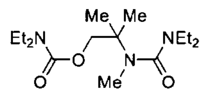
H-25

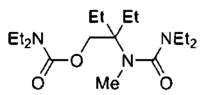
H-26

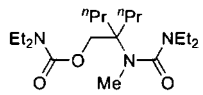
H-27

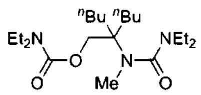
H-28

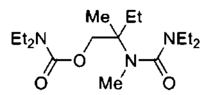
H-29

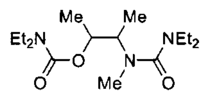
H-30

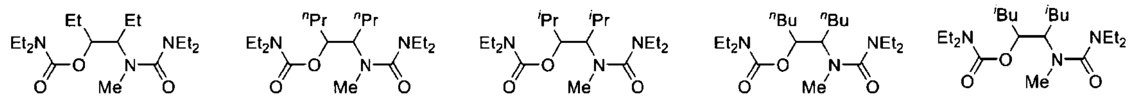
H-31 H-32 H-33 H-34 H-35

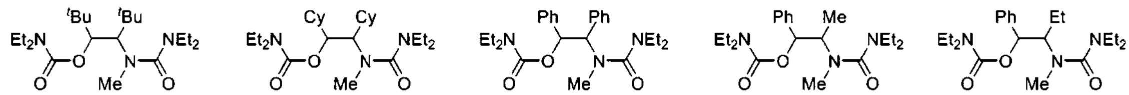
H-36 H-37 H-38 H-39 H-40

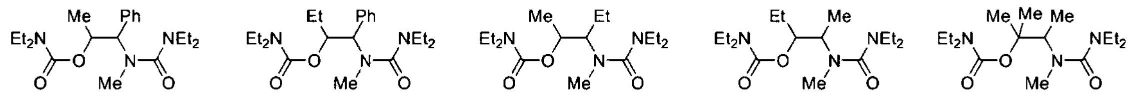
H-41 H-42 H-43 H-44 H-45

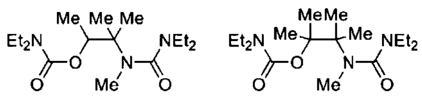
H-46 H-47

[Chem. 18]

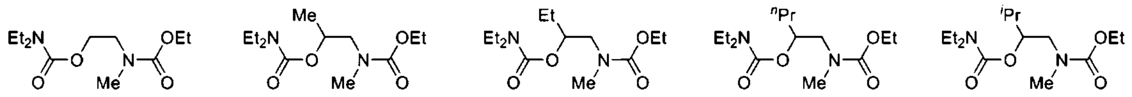

I-1 I-2 I-3 I-4 I-5

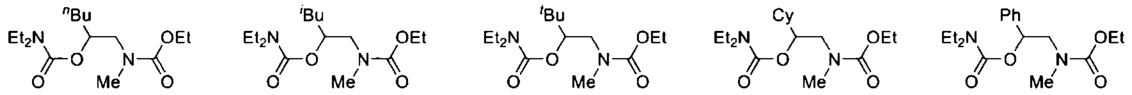

I-6 I-7 I-8 I-9 I-10

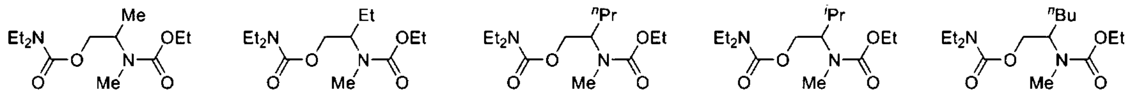

I-11 I-12 I-13 I-14 I-15

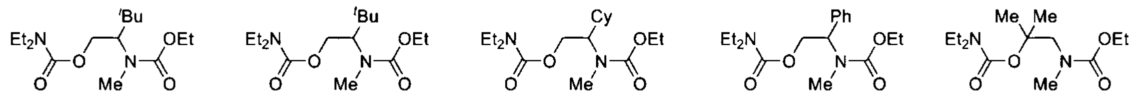

I-16 I-17 I-18 I-19 I-20

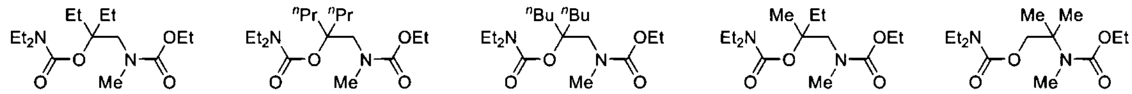

I-21 I-22 I-23 I-24 I-25

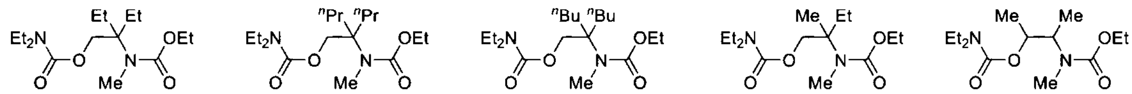

I-26 I-27 I-28 I-29 I-30

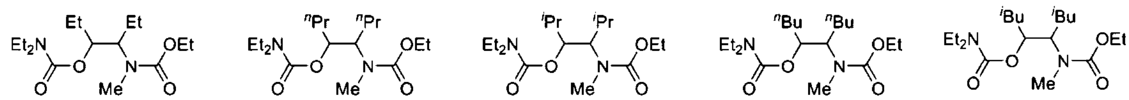

I-31 I-32 I-33 I-34 I-35

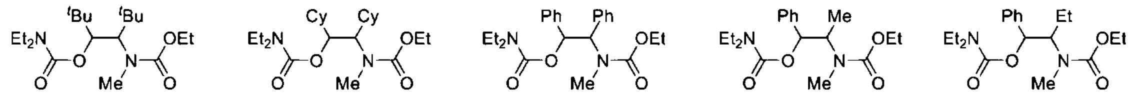

I-36 I-37 I-38 I-39 I-40

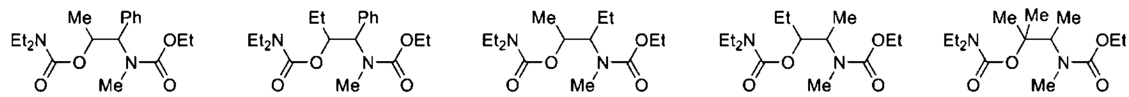

I-41 I-42 I-43 I-44 I-45

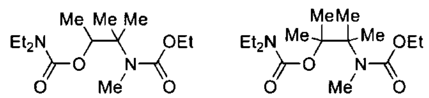

I-46 I-47

[Chem. 19]

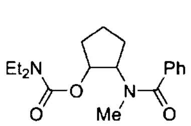
J-1

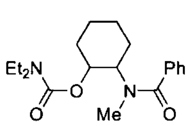
J-2

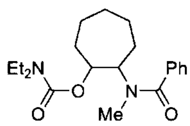
J-3

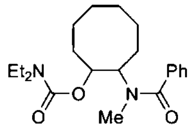
J-4

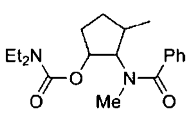
J-5

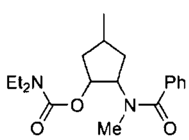
J-6

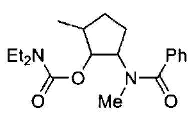
J-7

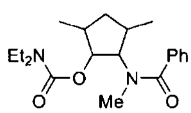
J-8

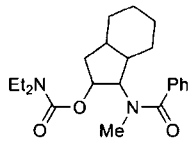
J-9

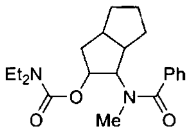
J-10

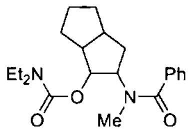
J-11

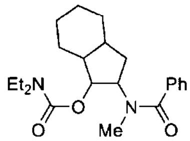
J-12

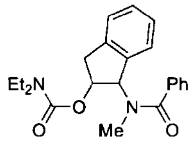
J-13

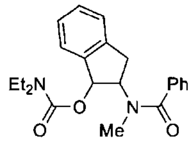
J-14

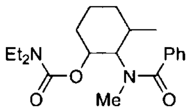
J-15

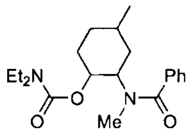
J-16

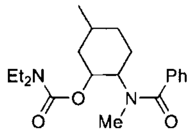
J-17

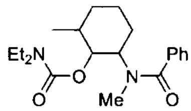
J-18

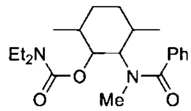
J-19

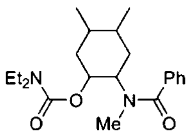
J-20

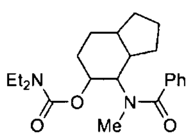
J-21

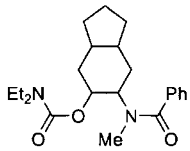
J-22

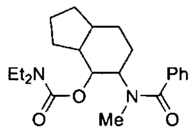
J-23

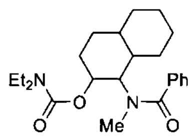
J-24

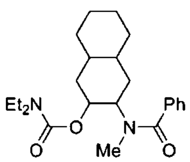
J-25

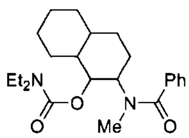
J-26

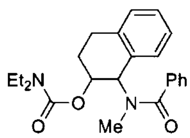
J-27

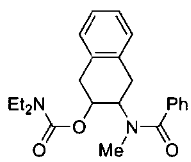
J-28

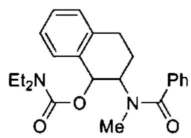
J-29

[Chem. 20]

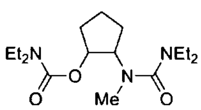
K-1

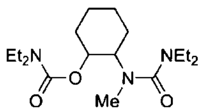
K-2

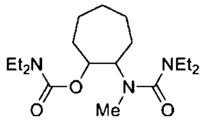
K-3

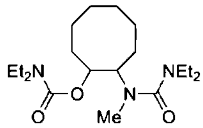
K-4

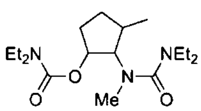
K-5

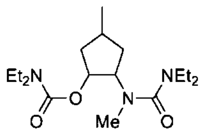
K-6

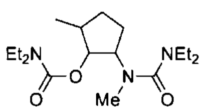
K-7

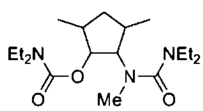
K-8

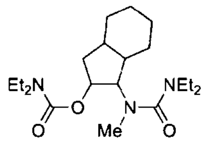
K-9

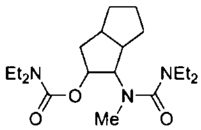
K-10

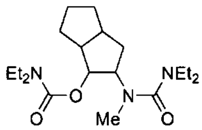
K-11

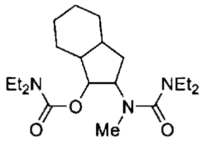
K-12

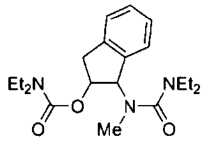
K-13

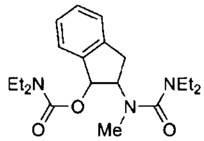
K-14

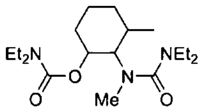
K-15

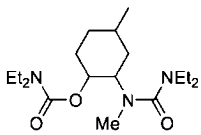
K-16

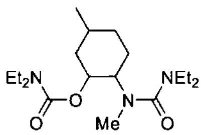
K-17

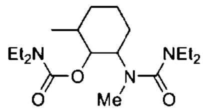
K-18

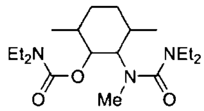
K-19

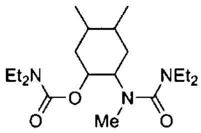
K-20

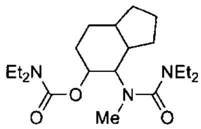
K-21

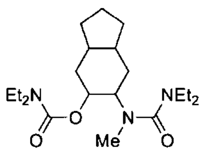
K-22

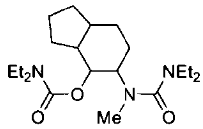
K-23

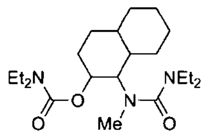
K-24

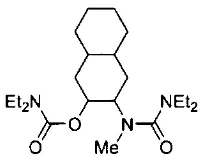
K-25

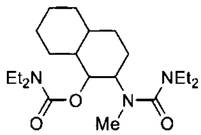
K-26

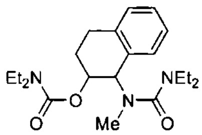
K-27

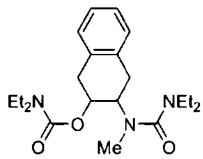
K-28

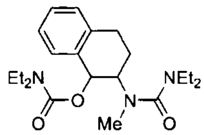
K-29

[Chem. 21]

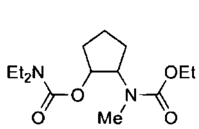
L-1

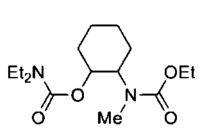
L-2

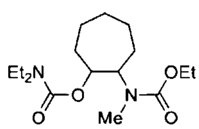
L-3

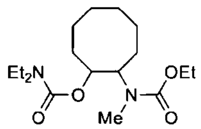
L-4

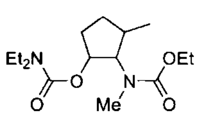
L-5

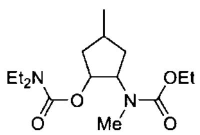
L-6

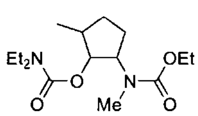
L-7

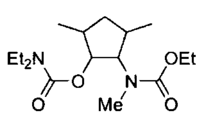
L-8

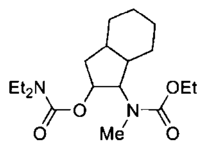
L-9

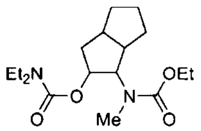
L-10

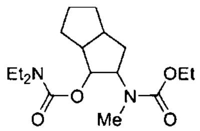
L-11

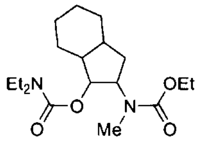
L-12

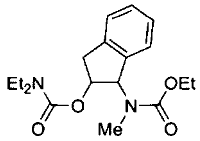
L-13

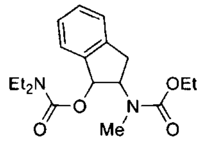
L-14

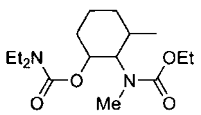
L-15

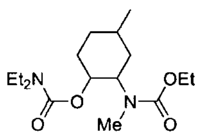
L-16

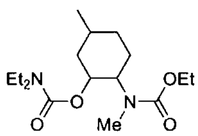
L-17

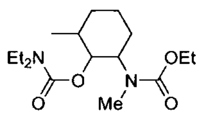
L-18

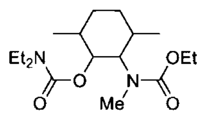
L-19

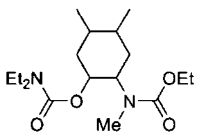
L-20

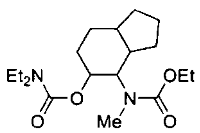
L-21

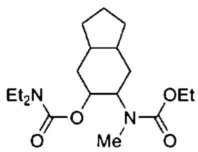
L-22

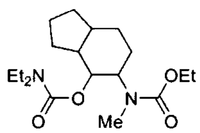
L-23

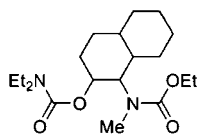
L-24

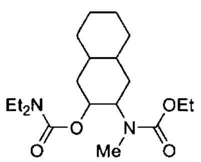
L-25

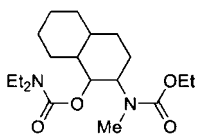
L-26

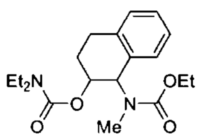
L-27

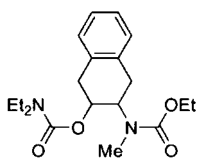
L-28

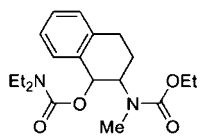
L-29

[Chem. 22]

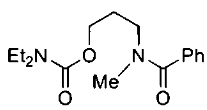
M-1
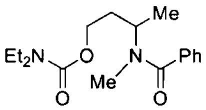
M-2
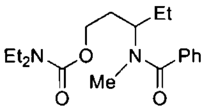
M-3
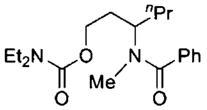
M-4
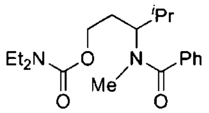
M-5
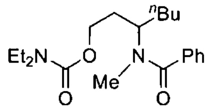
M-6
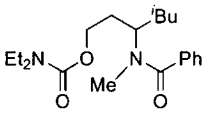
M-7
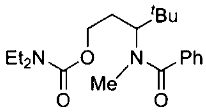
M-8
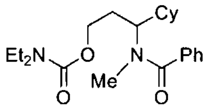
M-9
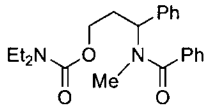
M-10
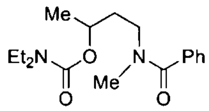
M-11
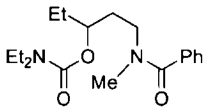
M-12
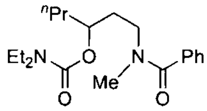
M-13
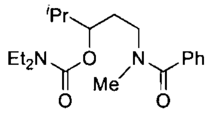
M-14
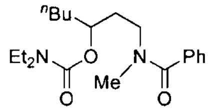
M-15
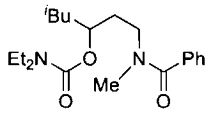
M-16
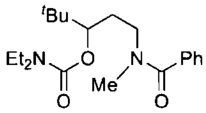
M-17
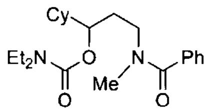
M-18
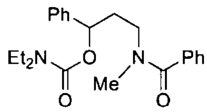
M-19
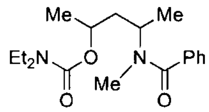
M-20
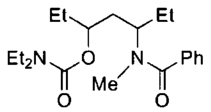
M-21
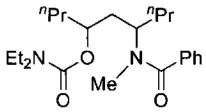
M-22
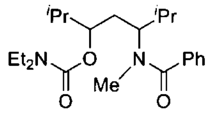
M-23
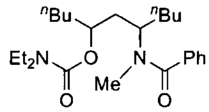
M-24
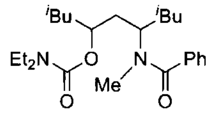
M-25
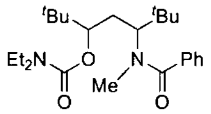
M-26
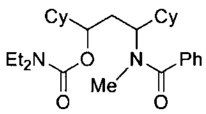
M-27
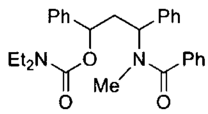
M-28
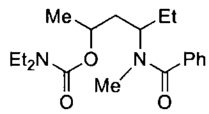
M-29
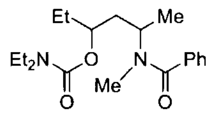
M-30
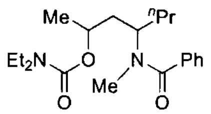
M-31
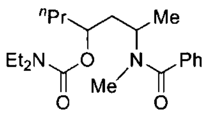
M-32
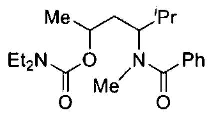
M-33
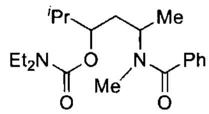
M-34
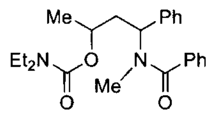
M-35
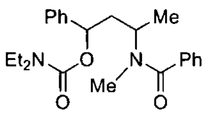
M-36
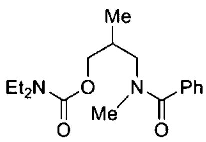
M-37
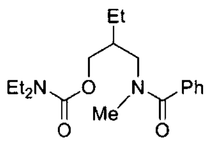
M-38
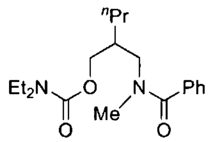
M-39
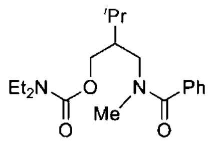
M-40

[Chem. 23]

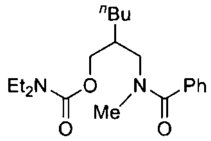
M-41

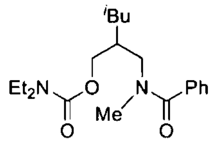
M-42

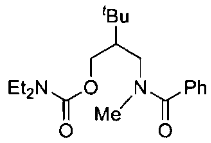
M-43

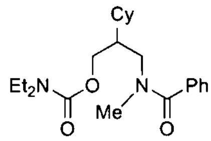
M-44

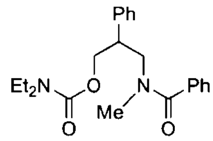
M-45

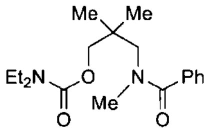
M-46

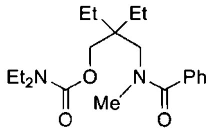
M-47

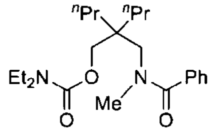
M-48

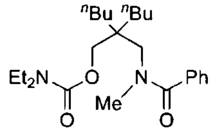
M-49

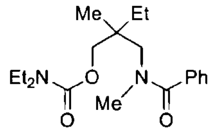
M-50

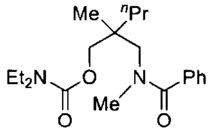
M-51

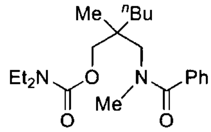
M-52

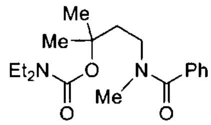
M-53

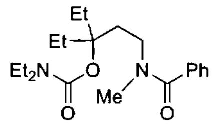
M-54

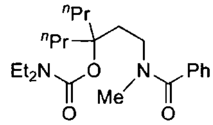
M-55

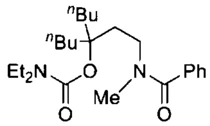
M-56

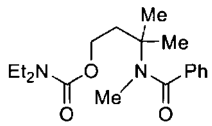
M-57

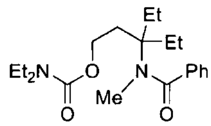
M-58

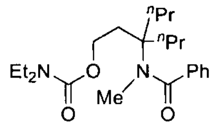
M-59

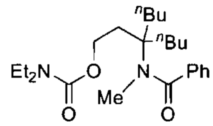
M-60

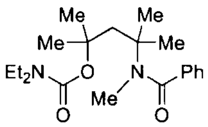
M-61

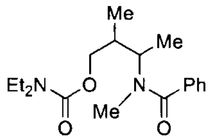
M-62

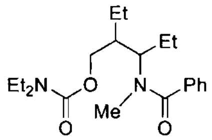
M-63

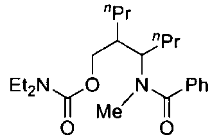
M-64

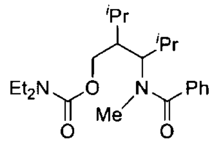
M-65

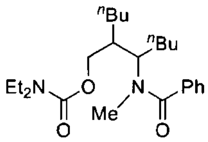
M-66

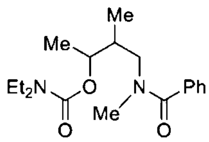
M-67

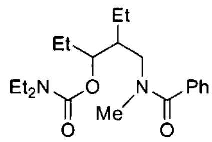
M-68

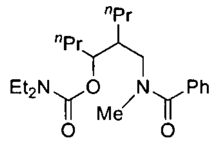
M-69

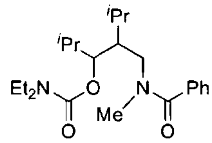
M-70

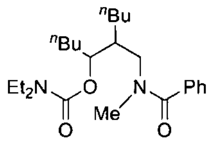
M-71

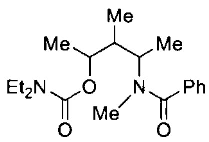
M-72

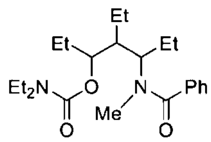
M-73

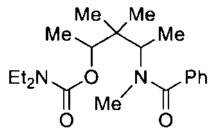
M-74

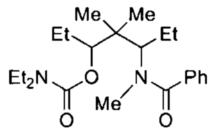
M-75

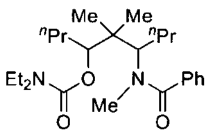
M-76

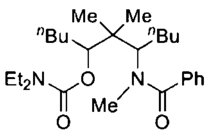
M-77

[Chem. 24]

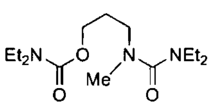
N-1

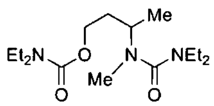
N-2

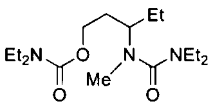
N-3

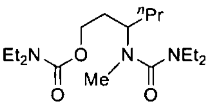
N-4

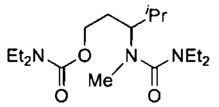
N-5

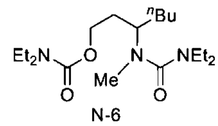
N-6

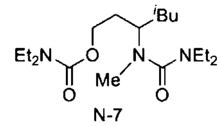
N-7

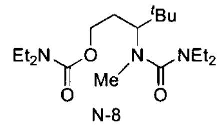
N-8

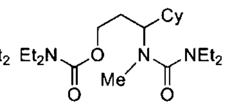
N-9

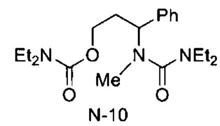
N-10

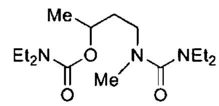
N-11

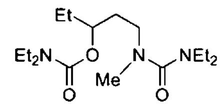
N-12

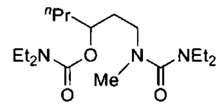
N-13

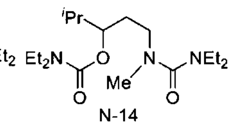
N-14

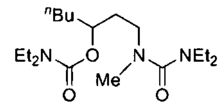
N-15

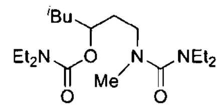
N-16

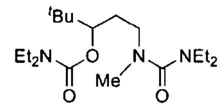
N-17

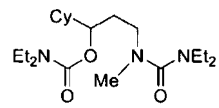
N-18

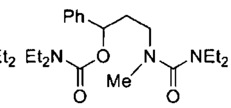
N-19

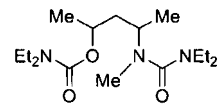
N-20

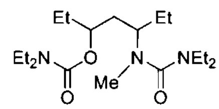
N-21

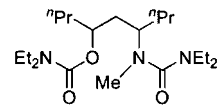
N-22

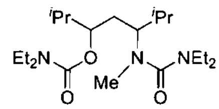
N-23

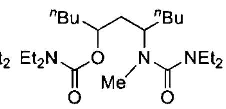
N-24

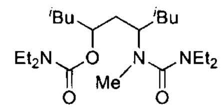
N-25

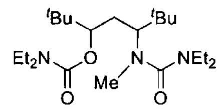
N-26

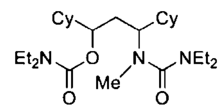
N-27

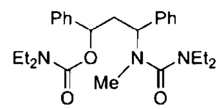
N-28

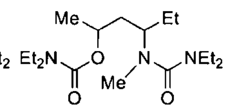
N-29

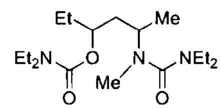
N-30

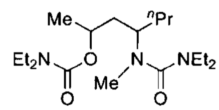
N-31

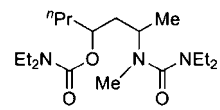
N-32

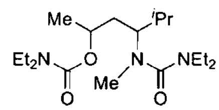
N-33

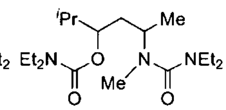
N-34

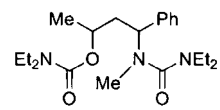
N-35

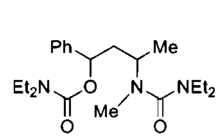
N-36

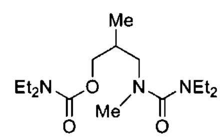
N-37

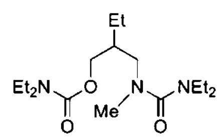
N-38

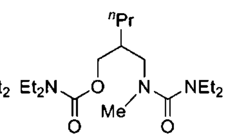
N-39

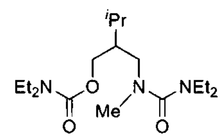
N-40

[Chem. 25]

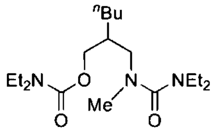
N-41
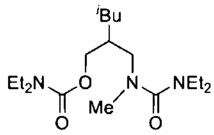
N-42
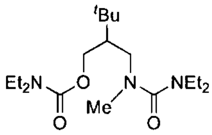
N-43
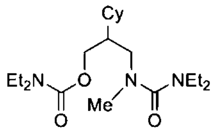
N-44
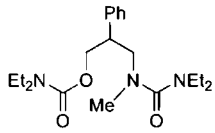
N-45
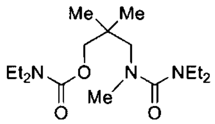
N-46
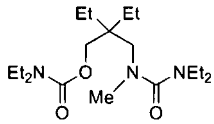
N-47
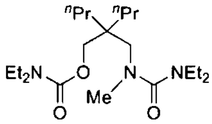
N-48
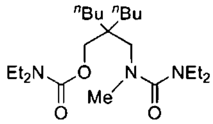
N-49
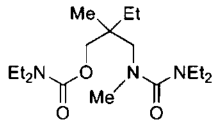
N-50
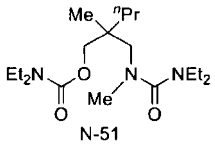
N-51
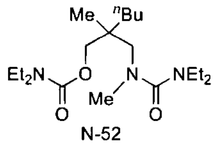
N-52
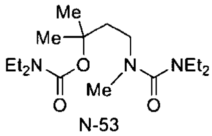
N-53
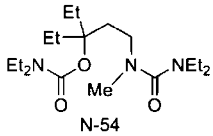
N-54
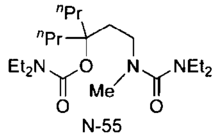
N-55
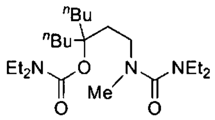
N-56
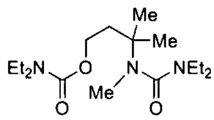
N-57
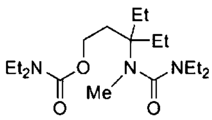
N-58
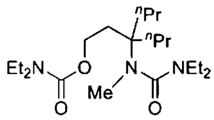
N-59
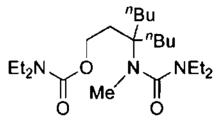
N-60
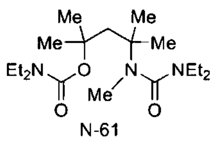
N-61
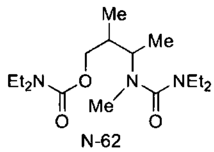
N-62
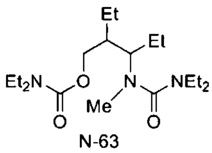
N-63
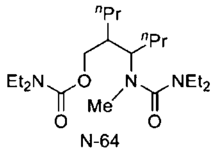
N-64
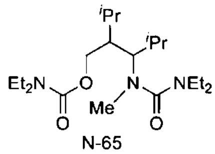
N-65
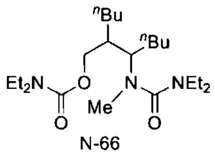
N-66
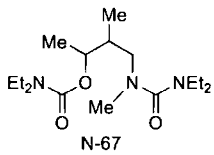
N-67
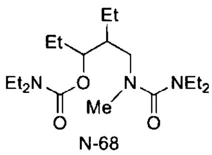
N-68
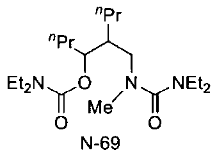
N-69
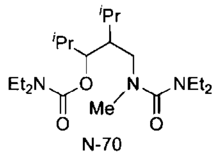
N-70
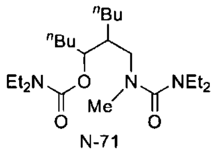
N-71
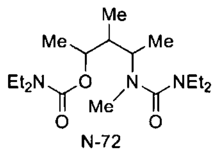
N-72
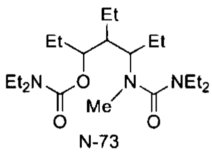
N-73
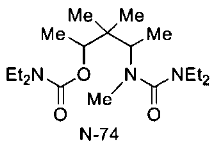
N-74
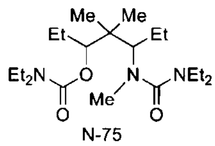
N-75
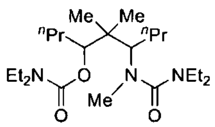
N-76
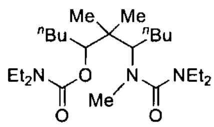
N-77

[Chem. 26]

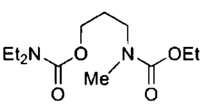
O-1

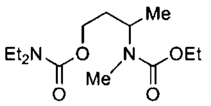
O-2

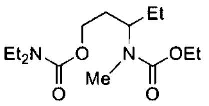
O-3

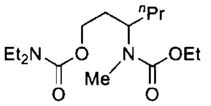
O-4

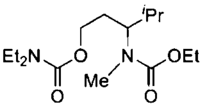
O-5

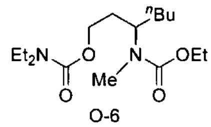
O-6

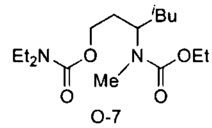
O-7

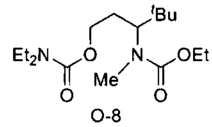
O-8

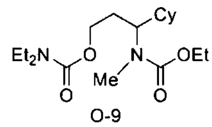
O-9

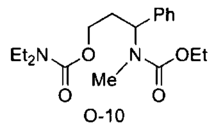
O-10

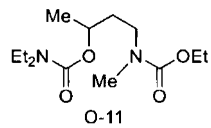
O-11

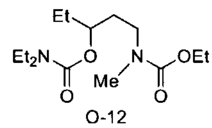
O-12

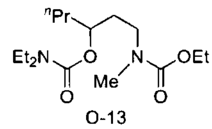
O-13

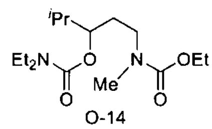
O-14

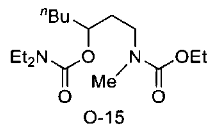
O-15

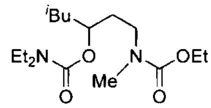
O-16

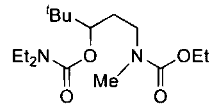
O-17

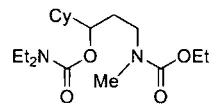
O-18

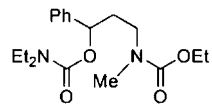
O-19

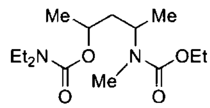
O-20

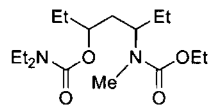
O-21

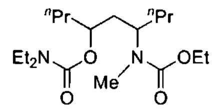
O-22

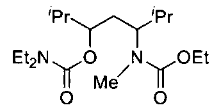
O-23

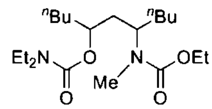
O-24

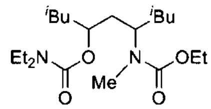
O-25

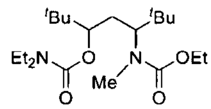
O-26

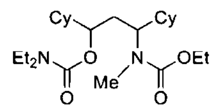
O-27

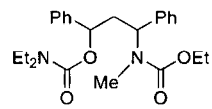
O-28

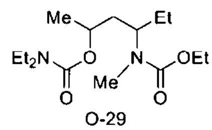
O-29

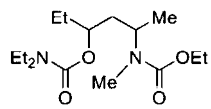
O-30

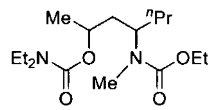
O-31

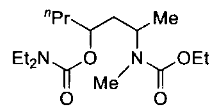
O-32

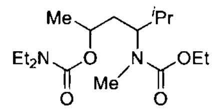
O-33

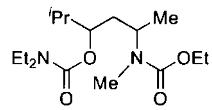
O-34

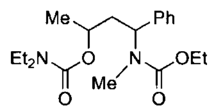
O-35

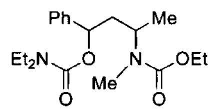
O-36

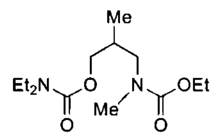
O-37

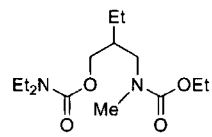
O-38

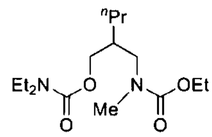
O-39

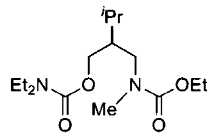
O-40

[Chem. 27]

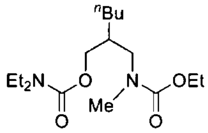
O-41
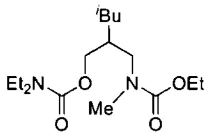
O-42
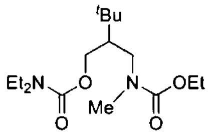
O-43
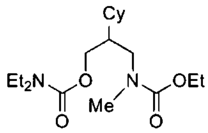
O-44
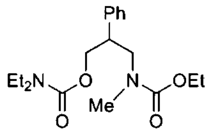
O-45
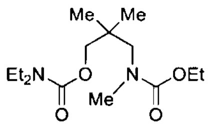
O-46
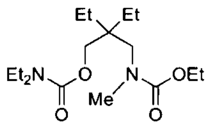
O-47
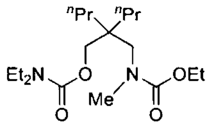
O-48
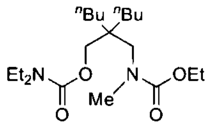
O-49
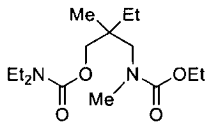
O-50
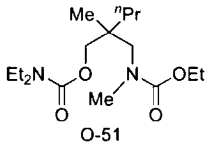
O-51
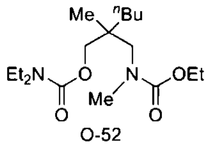
O-52
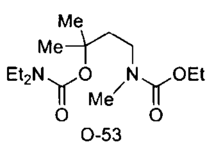
O-53
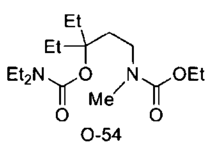
O-54
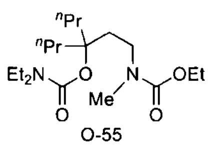
O-55
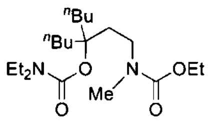
O-56
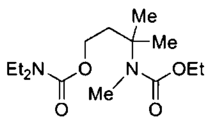
O-57
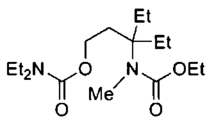
O-58
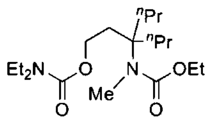
O-59
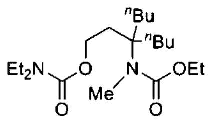
O-60
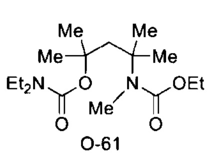
O-61
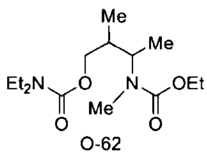
O-62
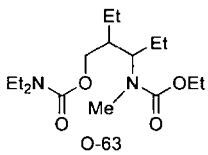
O-63
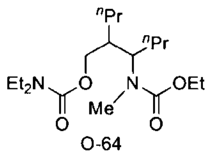
O-64
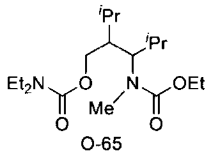
O-65
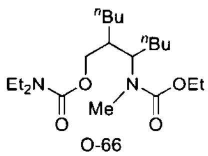
O-66
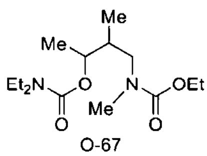
O-67
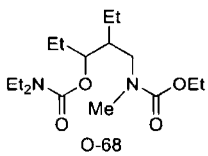
O-68
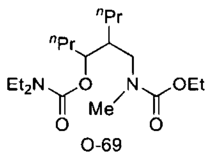
O-69
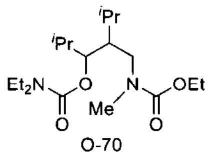
O-70
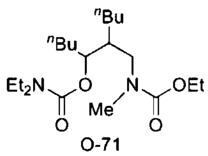
O-71
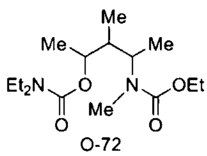
O-72
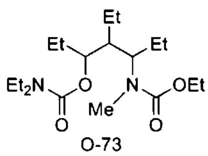
O-73
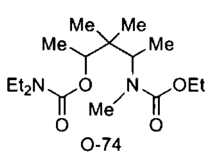
O-74
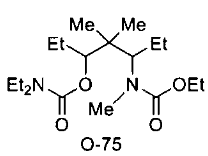
O-75
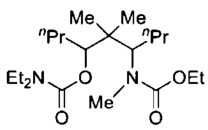
O-76
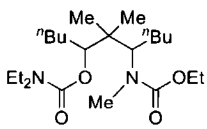
O-77

[Chem. 28]

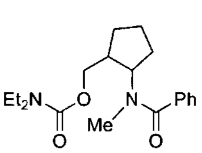
P-1
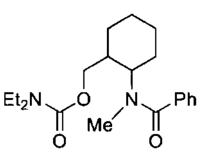
P-2
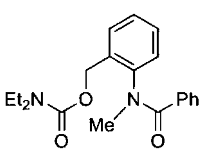
P-3
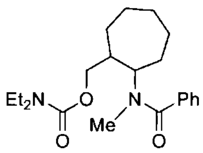
P-4
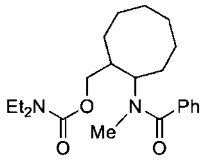
P-5
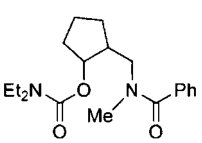
P-6
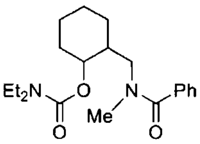
P-7
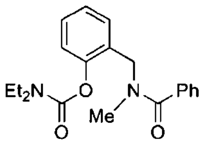
P-8
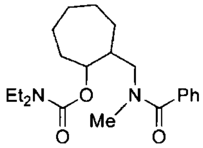
P-9
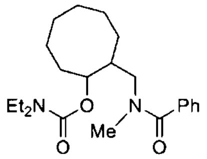
P-10
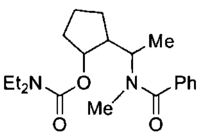
P-11
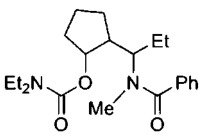
P-12
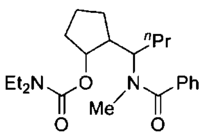
P-13
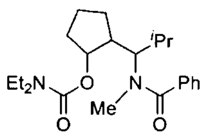
P-14
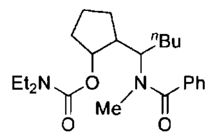
P-15
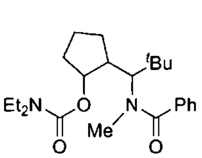
P-16
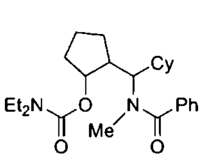
P-17
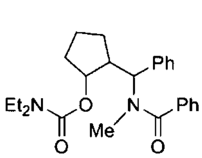
P-18
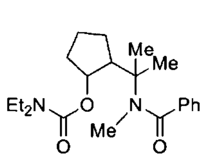
P-19
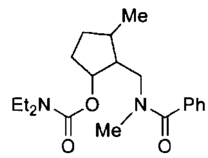
P-20
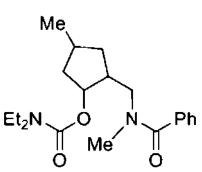
P-21
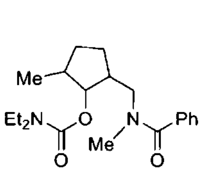
P-22
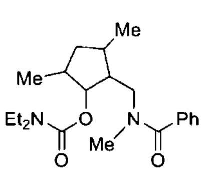
P-23
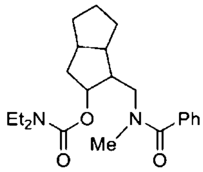
P-24
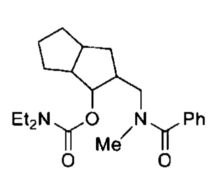
P-25
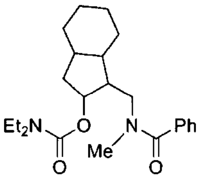
P-26
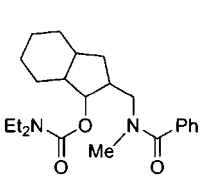
P-27
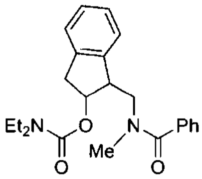
P-28
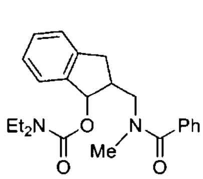
P-29
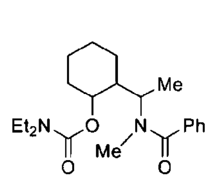
P-30
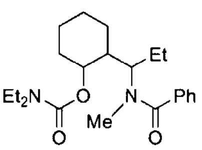
P-31
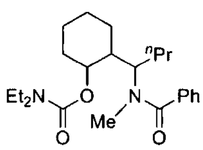
P-32
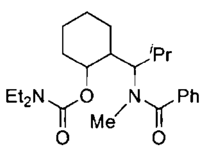
P-33
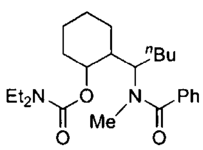
P-34
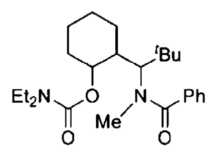
P-35
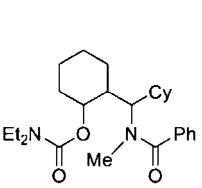
P-36
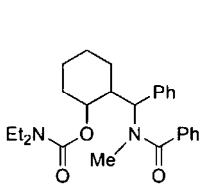
P-37
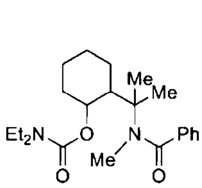
P-38
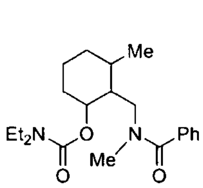
P-39
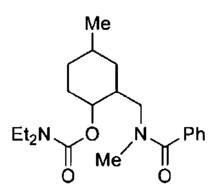
P-40

[Chem. 29]

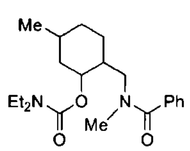
P-41

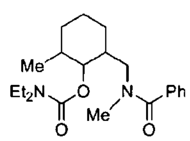
P-42

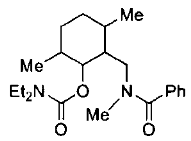
P-43

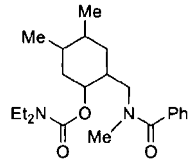
P-44

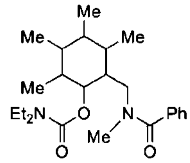
P-45

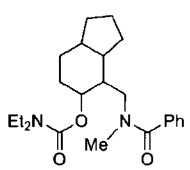
P-46

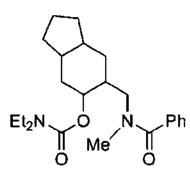
P-47

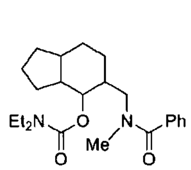
P-48

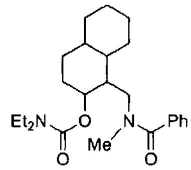
P-49

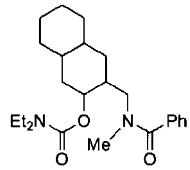
P-50

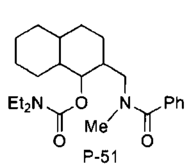
P-51

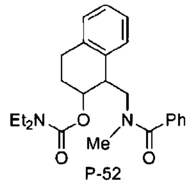
P-52

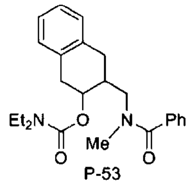
P-53

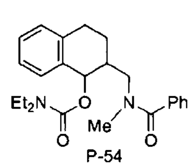
P-54

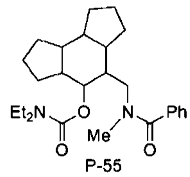
P-55

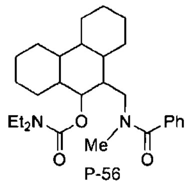
P-56

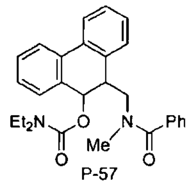
P-57

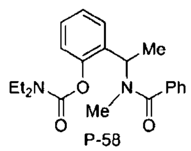
P-58

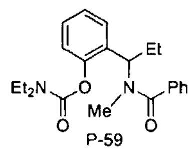
P-59

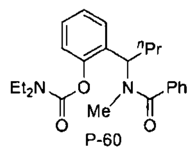
P-60

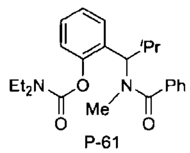
P-61

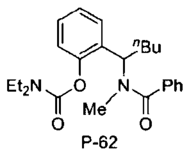
P-62

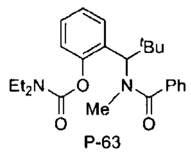
P-63

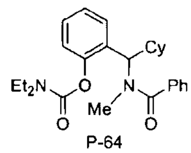
P-64

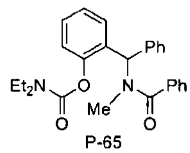
P-65

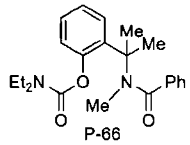
P-66

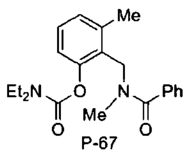
P-67

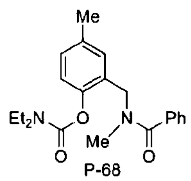
P-68

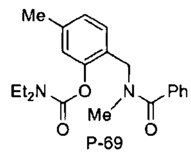
P-69

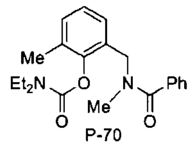
P-70

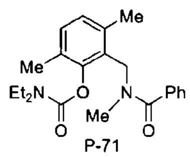
P-71

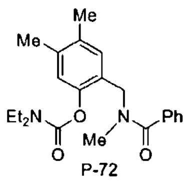
P-72

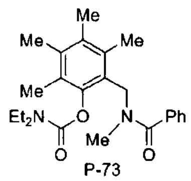
P-73

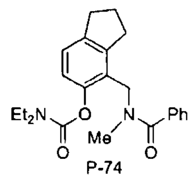
P-74

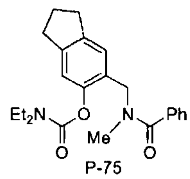
P-75

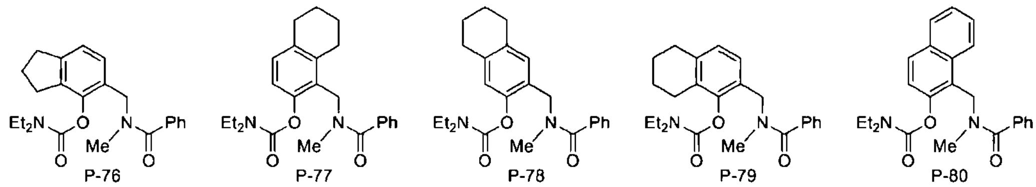
P-76 P-77 P-78 P-79 P-80

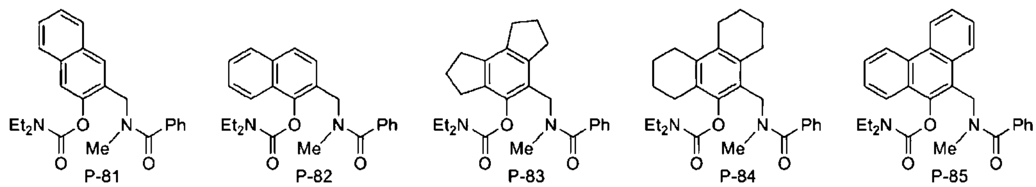
P-81 P-82 P-83 P-84 P-85

[Chem. 30]

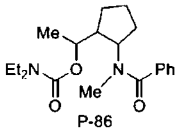
P-86
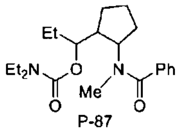
P-87
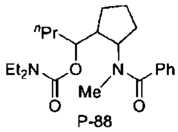
P-88
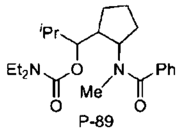
P-89
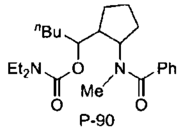
P-90

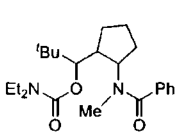
P-91
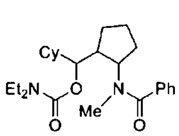
P-92
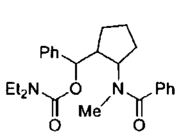
P-93
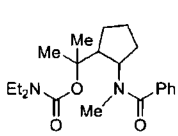
P-94
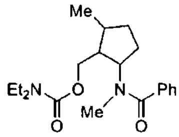
P-95

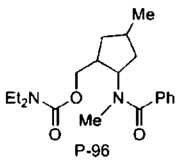
P-96
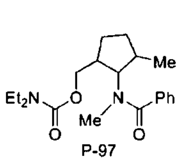
P-97
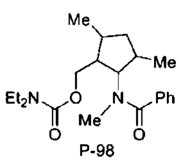
P-98
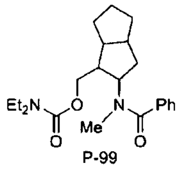
P-99
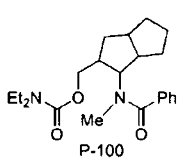
P-100

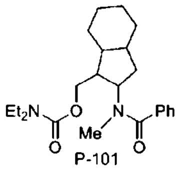
P-101
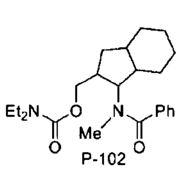
P-102
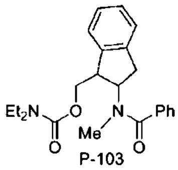
P-103
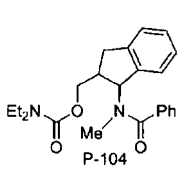
P-104
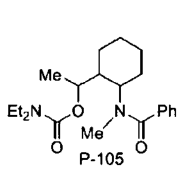
P-105

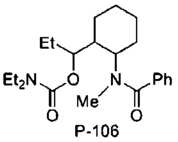
P-106
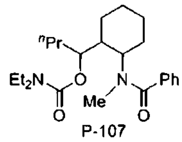
P-107
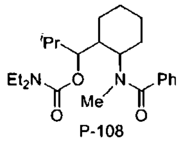
P-108
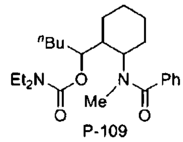
P-109
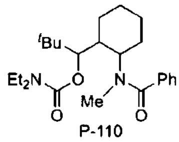
P-110

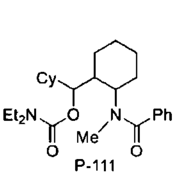
P-111
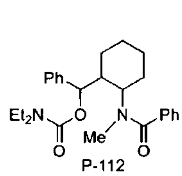
P-112
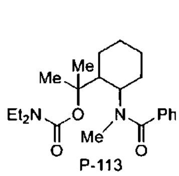
P-113
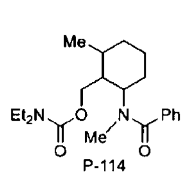
P-114
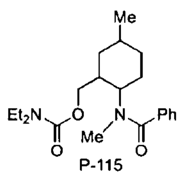
P-115

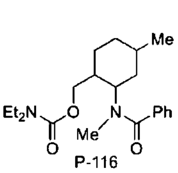
P-116
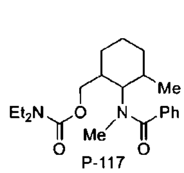
P-117
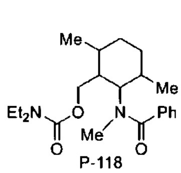
P-118
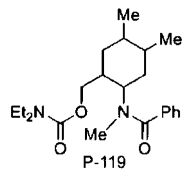
P-119
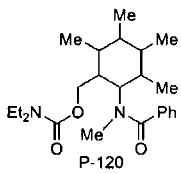
P-120

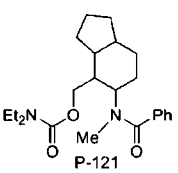
P-121
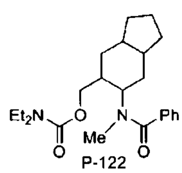
P-122
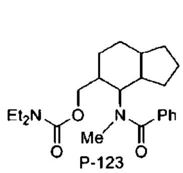
P-123
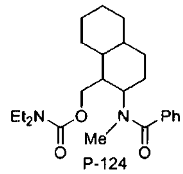
P-124
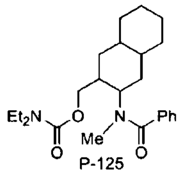
P-125

P-126
P-127
P-128
P-129
P-130

[Chem. 31]

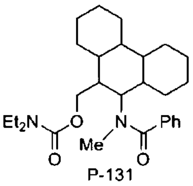
P-131

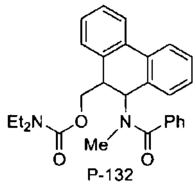
P-132

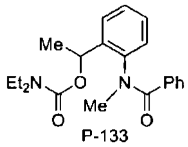
P-133

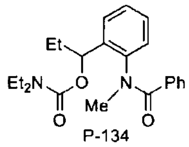
P-134

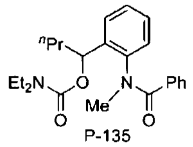
P-135

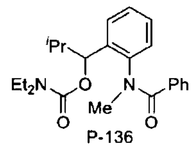
P-136

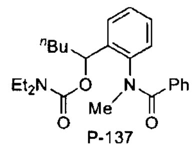
P-137

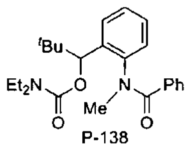
P-138

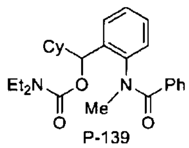
P-139

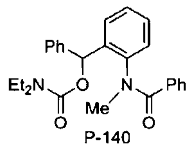
P-140

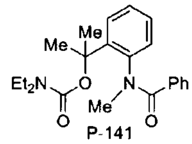
P-141

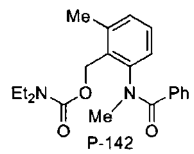
P-142

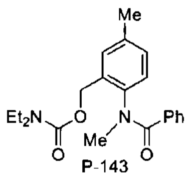
P-143

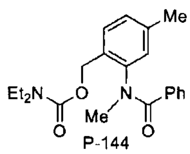
P-144

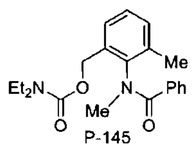
P-145

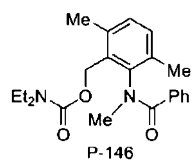
P-146

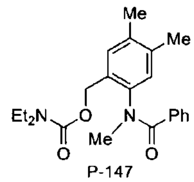
P-147

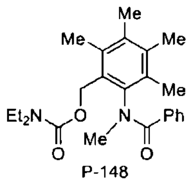
P-148

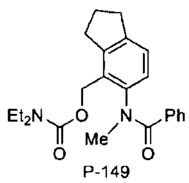
P-149

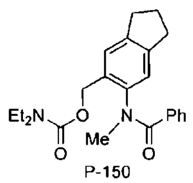
P-150

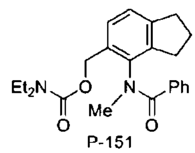
P-151

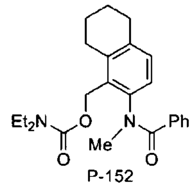
P-152

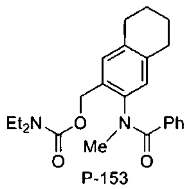
P-153

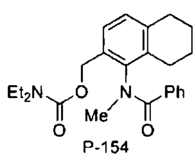
P-154

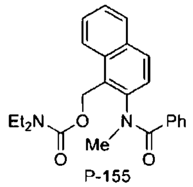
P-155

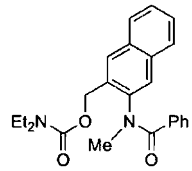
P-156

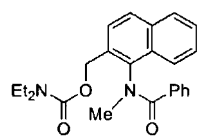
P-157

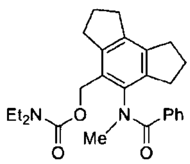
P-158

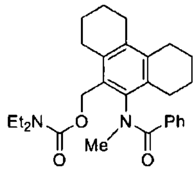
P-159

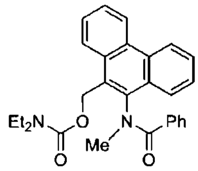
P-160

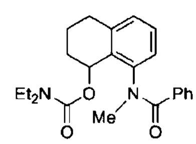
P-161

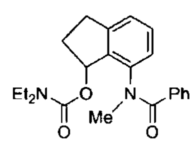
P-162

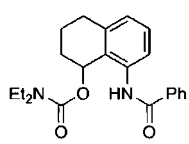
P-163

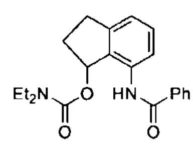
P-164

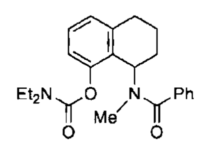
P-165

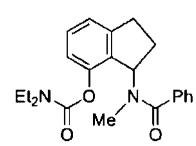
P-166

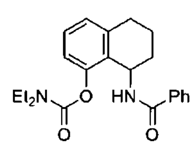
P-167

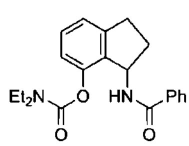
P-168

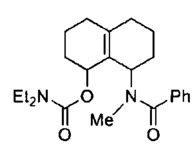
P-169

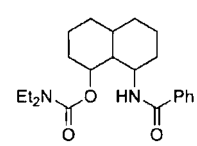
P-170

[Chem. 32]

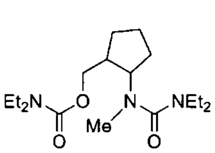
Q-1

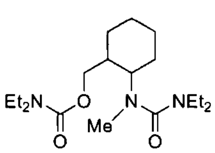
Q-2

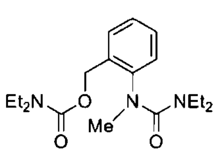
Q-3

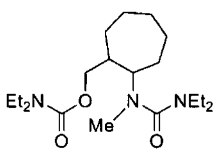
Q-4

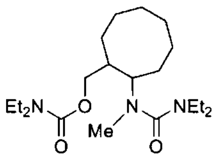
Q-5

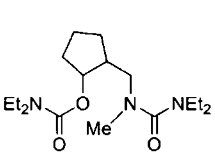
Q-6

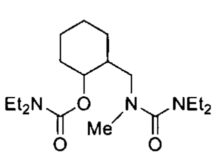
Q-7

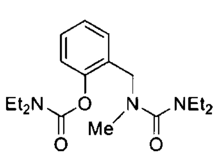
Q-8

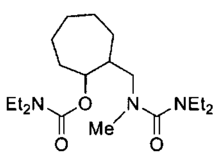
Q-9

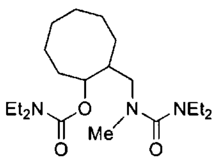
Q-10

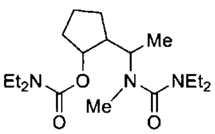
Q-11

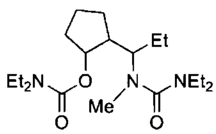
Q-12

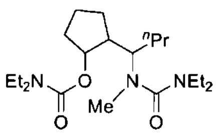
Q-13

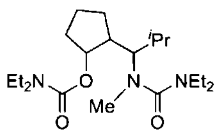
Q-14

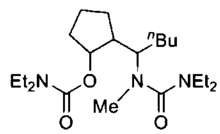
Q-15

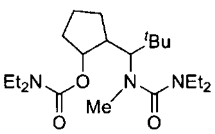
Q-16

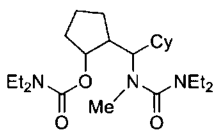
Q-17

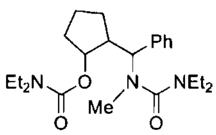
Q-18

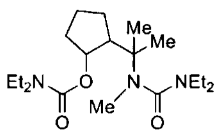
Q-19

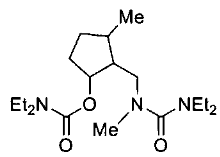
Q-20

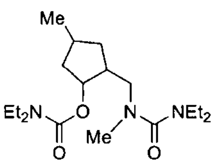
Q-21

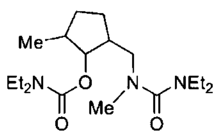
Q-22

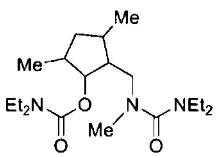
Q-23

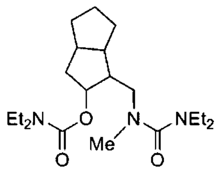
Q-24

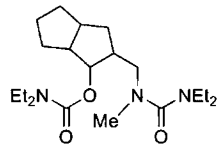
Q-25

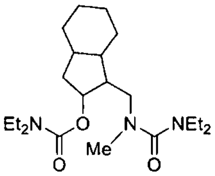
Q-26

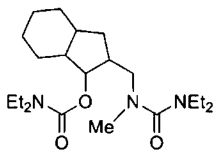
Q-27

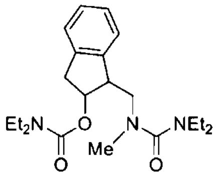
Q-28

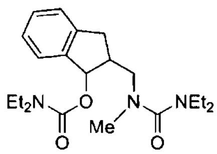
Q-29

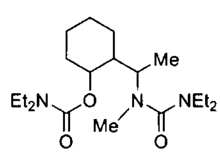
Q-30

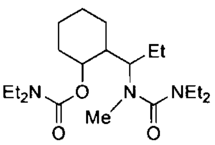
Q-31

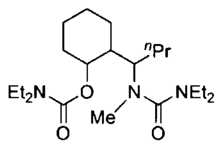
Q-32

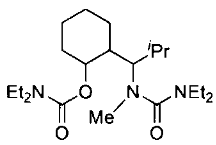
Q-33

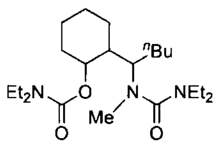
Q-34

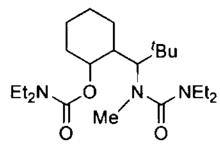
Q-35

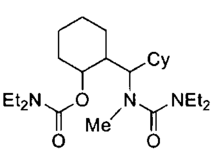
Q-36

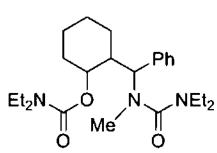
Q-37

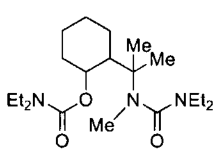
Q-38

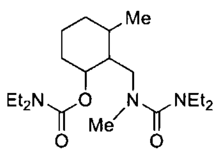
Q-39

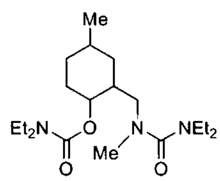
Q-40

[Chem. 33]

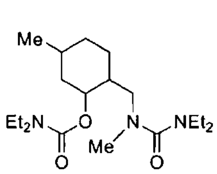
Q-41

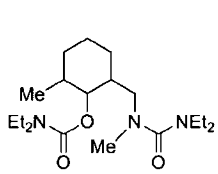
Q-42

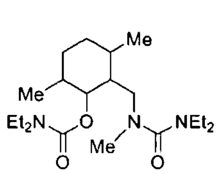
Q-43

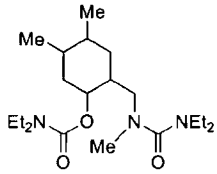
Q-44

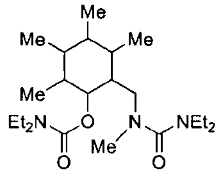
Q-45

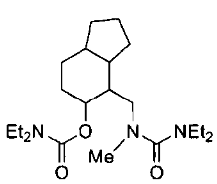
Q-46

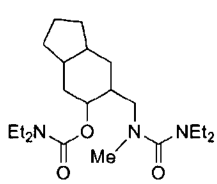
Q-47

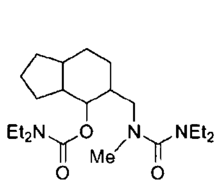
Q-48

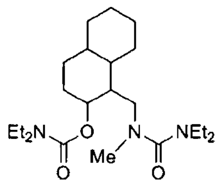
Q-49

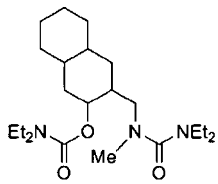
Q-50

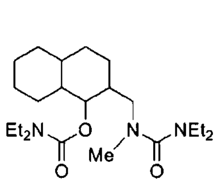
Q-51

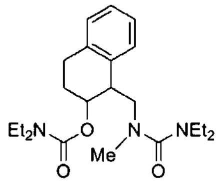
Q-52

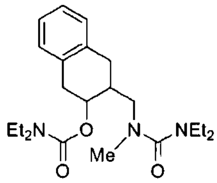
Q-53

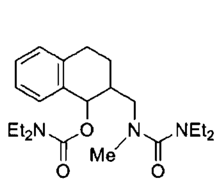
Q-54

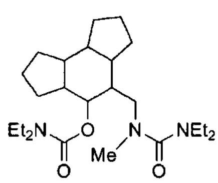
Q-55

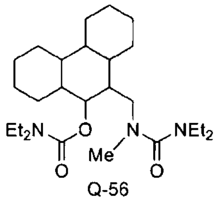
Q-56

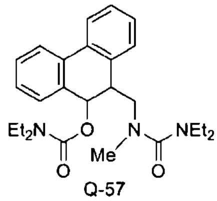
Q-57

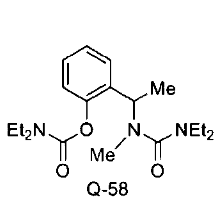
Q-58

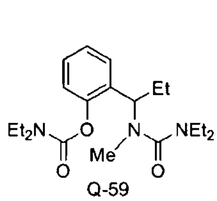
Q-59

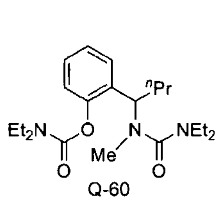
Q-60

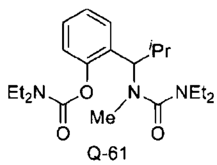
Q-61

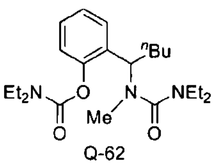
Q-62

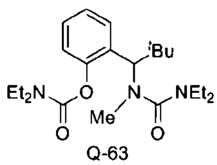
Q-63

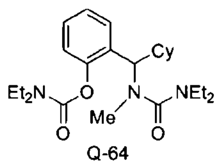
Q-64

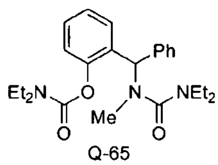
Q-65

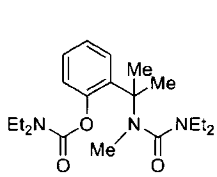
Q-66

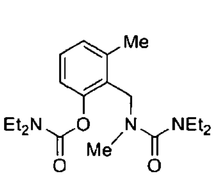
Q-67

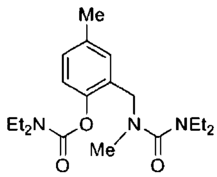
Q-68

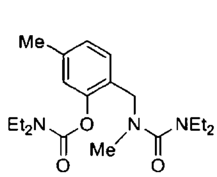
Q-69

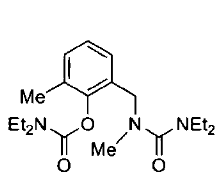
Q-70

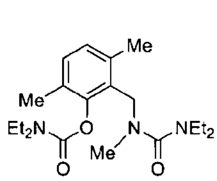
Q-71

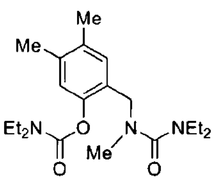
Q-72

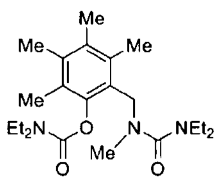
Q-73

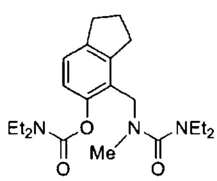
Q-74

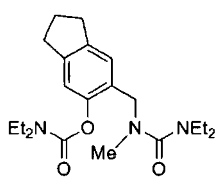
Q-75

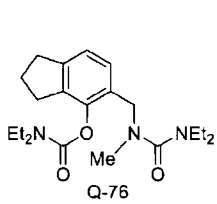
Q-76

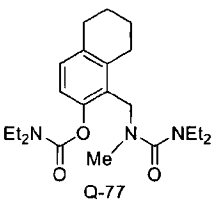
Q-77

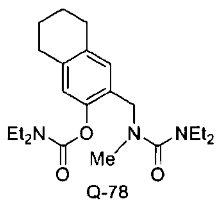
Q-78

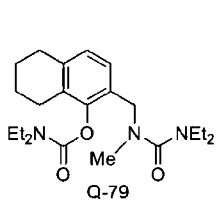
Q-79

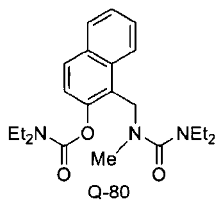
Q-80

[Chem. 34]

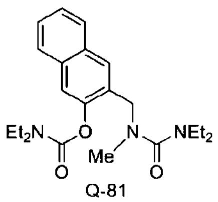
Q-81

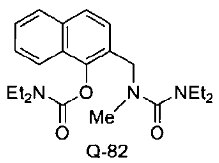
Q-82

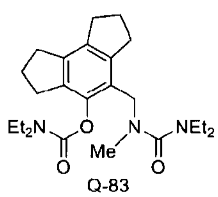
Q-83

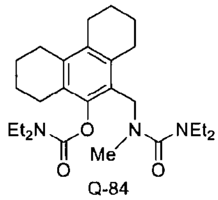
Q-84

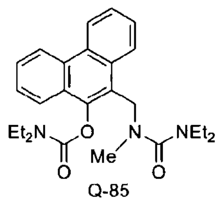
Q-85

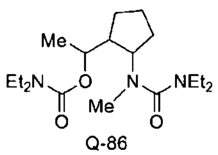
Q-86

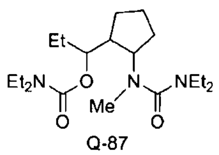
Q-87

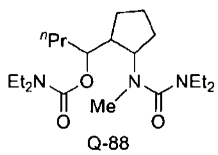
Q-88

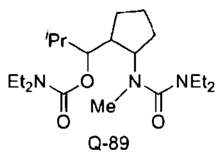
Q-89

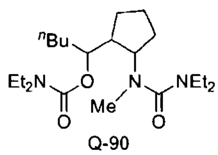
Q-90

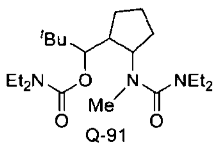
Q-91

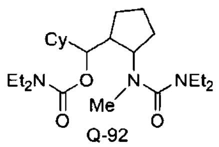
Q-92

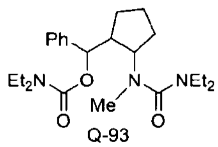
Q-93

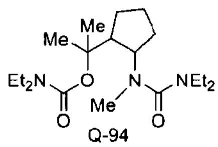
Q-94

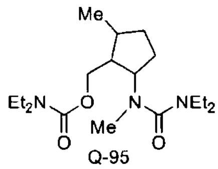
Q-95

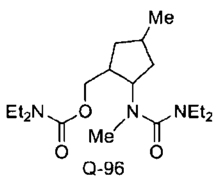
Q-96

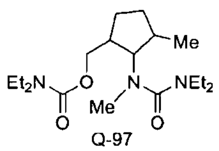
Q-97

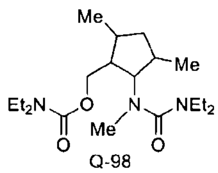
Q-98

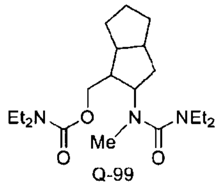
Q-99

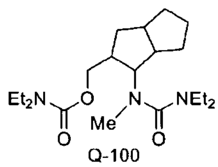
Q-100

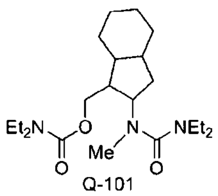
Q-101

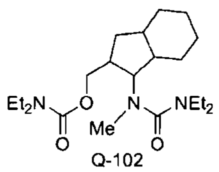
Q-102

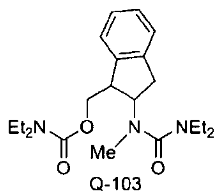
Q-103

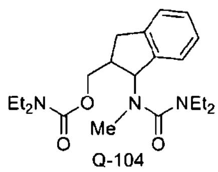
Q-104

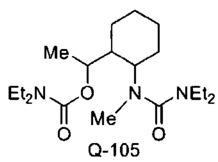
Q-105

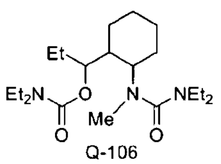
Q-106

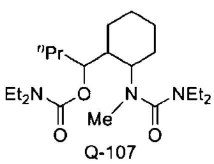
Q-107

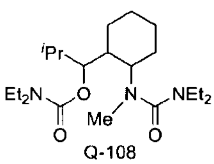
Q-108

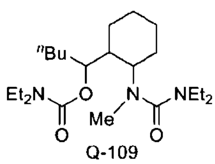
Q-109

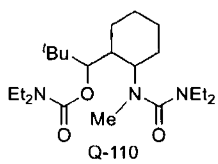
Q-110

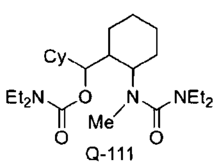
Q-111

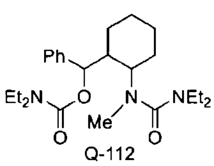
Q-112

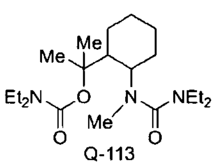
Q-113

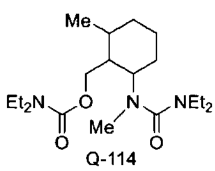
Q-114

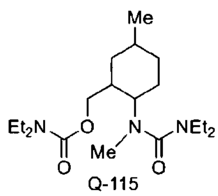
Q-115

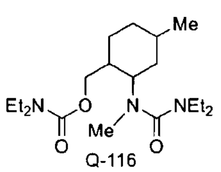
Q-116

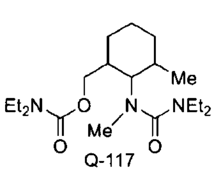
Q-117

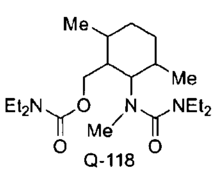
Q-118

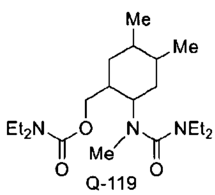
Q-119

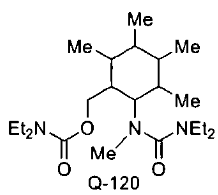
Q-120

[Chem. 35]

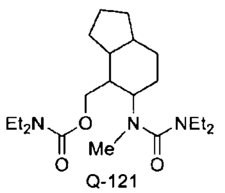
Q-121
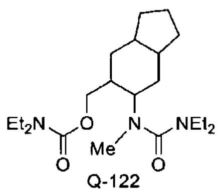
Q-122
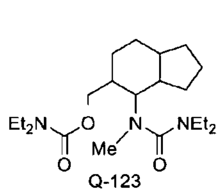
Q-123
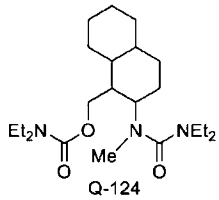
Q-124
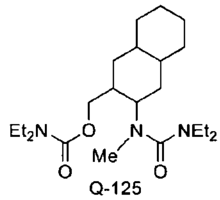
Q-125

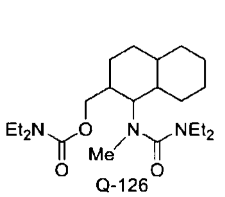
Q-126
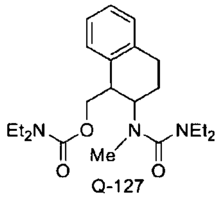
Q-127
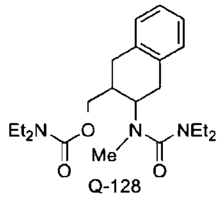
Q-128
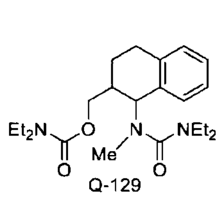
Q-129
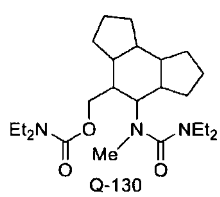
Q-130

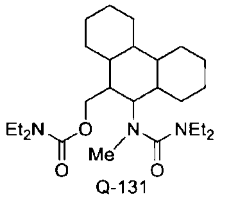
Q-131
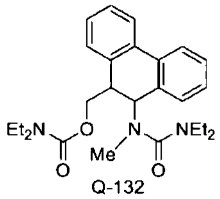
Q-132
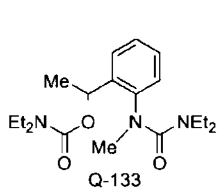
Q-133
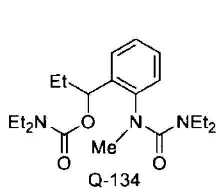
Q-134
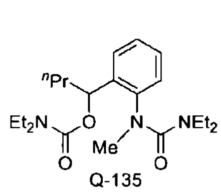
Q-135

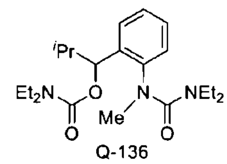
Q-136
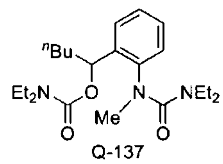
Q-137
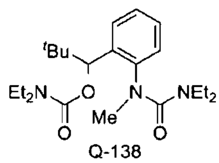
Q-138
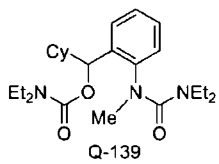
Q-139
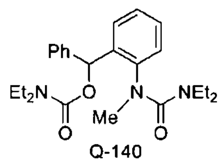
Q-140

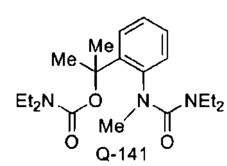
Q-141
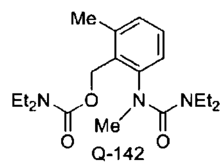
Q-142
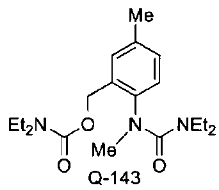
Q-143
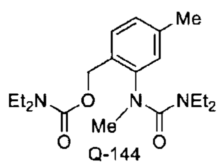
Q-144
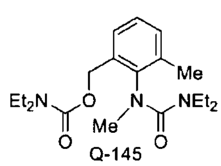
Q-145

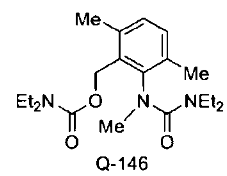
Q-146
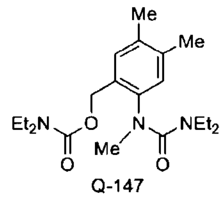
Q-147
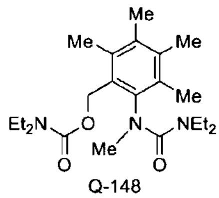
Q-148
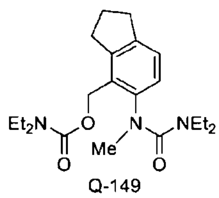
Q-149
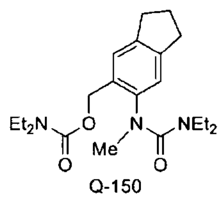
Q-150

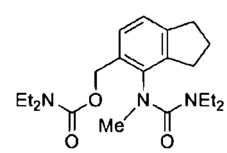
Q-151
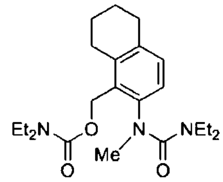
Q-152
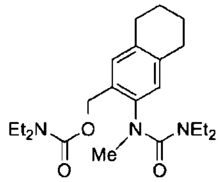
Q-153
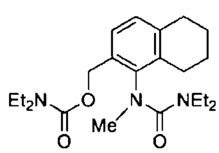
Q-154
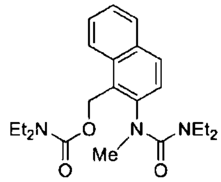
Q-155

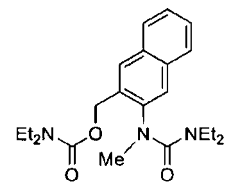
Q-156
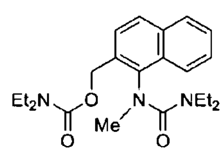
Q-157
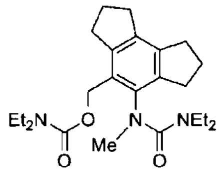
Q-158
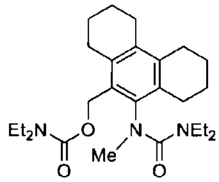
Q-159
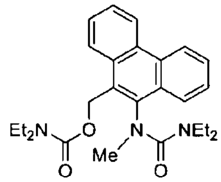
Q-160

[Chem. 36]

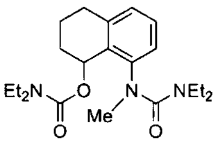
Q-161

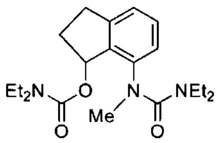
Q-162

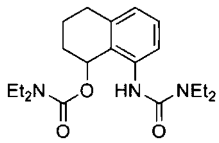
Q-163

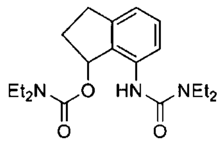
Q-164

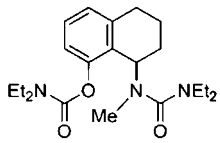
Q-165

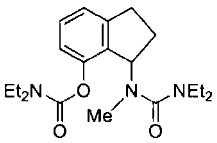
Q-166

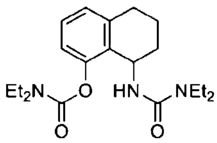
Q-167

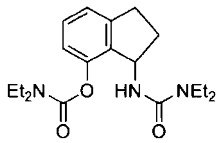
Q-168

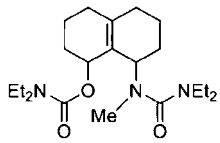
Q-169

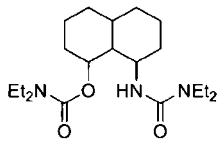
Q-170

[Chem. 37]

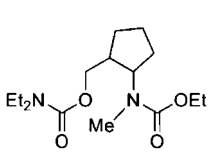
R-1
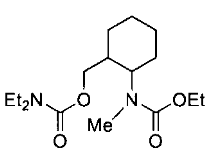
R-2
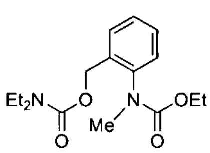
R-3
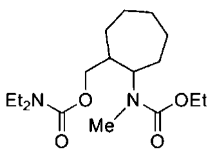
R-4
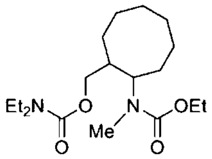
R-5
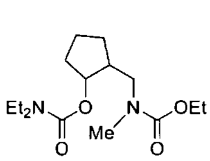
R-6
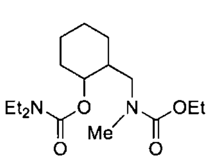
R-7
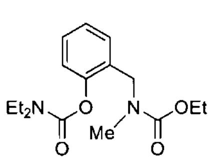
R-8
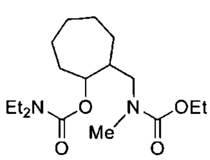
R-9
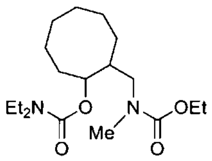
R-10
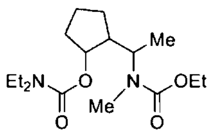
R-11
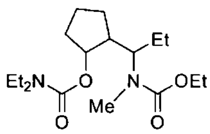
R-12
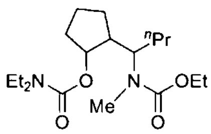
R-13
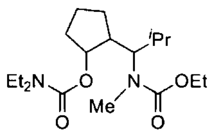
R-14
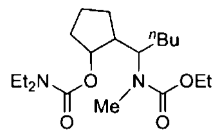
R-15
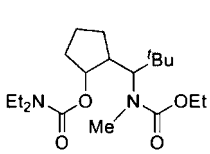
R-16
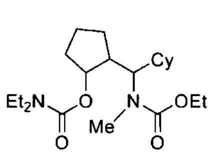
R-17
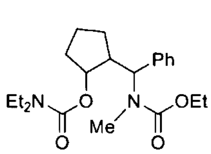
R-18
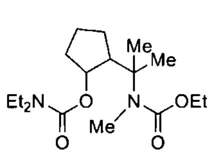
R-19
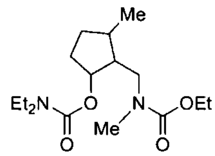
R-20
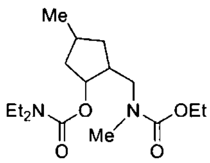
R-21
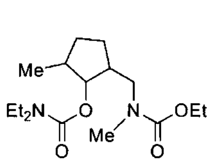
R-22
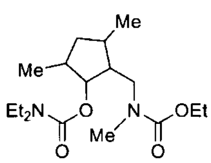
R-23
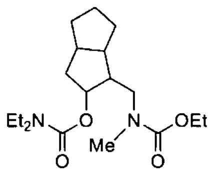
R-24
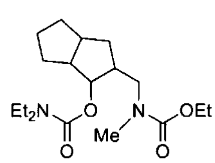
R-25
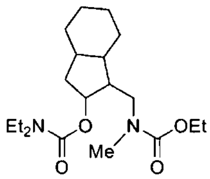
R-26
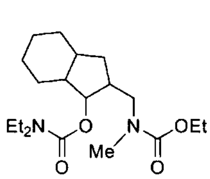
R-27
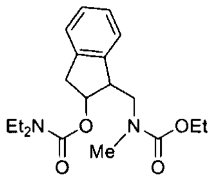
R-28
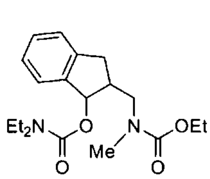
R-29
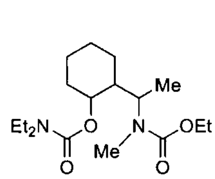
R-30
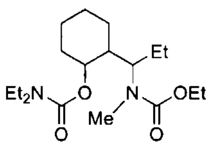
R-31
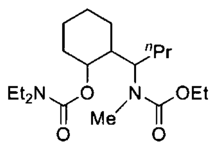
R-32
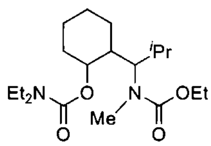
R-33
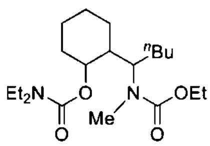
R-34
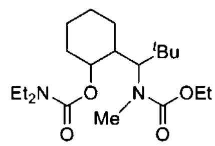
R-35
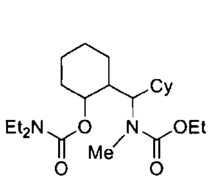
R-36
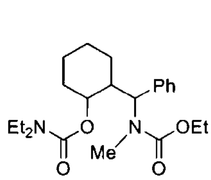
R-37
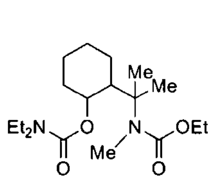
R-38
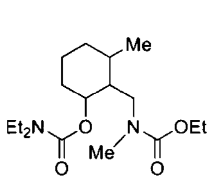
R-39
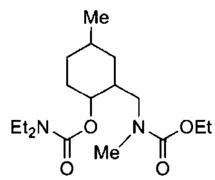
R-40

[Chem. 38]

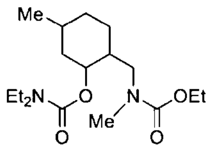
R-41

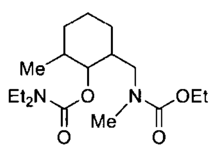
R-42

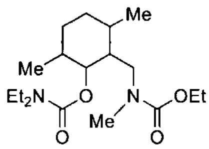
R-43

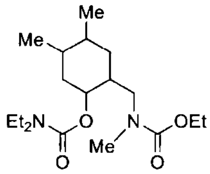
R-44

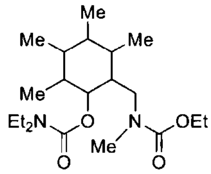
R-45

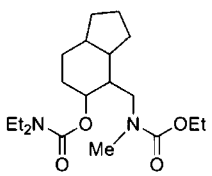
R-46

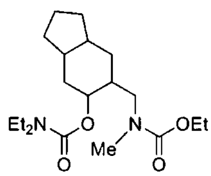
R-47

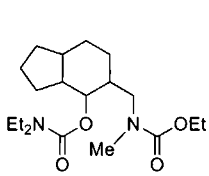
R-48

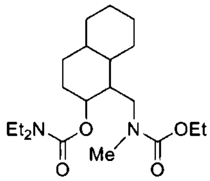
R-49

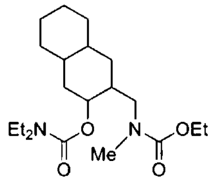
R-50

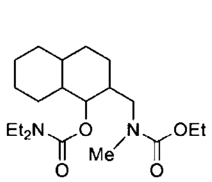
R-51

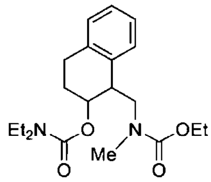
R-52

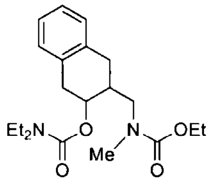
R-53

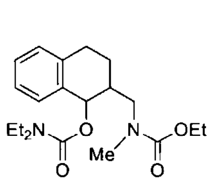
R-54

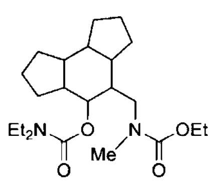
R-55

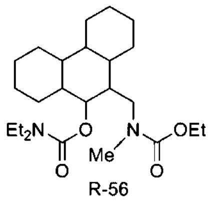
R-56

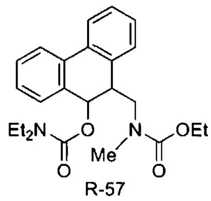
R-57

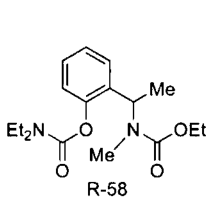
R-58

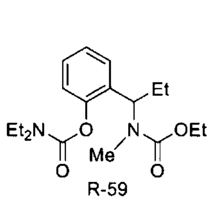
R-59

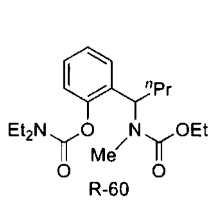
R-60

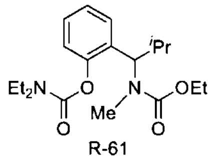
R-61

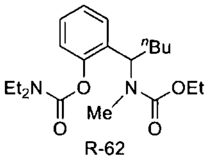
R-62

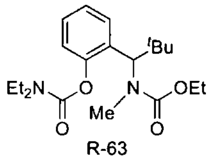
R-63

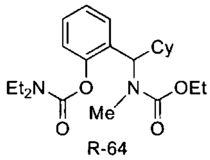
R-64

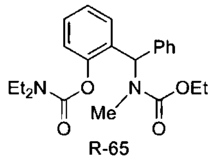
R-65

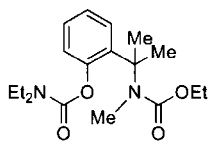
R-66

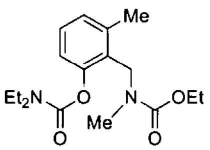
R-67

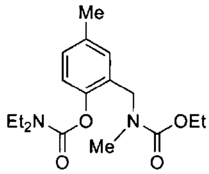
R-68

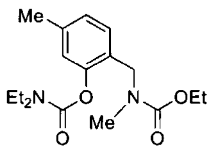
R-69

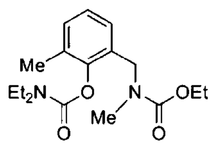
R-70

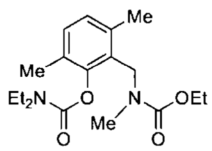
R-71

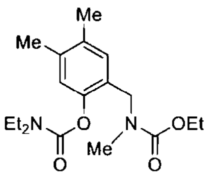
R-72

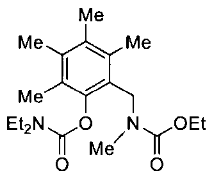
R-73

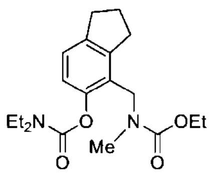
R-74

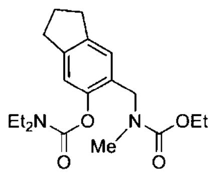
R-75

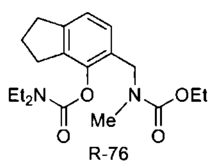
R-76

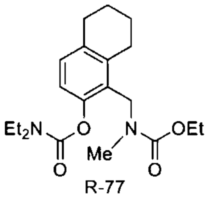
R-77

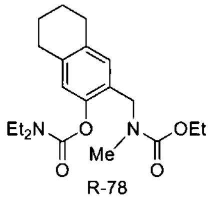
R-78

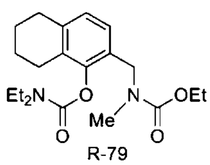
R-79

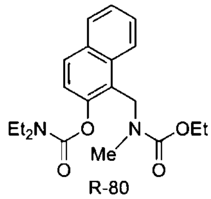
R-80

[Chem. 39]

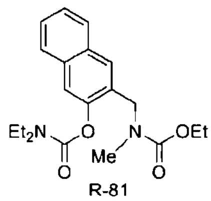
R-81

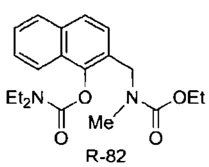
R-82

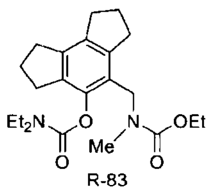
R-83

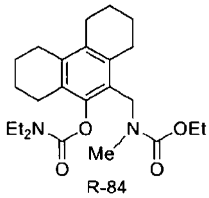
R-84

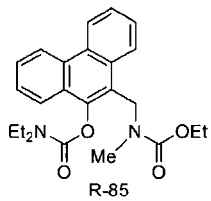
R-85

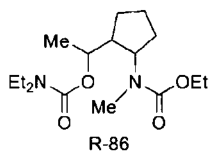
R-86

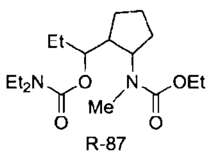
R-87

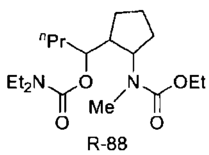
R-88

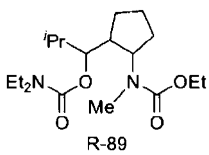
R-89

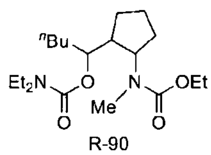
R-90

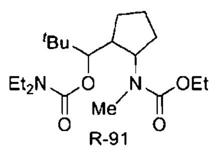
R-91

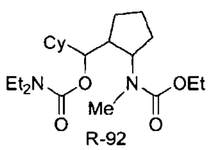
R-92

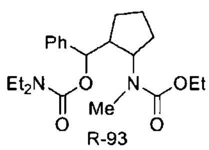
R-93

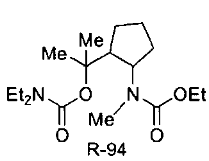
R-94

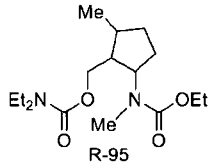
R-95

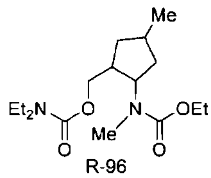
R-96

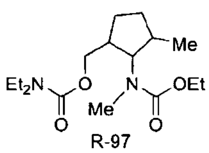
R-97

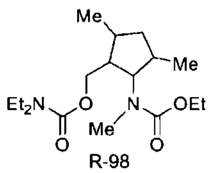
R-98

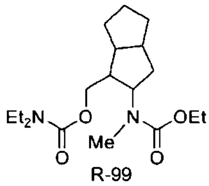
R-99

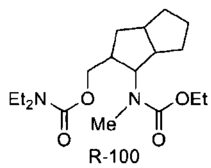
R-100

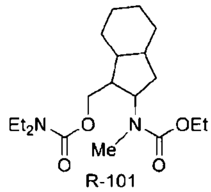
R-101

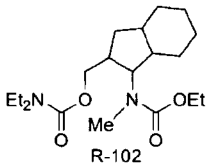
R-102

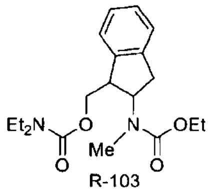
R-103

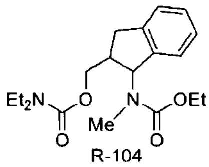
R-104

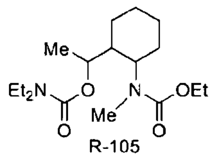
R-105

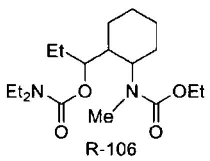
R-106

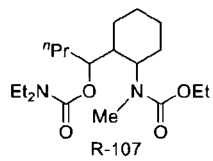
R-107

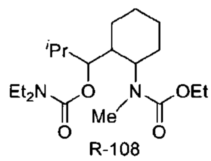
R-108

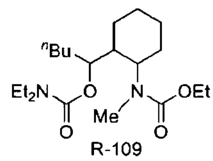
R-109

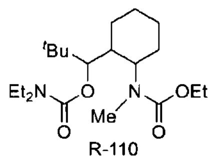
R-110

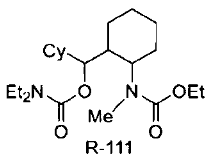
R-111

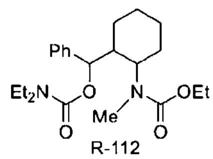
R-112

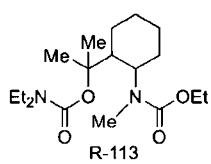
R-113

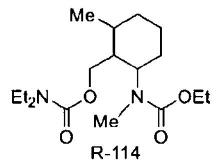
R-114

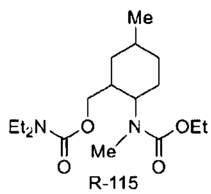
R-115

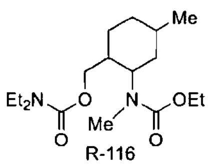
R-116

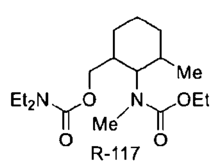
R-117

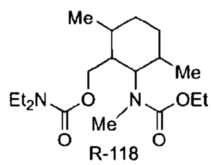
R-118

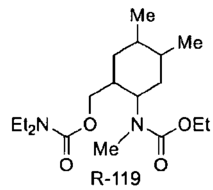
R-119

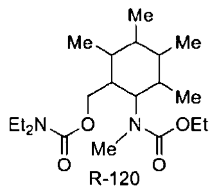
R-120

[Chem. 40]

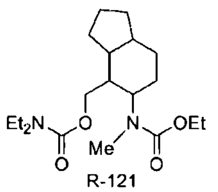
R-121
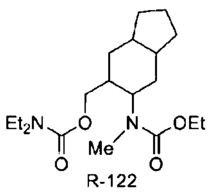
R-122
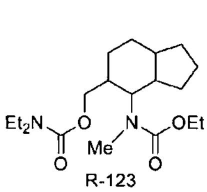
R-123
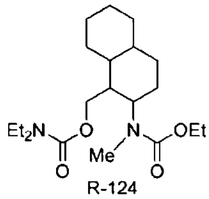
R-124
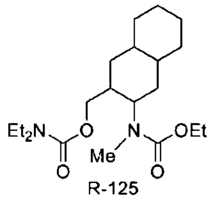
R-125
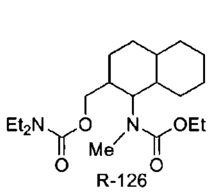
R-126
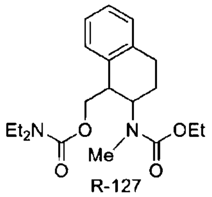
R-127
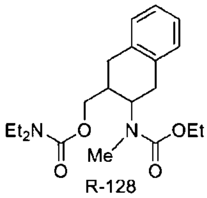
R-128
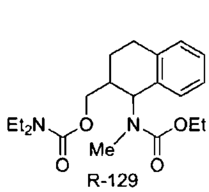
R-129
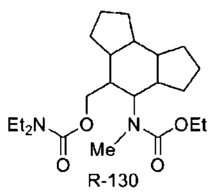
R-130
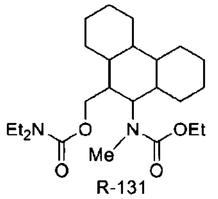
R-131
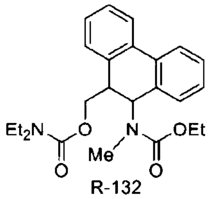
R-132
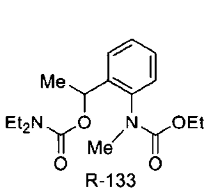
R-133
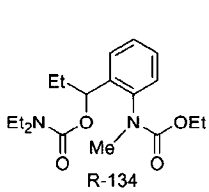
R-134
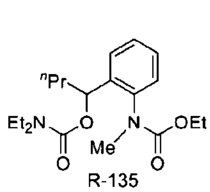
R-135
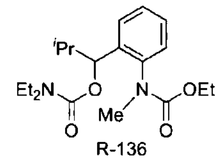
R-136
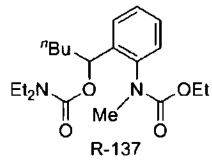
R-137
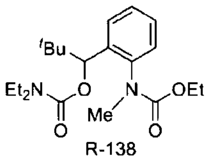
R-138
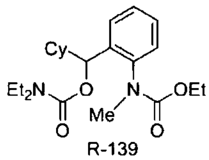
R-139
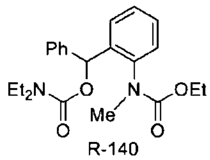
R-140
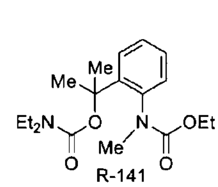
R-141
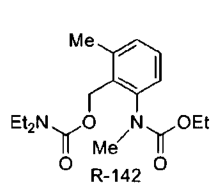
R-142
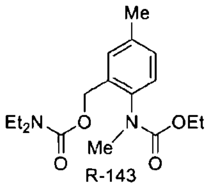
R-143
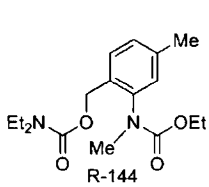
R-144
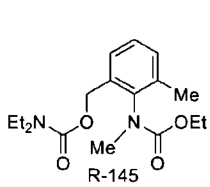
R-145
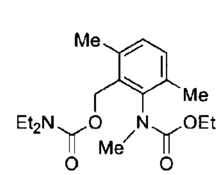
R-146
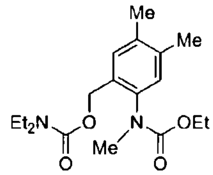
R-147
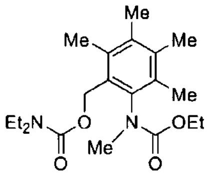
R-148
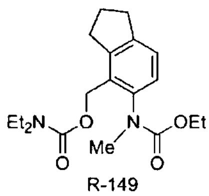
R-149
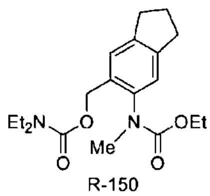
R-150
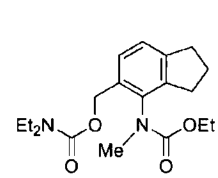
R-151
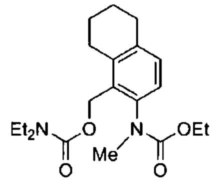
R-152
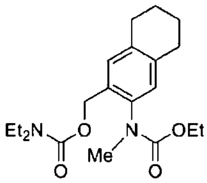
R-153
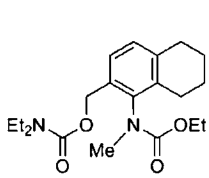
R-154
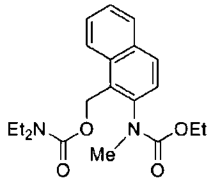
R-155
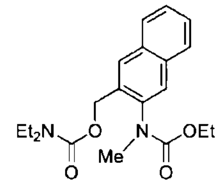
R-156
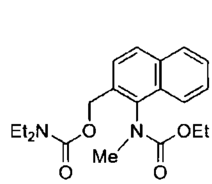
R-157
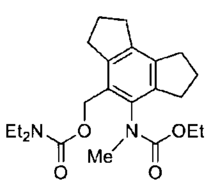
R-158
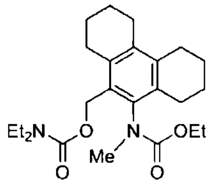
R-159
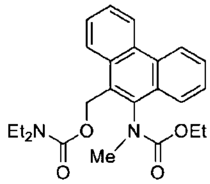
R-160

[Chem. 41]

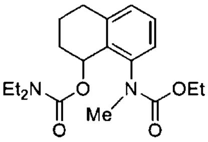
R-161

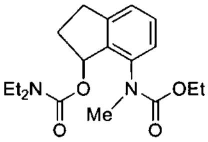
R-162

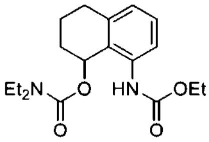
R-163

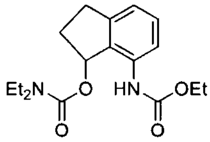
R-164

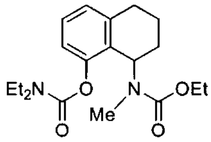
R-165

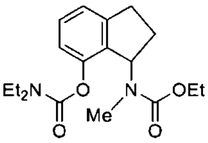
R-166

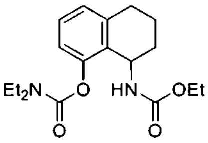
R-167

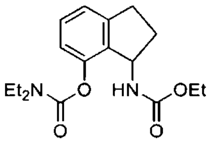
R-168

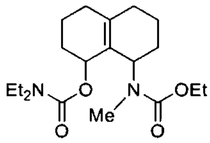
R-169

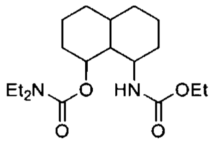
R-170

[Chem. 42]

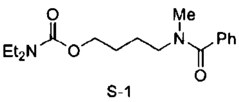
S-1

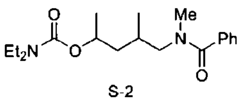
S-2

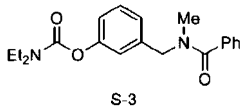
S-3

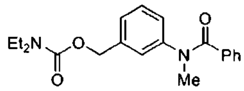
S-4

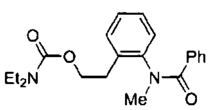
S-5

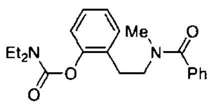
S-6

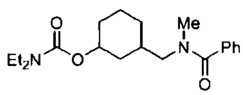
S-7

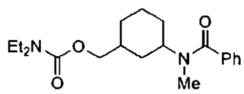
S-8

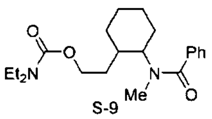
S-9

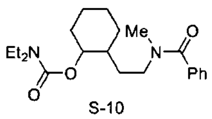
S-10

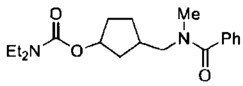
S-11

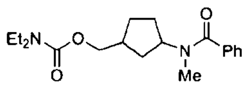
S-12

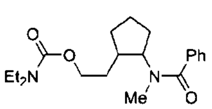
S-13

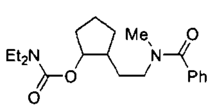
S-14

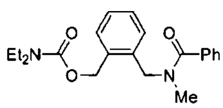
S-15

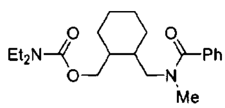
S-16

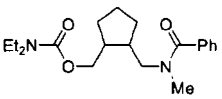
S-17

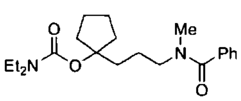
S-18

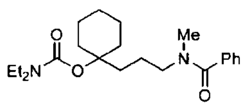
S-19

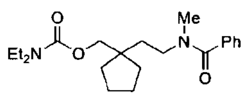
S-20

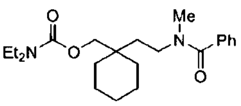
S-21

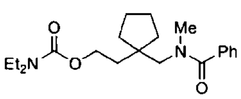
S-22

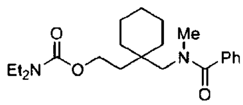
S-23

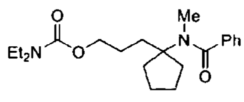
S-24

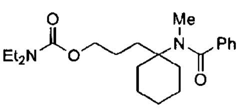
S-25

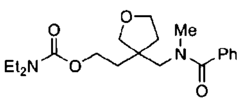
S-26

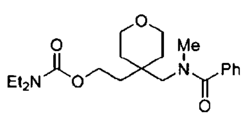
S-27

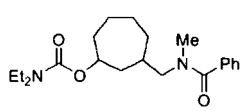
S-28

[Chem. 43]

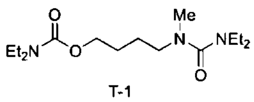
T-1

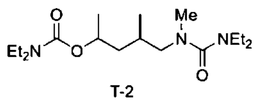
T-2

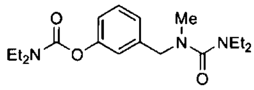
T-3

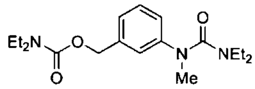
T-4

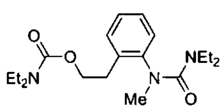
T-5

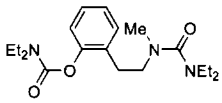
T-6

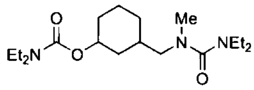
T-7

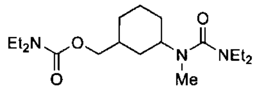
T-8

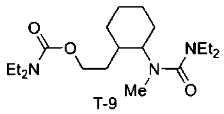
T-9

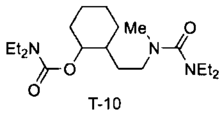
T-10

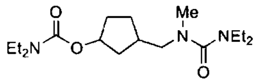
T-11

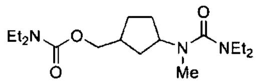
T-12

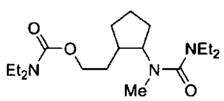
T-13

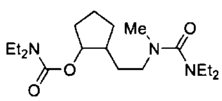
T-14

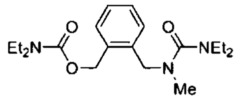
T-15

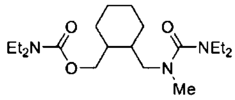
T-16

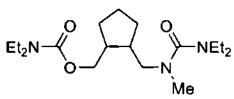
T-17

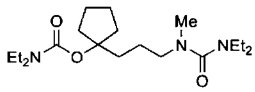
T-18

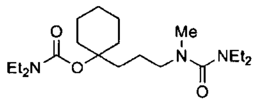
T-19

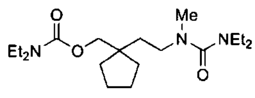
T-20

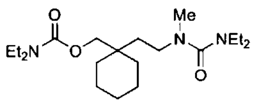
T-21

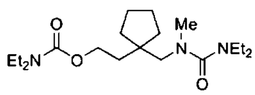
T-22

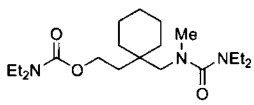
T-23

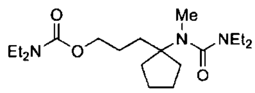
T-24

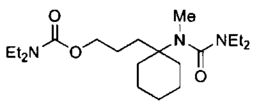
T-25

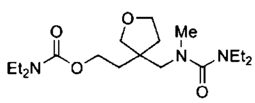
T-26

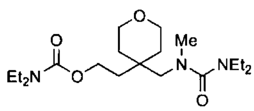
T-27

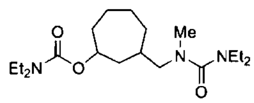
T-28

[Chem. 44]

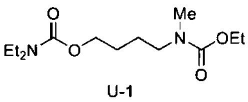
U-1

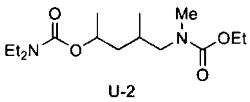
U-2

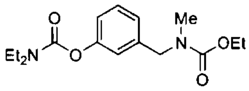
U-3

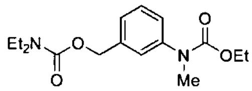
U-4

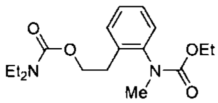
U-5

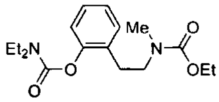
U-6

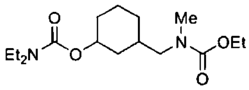
U-7

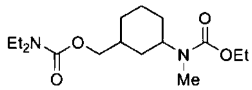
U-8

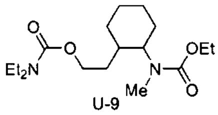
U-9

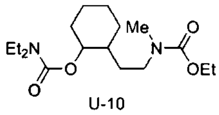
U-10

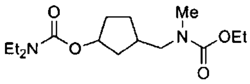
U-11

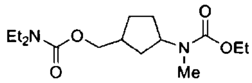
U-12

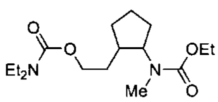
U-13

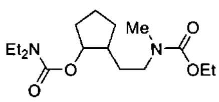
U-14

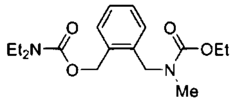
U-15

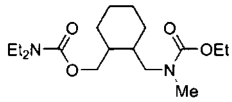
U-16

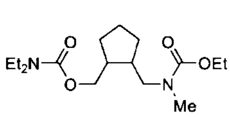
U-17

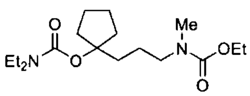
U-18

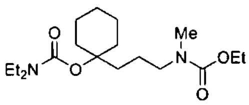
U-19

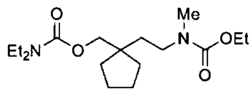
U-20

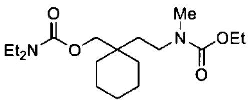
U-21

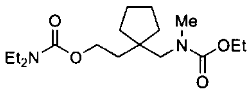
U-22

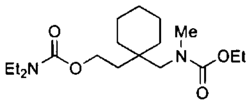
U-23

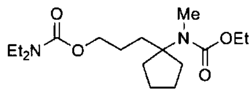
U-24

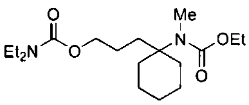
U-25

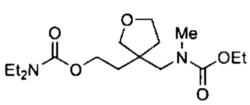
U-26

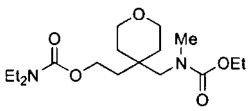
U-27

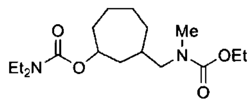
U-28

[Chem. 45]

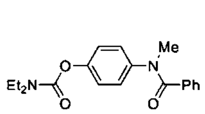
V-1

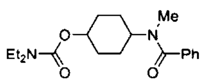
V-2

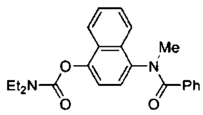
V-3

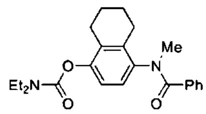
V-4

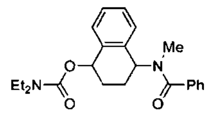
V-5

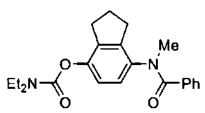
V-6

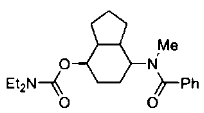
V-7

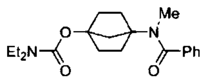
V-8

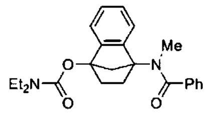
V-9

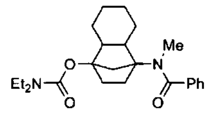
V-10

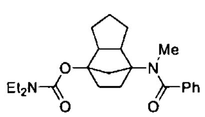
V-11

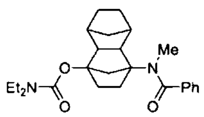
V-12

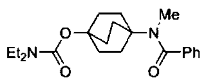
V-13

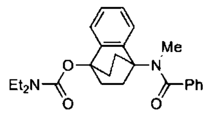
V-14

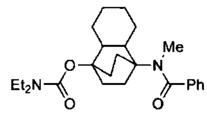
V-15

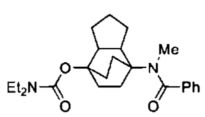
V-16

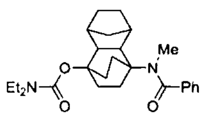
V-17

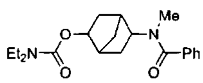
V-18

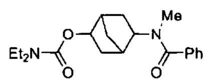
V-19

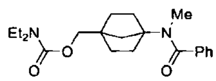
V-20

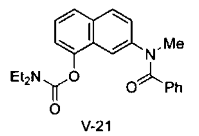
V-21

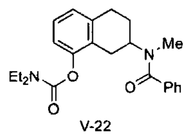
V-22

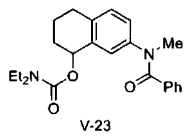
V-23

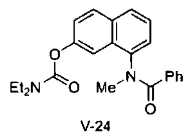
V-24

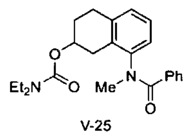
V-25

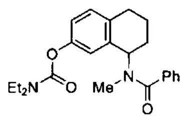
V-26

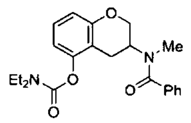
V-27

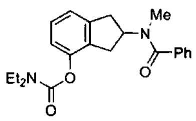
V-28

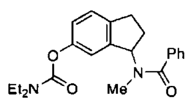
V-29

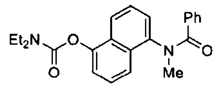
V-30

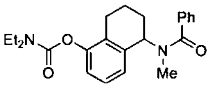
V-31

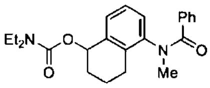
V-32

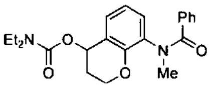
V-33

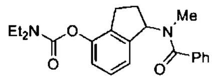
V-34

[Chem. 46]

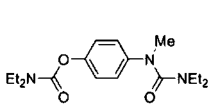
W-1
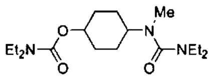
W-2
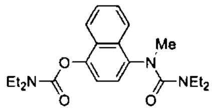
W-3
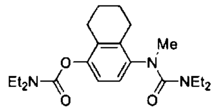
W-4
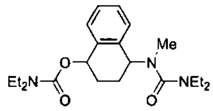
W-5
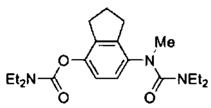
W-6
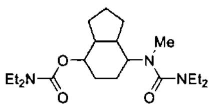
W-7
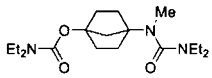
W-8
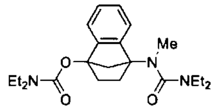
W-9
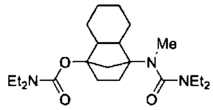
W-10
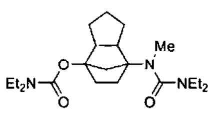
W-11
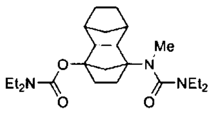
W-12
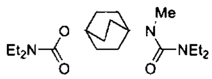
W-13
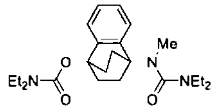
W-14
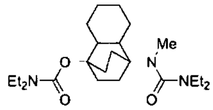
W-15
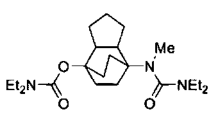
W-16
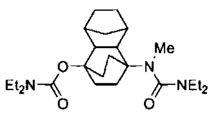
W-17
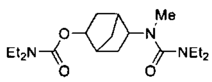
W-18
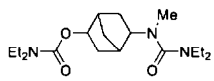
W-19
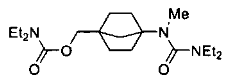
W-20
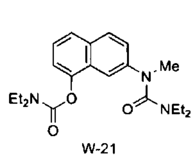
W-21
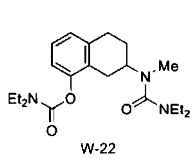
W-22
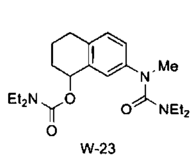
W-23
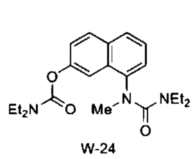
W-24
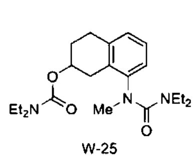
W-25
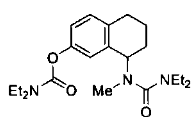
W-26
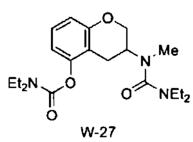
W-27
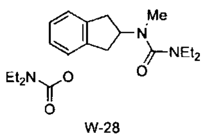
W-28
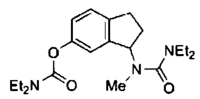
W-29
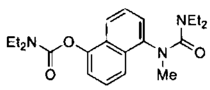
W-30
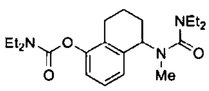
W-31
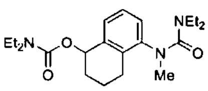
W-32
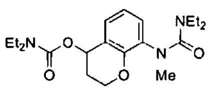
W-33
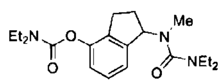
W-34

[Chem. 47]

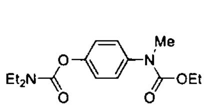
X-1
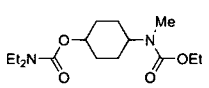
X-2
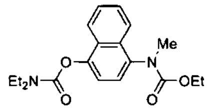
X-3
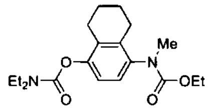
X-4
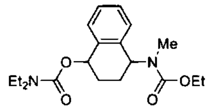
X-5
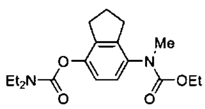
X-6
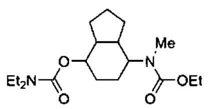
X-7
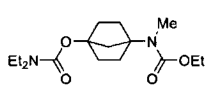
X-8
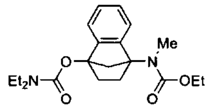
X-9
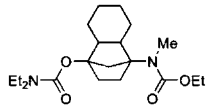
X-10
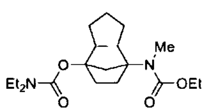
X-11
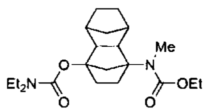
X-12
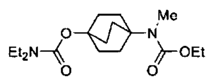
X-13
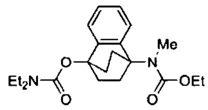
X-14
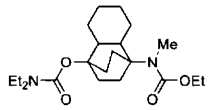
X-15
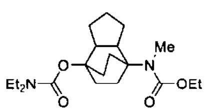
X-16
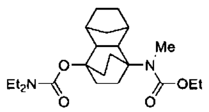
X-17
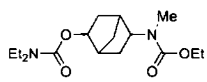
X-18
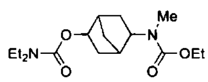
X-19
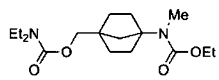
X-20
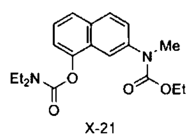
X-21
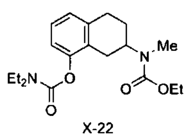
X-22
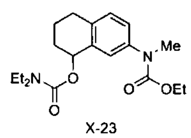
X-23
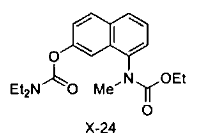
X-24
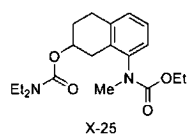
X-25
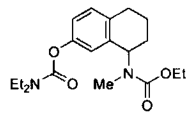
X-26
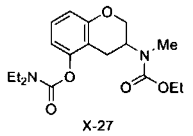
X-27
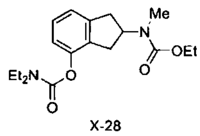
X-28
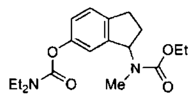
X-29
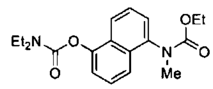
X-30
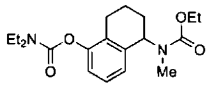
X-31
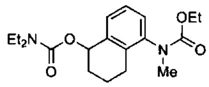
X-32
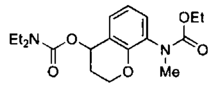
X-33
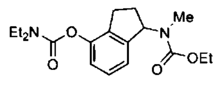
X-34

[Chem. 48]

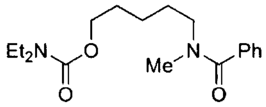
Y-1
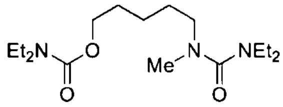
Y-2
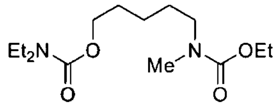
Y-3

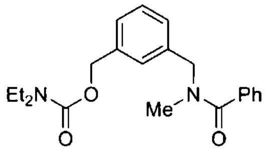
Y-4
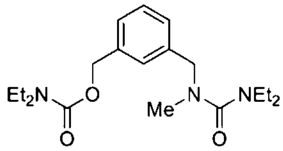
Y-5
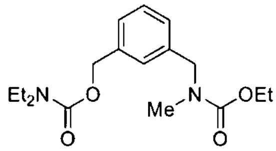
Y-6

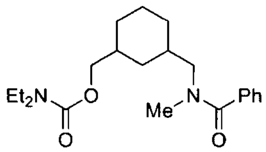
Y-7
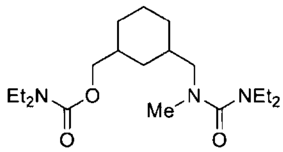
Y-8
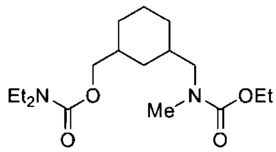
Y-9

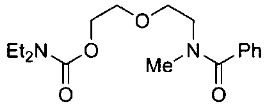
Y-10
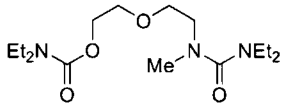
Y-11
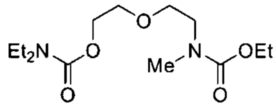
Y-12

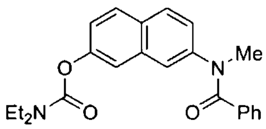
Y-13
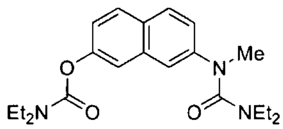
Y-14
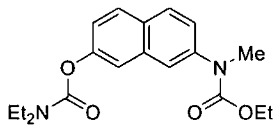
Y-15

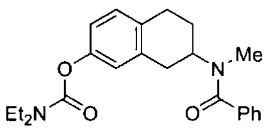
Y-16
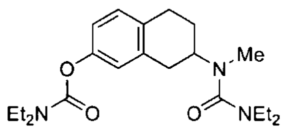
Y-17
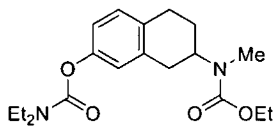
Y-18

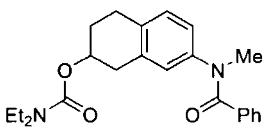
Y-19
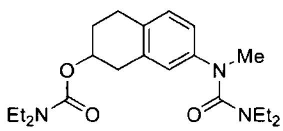
Y-20
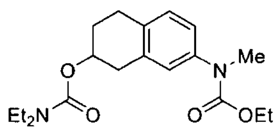
Y-21

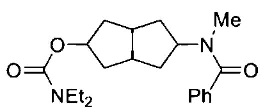
Y-22
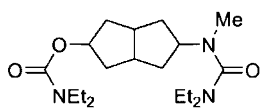
Y-23
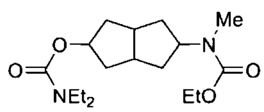
Y-24

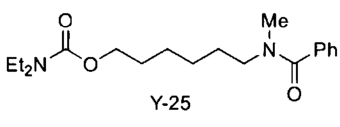
Y-25
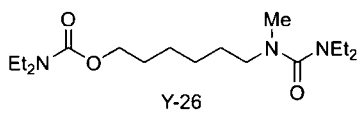
Y-26
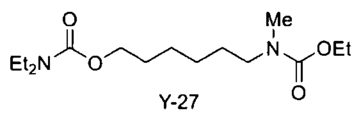
Y-27

Note that, in the structural formulae depicted above, a methyl group is denoted as **"Me"**, an ethyl group is denoted as **"Et"**, a butyl group is denoted as **"Bu"**, a phenyl group is denoted as **"Ph"**, a benzyl group is denoted as **"Bn"**, **a** cyclohexyl group is denoted as **"Cy"**, and a trifluoromethyl group is denoted as "$CF_3$". Also, "i" represents "iso", and "t" represents "tertiary".

One of these compounds may be used singly, or two or more may be used in combination. As long as the purpose of the present invention is not impaired, these compounds (a) may be used in combination with a catalyst component (b)

and a catalyst component (c) that will be described later.

Also, the compound (a) may be formed during the course of preparing the solid titanium catalyst component (I).

There is a tendency that the method for producing an olefin polymer of the present invention likely provides a polymer having a broad molecular weight distribution and a high stereoregularity in a highly active manner.

In addition to the compound (a), a magnesium compound and a titanium compound are used in the preparation of the solid titanium catalyst component (I) of the present invention.

<Magnesium compound>

Specific examples of such magnesium compounds may include known magnesium compounds such as:

magnesium halides such as magnesium chloride and magnesium bromide;
alkoxymagnesium halides such as methoxymagnesium chloride, ethoxymagnesium chloride, and phenoxymagnesium chloride;
alkoxymagnesium such as ethoxymagnesium, isopropoxymagnesium, butoxymagnesium, and 2-ethylhexoxymagnesium;
aryloxymagnesium such as phenoxymagnesium; and
carboxylic acid salts of magnesium, such as magnesium stearate.

One of these magnesium compounds may be used singly, or two or more may be used in combination. Also, such a magnesium compound may be a complex compound with another metal, a composite compound, or a mixture with another metal compound.

Among these magnesium compounds, a halogen-containing magnesium compound is preferable, and magnesium halide, in particular magnesium chloride, is preferably used. Alkoxymagnesium such as ethoxymagnesium is preferably used as well. The magnesium compound may be a compound that is derived from another substance, such as a compound obtained by bringing an organomagnesium compound such as a Grignard reagent into contact with, for example, titanium halide, silicon halide, or alcohol halide.

<Titanium compound>

Examples of the titanium compound may include tetravalent titanium compounds represented by the general formula:
$Ti(OR')_gX_{4-g}$, wherein R' is a hydrocarbon group, X is a halogen atom, and g is $0 \leq g \leq 4$. More specific examples thereof may include:

titanium tetrahalides such as $TiCl_4$ and $TiBr_4$;
alkoxytitanium trihalides such as $Ti(OCH_3)Cl_3$, $Ti(OC_2H_5)Cl_3$, $Ti(O\text{-}n\text{-}C_4H_9)Cl_3$, $Ti(OC_2H_5)Br_3$, and $Ti(O\text{-}iso\text{-}C_4H_9)Br_3$;
alkoxytitanium dihalides such as $Ti(OCH_3)_2Cl_2$ and $Ti(OC_2H_5)_2Cl_2$;
alkoxytitanium monohalides such as $Ti(OCH_3)_3Cl$, $Ti(O\text{-}n\text{-}C_4H_9)_3Cl$, and $Ti(OC_2H_5)_3Br$; and
tetraalkoxytitanium such as $Ti(OCH_3)_4$, $Ti(OC_2H_5)_4$, $Ti(OC_4H_9)_4$, and $Ti(O\text{-}2\text{-}ethylhexyl)_4$.

Among these, titanium tetrahalides are preferable, and titanium tetrachloride is particularly preferable. One of these titanium compounds may be used singly, or two or more may be used in combination.

Examples of such magnesium compounds and titanium compounds may also include those described in detail in, for example, Patent Literature 1 and Patent Literature 2.

<Method for preparing solid titanium catalyst component>

In the preparation of the solid titanium catalyst component (I) used in the present invention, known methods can be used without limitation except that the compound (a) is used. Examples of specific preferable methods may include the following methods (P-1) to (P-4).

(P-1) Method involving bringing a solid adduct composed of a magnesium compound and a catalyst component (b), the compound (a), and a liquid titanium compound into contact with each other in a suspended state in the presence of an inert hydrocarbon solvent.

(P-2) Method involving bringing a solid adduct composed of a magnesium compound and a catalyst component (b), the compound (a), and a liquid titanium compound into contact with each other in divided portions.

(P-3) Method involving bringing a solid adduct composed of a magnesium compound and a catalyst component

(b), the compound (a), and a liquid titanium compound into contact with each other in a suspended state and in divided portions in the presence of an inert hydrocarbon solvent.

(P-4) Method involving bringing a liquid magnesium compound composed of a magnesium compound and a catalyst component (b), a liquid titanium compound, and the compound (a) into contact with each other.

The reaction temperature is in a range of preferably - 30°C to 150°C, more preferably -25°C to 130°C, and even more preferably -25°C to 120°C.

Production of the solid titanium catalyst component can be performed also in the presence of a known medium as necessary. Examples of the medium include slightly polar aromatic hydrocarbons such as toluene and known aliphatic hydrocarbons and alicyclic hydrocarbon compounds such as heptane, octane, decane, and cyclohexane, and preferable examples among these are aliphatic hydrocarbons.

When the reaction is performed within the above range, the effect of obtaining a polymer having a broad molecular weight distribution, activity, and the stereoregularity of the resulting polymer can be simultaneously achieved at a higher level.

<Catalyst component (b)>

The catalyst component (b) used to form the solid adduct and the liquid magnesium compound is preferably a known compound capable of solubilizing the magnesium compound in a temperature range of about room temperature to 300°C, and for example, alcohols, aldehydes, amines, carboxylic acids, and mixtures thereof are preferable. Examples of these compounds may include those described in detail in Patent Literature 1 and Patent Literature 2.

More specific examples of alcohols capable of solubilizing the magnesium compound may include:

aliphatic alcohols such as methanol, ethanol, propanol, butanol, isobutanol, ethylene glycol, 2-methylpentanol, 2-ethylbutanol, n-heptanol, n-octanol, 2-ethylhexanol, decanol, and dodecanol;
alicyclic alcohols such as cyclohexanol and methylcyclohexanol;
aromatic alcohols such as benzyl alcohol and methylbenzyl alcohol; and
aliphatic alcohols having an alkoxy group, such as n-butyl cellosolve.

Examples of carboxylic acids may include organic carboxylic acids having 7 or more carbon atoms, such as caprylic acid and 2-ethylhexanoic acid. Examples of aldehydes may include aldehydes having 7 or more carbon atoms, such as capric aldehyde and 2-ethylhexyl aldehyde.

Examples of amines may include amines having 6 or more carbon atoms, such as heptylamine, octylamine, nonylamine, laurylamine, and 2-ethylhexylamine.

Preferable examples of the catalyst component (b) are the above alcohols, and for example, ethanol, propanol, butanol, isobutanol, hexanol, 2-ethylhexanol, and decanol are particularly preferable.

While the amounts of the magnesium compound and the catalyst component (b) used when preparing the solid adduct and the liquid magnesium compound also vary according to, for example, the kinds and contact conditions, the magnesium compound is used in an amount of 0.1 to 20 mol/liter and preferably 0.5 to 5 mol/liter based on the unit volume of the catalyst component (b). Also, a medium that is inert to the solid adduct can be used in combination as necessary. Preferable examples of the medium include known hydrocarbon compounds such as heptane, octane, and decane.

While the compositional ratio of magnesium to the catalyst component (b) in the resulting solid adduct and the liquid magnesium compound cannot be generally specified because the ratio varies according to the kind of the compound used, the catalyst component (b) per mole of magnesium in the magnesium compound is in a range of preferably 2.0 mol or more, more preferably 2.2 mol or more, even more preferably 2.6 mol or more, and particularly preferably 2.7 mol or more, and preferably 5 mol or less.

<Aromatic carboxylic acid ester and/or compound having two or more ether bonds via multiple carbon atoms>

The solid titanium catalyst component (I) of the present invention may further contain an aromatic carboxylic acid ester and/or a compound having two or more ether bonds via multiple carbon atoms (hereinafter also referred to as a "catalyst component (c)"). The catalyst component (c) when contained in the solid titanium catalyst component (I) of the present invention may increase activity and stereoregularity and further broaden the molecular weight distribution.

Known aromatic carboxylic acid esters and polyether compounds that are preferably used in conventional catalysts for olefin polymerization, such as compounds described in Patent Literature 2 and JP2001-354714A, can be used without limitations as the catalyst component (c).

Specific examples of the aromatic carboxylic acid esters include aromatic carboxylic acid monoesters such as benzoic acid esters and toluic acid esters, and aromatic polycarboxylic acid esters such as phthalic acid esters. Among these, aromatic polycarboxylic acid esters are preferable, and phthalic acid esters are more preferable. The phthalic acid

esters are preferably alkyl phthalates such as ethyl phthalate, n-butyl phthalate, isobutyl phthalate, hexyl phthalate, and heptyl phthalate, and diisobutyl phthalate is particularly preferable.

More specific examples of the polyether compound include compounds represented by the following formula (3):

[Chem. 49]

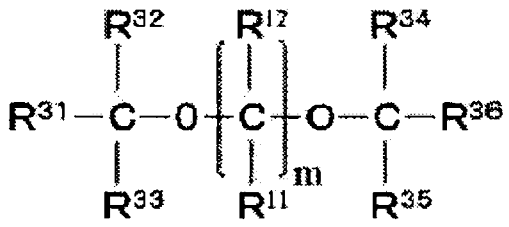

... (3)

wherein m is an integer of $1 \leq m \leq 10$ and more preferably an integer of $3 \leq m \leq 10$; and $R^{11}$, $R^{12}$, and $R^{31}$ to $R^{36}$ are each a hydrogen atom or a substituent having at least one element selected from carbon, hydrogen, oxygen, fluorine, chlorine, bromine, iodine, nitrogen, sulfur, phosphorus, boron, and silicon.

When m is 2 or more, a plurality of $R^{11}$ and $R^{12}$ may be the same or different. Any $R^{11}$, $R^{12}$, $R^{31}$ to $R^{36}$, and preferably $R^{11}$ and $R^{12}$, may together form a ring other than a benzene ring.

Specific examples of such compounds may include:

monosubstituted dialkoxypropanes such as 2-isopropyl-1,3-dimethoxypropane, 2-s-butyl-1,3-dimethoxypropane, and 2-cumyl-1,3-dimethoxypropane;

disubstituted dialkoxypropanes such as 2-isopropyl-2-isobutyl-1,3-dimethoxypropane, 2,2-dicyclohexyl-1,3-dimethoxypropane, 2-methyl-2-isopropyl-1,3-dimethoxypropane, 2-methyl-2-cyclohexyl-1,3-dimethoxypropane, 2-methyl-2-isobutyl-1,3-dimethoxypropane, 2,2-diisobutyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2,2-di-s-butyl-1,3-dimethoxypropane, 2,2-dineopentyl-1,3-dimethoxypropane, 2-isopropyl-2-isopentyl-1,3-dimethoxypropane, and 2-cyclohexyl-2-cyclohexylmethyl-1,3-dimethoxypropane;

dialkoxyalkanes such as 2,3-dicyclohexyl-1,4-diethoxybutane, 2,3-dicyclohexyl-1,4-diethoxybutane, 2,3-diisopropyl-1,4-diethoxybutane, 2,4-diphenyl-1,5-dimethoxypentane, 2,5-diphenyl-1,5-dimethoxyhexane, 2,4-diisopropyl-1,5-dimethoxypentane, 2,4-diisobutyl-1,5-dimethoxypentane, and 2,4-diisoamyl-1,5-dimethoxypentane;

trialkoxyalkanes such as 2-methyl-2-methoxymethyl-1,3-dimethoxypropane, 2-cyclohexyl-2-ethoxymethyl-1,3-diethoxypropane, and 2-cyclohexyl-2-methoxymethyl-1,3-dimethoxypropane; and

dialkoxycycloalkanes such as 2,2-diisobutyl-1,3-dimethoxy-4-cyclohexenyl, 2-isopropyl-2-isoamyl-1,3-dimethoxy-4-cyclohexenyl, 2-cyclohexyl-2-methoxymethyl-1,3-dimethoxy-4-cyclohexenyl, 2-isopropyl-2-methoxymethyl-1,3-dimethoxy-4-cyclohexenyl, 2-isobutyl-2-methoxymethyl-1,3-dimethoxy-4-cyclohexenyl, 2-cyclohexyl-2-ethoxymethyl-1,3-dimethoxy-4-cyclohexenyl, 2-isopropyl-2-ethoxymethyl-1,3-dimethoxy-4-cyclohexenyl, and 2-isobutyl-2-ethoxymethyl-1,3-dimethoxy-4-cyclohexenyl.

Among these, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl) 1,3-dimethoxypropane are particularly preferable.

It is also possible, of course, to use the polyvalent ether compounds disclosed in the above-described Patent Literatures 3 to 5 in combination.

One of these compounds may be used singly, or two or more may be used in combination.

The compound (a), the catalyst component (b), and the catalyst component (c) as described above can be generally regarded as belonging to components that are called electron donors by those skilled in the art. The electron donor components are known to show, for example, the effect of increasing the stereoregularity of the resulting polymer, the effect of controlling the compositional distribution of the resulting copolymer, the aggregating-agent effect of controlling the particle shape and the particle size of catalyst particles, while maintaining the high catalyst activity.

The compound (a) of the present invention can also be expected to have the potential for even more diverse reaction control by using other electron donors in combination.

In the solid titanium catalyst component (I) used in the present invention, halogen/titanium (an atomic ratio) (i.e., the number of moles of halogen atoms/the number of moles of titanium atoms) is desirably 2 to 100 and preferably 4 to 90; the compound (a)/titanium (a molar ratio) (i.e., the number of moles of the compound (a)/the number of moles of titanium atoms) is desirably 0.01 to 100 and preferably 0.2 to 10; and regarding the catalyst component (b) and the catalyst

component (c), the catalyst component (b)/titanium atoms (a molar ratio) is desirably 0 to 100 and preferably 0 to 10, and the catalyst component (c)/titanium atoms (a molar ratio) is desirably 0 to 100 and preferably 0 to 10.

Magnesium/titanium (an atomic ratio) (i.e., the number of moles of magnesium atoms/the number of moles of titanium atoms) is desirably 2 to 100 and preferably 4 to 50.

The content of components that may be contained in other than the compound (a) described above, such as the catalyst component (b) and the catalyst component (c), is preferably 20 wt% or less and more preferably 10 wt% or less based on 100 wt% of the compound (a).

As for the more detailed conditions for preparing the solid titanium catalyst component (I), the conditions described in, for example, EP585869A1 (the specification of European Patent Application Publication No. 0585869) and Patent Literature 2 can be preferably used except that the compound (a) is used.

[Catalyst for olefin polymerization]

The catalyst for olefin polymerization according to the present invention contains:

the solid titanium catalyst component (I) according to the present invention; and
an organometallic compound catalyst component (II) containing a metal element selected from Groups 1, 2, and 13 of the periodic table.

<Organometallic compound catalyst component (II)>

A compound containing a Group 13 metal such as an organoaluminum compound, an alkyl complex compound of a Group 1 metal and aluminum, or an organometallic compound of a Group 2 metal can be used as the organometallic compound catalyst component (II). Among these, an organoaluminum compound is preferable.

Specific preferable examples of the organometallic compound catalyst component (II) may include organometallic compound catalyst components described in known documents such as the aforementioned EP585869A1.

<Electron donor (III)>

The catalyst for olefin polymerization of the present invention may contain, together with the organometallic compound catalyst component (II), an electron donor (III) as necessary. The electron donor (III) is preferably an organosilicon compound. Examples of the organosilicon compound include compounds represented by the following general formula (4):

$$R^S{}_nSi(OR'')_{4-n} \cdots \qquad (4)$$

wherein $R^S$ and R" are hydrocarbon groups; and n is an integer of $0 < n < 4$.

Specifically, as for the organosilicon compound represented by the general formula (4), for example, diisopropyldimethoxysilane, t-butylmethyldimethoxysilane, t-butylmethyldiethoxysilane, t-amylmethyldiethoxysilane, dicyclohexyldimethoxysilane, cyclohexylmethyldimethoxysilane, cyclohexylmethyldiethoxysilane, vinyltrimethoxysilane, vinyltriethoxysilane, t-butyltriethoxysilane, phenyltriethoxysilane, cyclohexyltrimethoxysilane, cyclopentyltrimethoxysilane, 2-methylcyclopentyltrimethoxysilane, cyclopentyltriethoxysilane, dicyclopentyldimethoxysilane, dicyclopentyldiethoxysilane, tricyclopentylmethoxysilane, dicyclopentylmethylmethoxysilane, dicyclopentylethylmethoxysilane, and cyclopentyldimethylethoxysilane are used.

Among these, vinyltriethoxysilane, diphenyldimethoxysilane, dicyclohexyldimethoxysilane, cyclohexylmethyldimethoxysilane, and dicyclopentyldimethoxysilane are preferably used.

Also, silane compounds represented by the following formula (5) as described in WO2004/016662 are preferable examples of the organosilicon compound:

$$Si(OR^a)_3(NR^bR^c) \cdots \qquad (5)$$

wherein $R^a$ is a hydrocarbon group having 1 to 6 carbon atoms, examples of $R^a$ include unsaturated or saturated aliphatic hydrocarbon groups having 1 to 6 carbon atoms, and particularly preferable examples include hydrocarbon groups having 2 to 6 carbon atoms. Specific examples thereof include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, and a cyclohexyl group, and among these, an ethyl group is particularly preferable.

In the formula (5), $R^b$ is a hydrocarbon group having 1 to 12 carbon atoms or hydrogen, and examples of $R^b$ include unsaturated or saturated aliphatic hydrocarbon groups having 1 to 12 carbon atoms and hydrogen. Specific

examples thereof include a hydrogen atom, a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and among these, an ethyl group is particularly preferable.

In the formula (5), $R^c$ is a hydrocarbon group having 1 to 12 carbon atoms, and examples of $R^c$ include unsaturated or saturated aliphatic hydrocarbon groups having 1 to 12 carbon atoms and hydrogen. Specific examples thereof include a methyl group, an ethyl group, a n-propyl group, an iso-propyl group, a n-butyl group, an iso-butyl group, a sec-butyl group, a n-pentyl group, an iso-pentyl group, a cyclopentyl group, a n-hexyl group, a cyclohexyl group, and an octyl group, and among these, an ethyl group is particularly preferable.

Specific examples of the compound represented by the formula (5) include dimethylaminotriethoxysilane, diethylaminotriethoxysilane, diethylaminotrimethoxysilane, diethylaminotriethoxysilane, diethylaminotri n-propoxysilane, di-n-propylaminotriethoxysilane, methyl-n-propylaminotriethoxysilane, t-butylaminotriethoxysilane, ethyl-n-propylaminotriethoxysilane, ethyl-iso-propylaminotriethoxysilane, and methylethylaminotriethoxysilane.

Other examples of the organosilicon compound include compounds represented by the following formula (6):

$$R^{N}NSi(OR^{a})_3 \ldots \qquad (6)$$

wherein $R^N$N is a cyclic amino group, and examples of the cyclic amino group include a perhydroquinolino group, a perhydroisoquinolino group, a 1,2,3,4-tetrahydroquinolino group, a 1,2,3,4-tetrahydroisoquinolino group, and an octamethyleneimino group.

Specific examples of the compounds represented by the formula (6) include (perhydroquinolino)triethoxysilane, (perhydroisoquinolino)triethoxysilane, (1,2,3,4-tetrahydroquinolino)triethoxysilane, (1,2,3,4-tetrahydroisoquinolino) triethoxysilane, and octamethyleneiminotriethoxysilane.

Two or more of these organosilicon compounds can be used in combination.

Preferable examples of other useful compounds as the electron donor (III) include polyether compounds described as examples of the aromatic carboxylic acid ester and/or the compound having two or more ether bonds via multiple carbon atoms (the catalyst component (c)).

Among those polyether compounds, 1,3-diethers are preferable, and 2-isopropyl-2-isobutyl-1,3-dimethoxypropane, 2,2-diisobutyl-1,3-dimethoxypropane, 2-isopropyl-2-isopentyl-1,3-dimethoxypropane, 2,2-dicyclohexyl-1,3-dimethoxypropane, and 2,2-bis(cyclohexylmethyl)-1,3-dimethoxypropane are particularly preferable.

One of these compounds can be used singly, and two or more can be used in combination.

The concomitant use of the electron donor (III) often enables stereoregularity and molecular weight to be regulated especially. Specifically, when the proportion of the electron donor (III) used with respect to the organometallic compound catalyst component is increased, there is a tendency that a highly stereoregular polymer is likely obtained, and a polymer having a high molecular weight is likely obtained. On the other hand, when the proportion of the electron donor (III) used is decreased, there is a tendency that a polymer having a relatively low stereoregularity (for example, the decane-soluble part content, which will be described later, is relatively high) is likely obtained, and a polymer having a low molecular weight is likely obtained.

The catalyst for olefin polymerization of the present invention may contain, other than the components described above, other components useful for olefin polymerization as necessary. Examples of other components include carriers such as silica, antistatic agents, particle aggregating agents, and storage stabilizers.

[Method for polymerizing olefin]

The olefin polymerization method according to the present invention involves performing olefin polymerization using the catalyst for olefin polymerization of the present invention. Herein, "polymerization" may include the meaning of homopolymerization, as well as copolymerization such as random copolymerization and block copolymerization.

In the olefin polymerization method of the present invention, polymerization can also be performed in the presence of a prepolymerization catalyst obtained by prepolymerizing an $\alpha$-olefin in the presence of the catalyst for olefin polymerization of the present invention. This prepolymerization is performed by prepolymerizing an $\alpha$-olefin in an amount of 0.1 to 1000 g, preferably 0.3 to 500 g, and particularly preferably 1 to 200 g per gram of the catalyst for olefin polymerization.

In prepolymerization, the catalyst can be used in a concentration higher than the catalyst concentration in the system of polymerization.

The concentration of the solid titanium catalyst component (I) in prepolymerization, in terms of titanium atom, is desirably in the range of usually about 0.001 to 200 mmol, preferably about 0.01 to 50 mmol, and particularly preferably 0.1 to 20 mmol per liter of a liquid medium.

It is sufficient that the amount of the organometallic compound catalyst component (II) in prepolymerization is an amount such that 0.1 to 1000 g and preferably 0.3 to 500 g of a polymer is produced per gram of the solid titanium catalyst

component (I), and it is desirable that the amount is usually about 0.1 to 300 mol, preferably about 0.5 to 100 mol, and particularly preferably 1 to 50 mol per mole of titanium atoms in the solid titanium catalyst component (I).

In prepolymerization, for example, the electron donor (III) can also be used as necessary, and at this time, such components are used in an amount of **0.1** to 50 mol, preferably **0.5** to 30 mol, and even more preferably 1 to 10 mol per mole of titanium atoms in the solid titanium catalyst component (I). By regulating the amount of the electron donor (III), the stereoregularity of the resulting olefin polymer may be regulated.

Prepolymerization can be performed under mild conditions after adding an olefin and the above catalyst components to an inert hydrocarbon medium.

In this case, specific examples of the inert hydrocarbon medium used may include:

aliphatic hydrocarbons such as propane, butane, pentane, hexane, heptane, octane, decane, dodecane, and kerosene;
alicyclic hydrocarbons such as cycloheptane, methylcycloheptane, 4-cycloheptane, and methyl-4-cycloheptane;
aromatic hydrocarbons such as benzene, toluene, and xylene;
halogenated hydrocarbons such as ethylenechloride and chlorobenzene; and mixtures thereof.

Among these inert hydrocarbon media, aliphatic hydrocarbons are preferably used in particular. In the case of using an inert hydrocarbon medium, prepolymerization is preferably performed in a batch-wise manner.

On the other hand, prepolymerization can also be performed using the olefin itself as a solvent, and prepolymerization can also be performed in a substantially solvent-free state. In this case, prepolymerization is preferably performed in a continuous manner.

The olefin used in prepolymerization may be the same as or different from the olefin used in polymerization that will be described later, and specifically, propylene is preferable.

Desirably, the temperature during prepolymerization is in a range of usually about -20 to +100°C, preferably about - 20 to +80°C, and even more preferably 0 to +40°C.

Next, polymerization will now be described that is performed by way of the above-described prepolymerization or without prepolymerization.

Examples of olefins that are usable (i.e., to be polymerized) in polymerization may include α-olefins having 3 to 20 carbon atoms, e.g., linear olefins such as propylene, 1-butene, 1-pentene, 1-hexene, 1-octene, 1-decene, 1-dodecene, 1-tetradecene, 1-hexadecene, 1-octadecene, and 1-eicosene, and branched olefins such as 4-methyl-1-pentene, 3-methyl-1-pentene, and 3-methyl-1-butene, and preferable are propylene, 1-butene, 1-pentene, 4-methyl-1-pentene, and 3-methyl-1-butene. From the viewpoint that advantages of a polymer having a broad molecular weight distribution are likely exhibited in a highly rigid resin, propylene, 1-butene, 4-methyl-1-pentene, and 3-methyl-1-butene are particularly preferable.

In addition to these α-olefins, also usable are ethylene, aromatic vinyl compounds such as styrene and allylbenzene, and alicyclic vinyl compounds such as vinylcyclohexane and vinylcycloheptane. Moreover, cyclopentene, cycloheptene, norbornene, tetracyclododecene, and compounds having multiple unsaturated bonds such as conjugated dienes and nonconjugated dienes, **e.g.,** dienes such as isoprene and butadiene, can also be used as polymerization feedstocks together with ethylene and α-olefin. One of these compounds may be used singly, or two or more may be used in combination (hereinafter, olefins used with ethylene or the "α-olefins having 3 to 20 carbon atoms" are also referred to as "further olefins").

Among the further olefins, ethylene and aromatic vinyl compounds are preferable. Out of the total 100 wt% of olefins, a small amount, **e.g.,** 10 wt% or less and preferably 5 wt% or less, of further olefins such as ethylene may be used in combination.

In the present invention, prepolymerization and polymerization can be performed by any of the liquid-phase polymerization methods such as bulk polymerization, solution polymerization, and suspension polymerization, and the gas-phase polymerization methods.

When polymerization takes the reaction form of slurry polymerization, an inert hydrocarbon as used during the above-described prepolymerization can be used as a reaction solvent, and an olefin that is liquid at the reaction temperature can also be used.

In polymerization in the polymerization method of the present invention, the solid titanium catalyst component (I) is used in an amount, in terms of titanium atom, of usually about 0.0001 to 0.5 mmol and preferably about 0.005 to 0.1 mmol per liter of the polymerization volume. The organometallic compound catalyst component (II) is used in an amount of usually about 1 to 2000 mol, preferably about 5 to 500 mol, more preferably 10 to 350 mol, even more preferably 30 to 350 mol, and particularly preferably 50 to 350 mol per mole of titanium atoms in the prepolymerization catalyst components in the polymerization system. The electron donor (III), if used, is used in an amount of 0.001 to 50 mol, preferably 0.01 to 30 mol, and particularly preferably 0.05 to 20 mol per mole of metal atoms of the organometallic compound catalyst component (II). As described above, the stereoregularity and molecular weight may be regulated by way of the amount

of the electron donor (III) used.

Performing polymerization in the presence of hydrogen makes it possible to regulate the molecular weight of the resulting polymer, and provides a polymer having a high melt flow rate.

In polymerization in the present invention, the olefin polymerization temperature is usually about 20 to 200°C, preferably about 30 to 100°C, and more preferably 50 to 90°C. The pressure is usually set to normal pressure to 10 MPa, and preferably 0.20 to 5 MPa. In the polymerization method of the present invention, polymerization can be performed in any of the batch-wise, semi-continuous, and continuous manners. Moreover, polymerization can be performed at two or more divided stages by changing the reaction conditions. Performing such multi-stage polymerization enables the molecular weight distribution of the olefin polymer to be further broadened.

The olefin polymer thus obtained may be any of, for example, a homopolymer, a random copolymer, and a block copolymer.

When olefin polymerization, or propylene polymerization in particular, is performed using the catalyst for olefin polymerization described above, a highly stereoregular propylene-based polymer having a decane-insoluble part content of 70% or more, preferably 85% or more, and particularly preferably 90% or more can be obtained.

Moreover, according to the olefin polymerization method of the present invention, polyolefin or, in particular, polypropylene having a broad molecular weight distribution can be obtained even without performing multi-stage polymerization, or even through polymerization having a small number of stages such as single-stage polymerization. It is a feature of the olefin polymerization method of the present invention that, in particular, an olefin polymer is often obtained that has a higher proportion of high molecular weight components and a lower proportion of low molecular weight components (which are especially referred to as sticky compounds) than conventional olefin polymers having a comparable melt flow rate (MFR). This feature can be verified by gel permeation chromatography (GPC) measurement that will be described later, and a polymer having both a high Mw/Mn value and a high Mz/Mw value can be obtained.

Polypropylene obtained using conventional solid titanium catalyst components including magnesium, titanium, halogen, and an electron donor generally has an Mw/Mn value of 5 or less and an Mz/Mw value of less than 4, which are indices of a molecular weight distribution as determined by GPC measurement, in an MFR range of 1 to 10 g/10 min, but when the olefin polymerization method of the present invention is used, an olefin polymer having an Mw/Mn value of 6 to 30 and preferably 7 to 20 can be obtained under the same polymerization conditions. Moreover, an olefin polymer having an Mz/Mw value of preferably 4 to 15 and more preferably 4.5 to 10 can be obtained. In particular, according to the method for polymerizing an olefin of the present invention, a polymer having a high Mz/Mw value is often obtained.

It is common knowledge among those skilled in the art that polypropylene having a high Mw/Mn value has excellent moldability and rigidity. On the other hand, a high Mz/Mw value indicates a high content ratio of high molecular weight component, and it is expected that the resulting polypropylene possibly has high melt tension and excellent moldability.

The use of the method for polymerizing an olefin of the present invention enables a polymer having a broad molecular weight distribution to be obtained without performing multi-stage polymerization and thus, possibly, a polymer production apparatus to be more simplified. Also, application to a conventional multi-stage polymerization method is expected to enable a polymer having better melt tension and moldability to be obtained.

While there are other methods for obtaining a polymer having a broad molecular weight distribution such as a method involving melt-mixing or melt-kneading polymers having different molecular weights, polymers obtained by such methods in some cases do not have sufficiently increased melt tension or moldability despite the relatively complex procedure. This is presumably because polymers having different molecular weights, basically, are unlikely to mix. On the other hand, the polymer obtained by the method for polymerizing an olefin of the present invention, because polymers having different molecular weights of extremely broad ranges are mixed at the catalyst level, i.e., the nano-level, is expected to have a high melt tension and excellent moldability.

The polymer obtained by the method for polymerizing an olefin of the present invention has high stereoregularity as described above. Accordingly, the olefin polymer obtained by the method of the present invention tends to have a high melting point. The melting point is usually determined by differential scanning calorimetry (DSC).

As described above, the olefin polymer, or the propylene polymer in particular, obtained by the method of the present invention tends to have a broad molecular weight distribution and in particular a large Mz, and thus tends to have a distribution that spreads toward the high molecular weight side. Since the molecular mobility of an olefin polymer varies according to the molecular weight, a chart obtained by DSC measurement in the case of a polymer having a broad molecular weight distribution may have not a unimodal shape but a multimodal shape or a broad shape. That is to say, since an ultra-high molecular weight component is more unlikely to crystallize, it is conceived that a chart that has a broad shape on the low temperature side in a DSC measurement method is possibly due to an ultra-high molecular weight component. Accordingly, $\Delta H$ that is measured as heat of fusion (amount of heat of crystallization) may also tend to be low.

On the other hand, it was found that the DSC chart of the propylene polymer obtained using the method of the present invention tends to show a relatively small spread toward the low temperature side and also a high $\Delta H$. This is possibly because the polymer obtained by the method of the present invention, especially components in the ultra-high

molecular weight region, has high stereoregularity, and thus showed a tendency that the polymer easily crystallizes, and that the chart has little spread toward the low temperature side.

It is said that the components in the ultra-high molecular weight region may cause problems, such as fish eyes, in applications where transparency and see-through properties are emphasized, such as film applications. The olefin polymer obtained by the method of the present invention tends to be capable of achieving a finely dispersed state that can also be referred to as a catalytically active species level, **i.e.,** nano-level, as described above, and thus tends to be unlikely to cause such problems. Also, selecting the structure of the ester compound (a) used in the catalyst of the present invention enables the balance between the molecular weight and content of components in the ultra-high molecular weight region and the molecular weight and melt flow rate (MFR) of the entirety of the polymer to be regulated as well.

The reason why a polymer exhibiting such properties is obtained is probably that, as described above, the compound (a) contained in the catalyst of the present application has a specific structure, and thus the reaction field is relatively stable. That is to say, as presumed by the present inventors, the highly stereospecific active site, while having a property of high level of stereoregularity controllability, may have the effect of preventing from becoming a specific state that causes a chain transfer reaction.

The polymer obtained by the method of the present invention may show a molecular weight distribution that also has a certain degree of spread toward the low molecular weight side. A low molecular weight component tends to have a weak crystal structure and a low melting point due to the low molecular weight.

It is also conceived that the propylene polymer obtained by the method of the present invention, because the stereoregularity of a low molecular weight component is high, possibly shows a DSC chart that has little spread toward the low temperature side.

In addition, a plurality of factors such as the possibility of exhibiting a nucleating agent effect in the crystallization step can also be conceived.

From these viewpoints, it is conceived that the propylene polymer obtained by the method of the present invention possibly has high stereoregularity regardless of the molecular weight range thereof. Accordingly, the polymer has high heat of fusion and shows a relatively high degree of crystallinity.

The propylene polymer obtained utilizing the solid titanium catalyst component of the present invention may contain structural units derived from olefins other than propylene and polymerizable vinyl compounds as long as its characteristics and objectives are not adversely affected.

Preferable examples of the olefins may include olefins and dienes as disclosed in the section concerning the method for producing an olefin polymer described above, and preferable examples of the polymerizable vinyl compounds may include aromatic vinyl compounds such as styrene. Examples of more preferable olefins may include ethylene, 1-butene, 1-pentene, 1-hexene, 1-octene, 1-decene, 1-hexadecene, and 1-octadecene. Among these, ethylene, 1-butene, 1-hexene, 1-octene, and 1-decene are more preferable examples, and ethylene and 1-butene are even more preferable examples. Preferable examples of the polymerizable vinyl compounds may include styrene.

The content of such other structural units is preferably 5 mol% or less, more preferably 3 mol% or less, even more preferably 1 mol% or less, and particularly preferably 0.5 mol% or less, based on the total content of propylene-derived structural units being 100 mol%.

The propylene polymer obtained by the method of the present invention can be used in known various applications. In particular, since the propylene polymer is expected to have high heat resistance and rigidity, the propylene polymer is suitable for, for example, various injection-molded article applications and, more specifically, automobile components and household electric appliance components. Also, the propylene polymer can be used in various sheets and films due to the broad molecular weight distribution. In particular, the propylene polymer is suitable for, for example, separator applications in lithium ion batteries and capacitors as well. Also, the propylene polymer can be suitably used in, for example, stamping-molded articles, calender-molded articles, and rotational-molded articles.

## Examples

The present invention will now be described by way of Examples below, but the present invention is not limited to the Examples.

In the following Examples, the bulk specific gravity, the melt flow rate, the amount of decane-soluble (insoluble) components, the molecular weight distribution, the final melting point, the melting point, the crystallization temperature, and the amount of heat of fusion of propylene polymers were measured by the following methods.

(1) Bulk specific gravity:
The bulk specific gravity was measured in accordance with JIS K-6721.
(2) Melt flow rate (MFR):
In accordance with ASTM D1238E, the measurement temperature for a propylene polymer was set at 230°C and the load was set at 2.16 kg.

(3) Amount of decane-soluble (insoluble) components:

About 3 g of a propylene polymer (it was measured to a unit of $10^{-4}$ g, and this weight was denoted as b (g) in the following equation), 500 ml of decane, and a small amount of a heat-resistant stabilizer soluble in decane were loaded in a glass measurement vessel, and the propylene polymer was dissolved by being heated to 150°C over 2 hours while being stirred with a stirrer in a nitrogen atmosphere, then maintained at 150°C for 2 hours, and gradually cooled to 23°C over 8 hours. The resulting liquid containing precipitates of the propylene polymer was subjected to filtration under reduced pressure through a 25G-4 standard glass filter manufactured by Tokyo Garasu Kikai Co., Ltd. Then, 100 ml of the filtrate was harvested and dried under reduced pressure to give a portion of decane-soluble parts, and the weight thereof was weighed to a unit of $10^{-4}$ g (this weight was denoted as a (g) in the following equation). After this operation, the amount of the decane-soluble parts was determined by the following equation.

Decane-soluble part content = $100 \times (500 \times a) / (100 \times b)$

Decane-insoluble part content = $100 - 100 \times (500 \times a) / (100 \times b)$

(4) Molecular weight distribution (MWD):

Gel permeation chromatograph: HLC-8321 GPC/HT model manufactured by Tosoh Corporation
Detector: Differential refractometer
Column: TSKgel GMH6-HT × 2 and TSKgel GMH6-HTL × 2 manufactured by Tosoh Corporation were serially connected.
Mobile phase medium: o-dichlorobenzene
Flow rate: 1.0 ml/min
Measurement temperature: 140°C
Method of creating calibration curve: Standard polystyrene sample was used.
Sample concentration: 0.1% (w/w)
Amount of sample solution: 0.4 ml
Measurement was performed under the above conditions, and the resulting chromatogram was analyzed by a known method to calculate the weight average molecular weight (Mw), the number average molecular weight (Mn), the Z average molecular weight (Mz), and the Mw/Mn value and the Mz/Mw value that are indices of the molecular weight distribution (MWD). The measurement time for one sample was 60 minutes.

(5) Melting point (Tm) of polymer:

The melting point (Tm), the crystallization temperature (Tc), and the amount of heat of fusion (ΔH) of polymers in the present invention were measured with a differential scanning calorimeter (DSC) in a DSC8000 apparatus manufactured by PerkinElmer Co., Ltd. First, 3 to 10 mg of a sample was sealed into an aluminum pan and heated from room temperature to 200°C at 100°C/min. The sample was retained at 200°C for 5 min, and then cooled to 30°C at 10°C/min. The peak temperature observed in this cooling test was regarded as the crystallization temperature (Tc), and the amount of produced heat specified by the area of the peak was regarded as ΔH (1st-cool). Subsequently, the sample was left to stand for 5 min at 30°C, and then heated for the second time to 200°C at 10°C/min. The peak temperature observed in this second heating test was regarded as the melting point (Tm) (when multiple peaks were observed, two points on the high temperature side were listed in the table).

The final melting point (Tmf) of a polymer in the present invention was measured with a differential scanning calorimeter (DSC) in a DSC 8000 apparatus manufactured by PerkinElmer Co., Ltd. First, 3 to 10 mg of a sample was sealed into an aluminum pan, and heated from room temperature to 240°C at 80°C/min. The sample was retained at 240°C for 1 minute and then cooled to 0°C at 80°C/min. After being retained at 0°C for 1 minute, the sample was heated to 150°C at 80°C/min and retained at 150°C for 5 min. Finally, the sample was heated to 180°C at 1.35°C/min, and the intersection between the baseline and the tangent of the inflection point on the high temperature side of the peak obtained in this final heating test was regarded as the final melting point (Tmf).

Tmf can be considered as one parameter for evaluating the crystal structure of a component exhibiting extremely high stereoregularity, and the ease of crystallization and the crystal structure, for example, of a polymer in the ultra-high molecular weight region, which is regarded as having a tendency of being unlikely to crystallize. More specifically, it can be considered that, as this Tmf value is higher, the ultra-high molecular weight polymer component is more likely to form crystals that has high heat resistance.

Some structural formulae of compounds used in the following Examples and Comparative Examples have stereoisomeric structures. The structural formulae showing stereoisomers of the exemplified compounds show the major

isomers of the compounds used in the Examples and Comparative Examples. In the present invention, the main component refers to a component accounting for more than 50 mol%, and preferably 70 mol% or more.

[Example 1]

<Preparation of solid titanium catalyst component [α1]>

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 38.3 ml of the homogeneous solution was added dropwise to 100 ml of titanium tetrachloride retained at -20°C over 45 min while being stirred. After completion of adding, the temperature of the mixed liquid was raised to 80°C over 3.8 hours, and when the temperature reached 80°C, 1.83 g of the following compound 1 was added to the mixed liquid. The temperature was again raised to 120°C over 40 min, and the mixture was retained at the same temperature for 35 min while being stirred. After the reaction was complete, the solid portion was recovered by hot filtration, resuspended in 100 ml of titanium tetrachloride, and again thermally reacted at 120°C for 35 min while being stirred. After the reaction was complete, the solid portion was recovered again by hot filtration and thoroughly washed with decane at 100°C and decane at room temperature until no free titanium compound was detected in the washing liquid. The solid titanium catalyst component [α1] prepared by the above operations was preserved as a decane slurry, and a part of the slurry was dried to check the catalyst composition. The composition of the solid titanium catalyst component [α1] thus obtained had 0.42 mass% titanium, 1.4 mass% magnesium, and 0.11 mass% 2-ethylhexyl alcohol residues.

[Chem. 50]

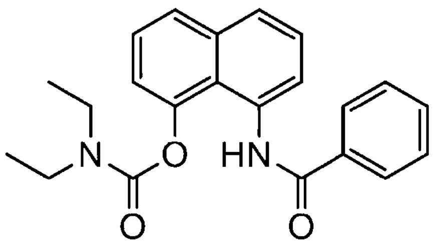

Compound 1

<Polymerization>

After 500 g of propylene and 1 NL of hydrogen at room temperature were added to a polymerization apparatus having an inner volume of 2 liters, a mixed liquid formed by mixing 7 ml of heptane, 0.5 mmol of triethyl aluminum, 0.1 mmol of cyclohexylmethyldimethoxysilane, and 0.004 mmol (in terms of titanium atom) of the solid titanium catalyst component [α1] at 25°C for 10 min was added, and the temperature inside the polymerization apparatus was promptly raised to 70°C while stirring. After polymerization at 70°C for 1.5 hours, the reaction was terminated by a small amount of ethanol, and propylene was purged. Moreover, the resulting polymer particles were dried under reduced pressure at 80°C overnight. Table 1 shows the activity, bulk specific gravity, MFR, amount of decane-insoluble parts, Tm, Tmf, and MWD, for example.

[Example 2]

<Preparation of solid titanium catalyst component [α2]>

After a 1-liter glass vessel was sufficiently purged with nitrogen, 85.8 g of anhydrous magnesium chloride, 321 g of decane, and 352 g of 2-ethylhexyl alcohol were placed therein, and subjected to a heating reaction at 130°C for 3 hours to give a homogeneous solution. Then, 241 g of this solution and 6.43 g of ethyl benzoate were added to the glass vessel, and mixed under stirring at 50°C for 1 hour.

After the homogeneous solution thus obtained was cooled to room temperature, the entirety of 30.6 ml of the homogeneous solution was added dropwise to 80 ml of titanium tetrachloride retained at -20°C over 45 min while being stirred. After completion of adding, the temperature of the mixed liquid was raised to 80°C over 3.8 hours, and when the temperature reached 80°C, 1.22 g of the following compound 2 was added to the mixed liquid. The temperature was again raised to 120°C over 40 min, and the mixture was retained at the same temperature for 35 min while being stirred. After the

reaction was complete, the solid portion was recovered by hot filtration, resuspended in 80 ml of titanium tetrachloride, and again thermally reacted at 120°C for 35 min while being stirred. After the reaction was complete, the solid portion was recovered again by hot filtration and thoroughly washed with decane at 100°C and decane at room temperature until no free titanium compound was detected in the washing liquid. The solid titanium catalyst component [α2] prepared by the above operations was preserved as a decane slurry, and a part of the slurry was dried to check the catalyst composition. The composition of the solid titanium catalyst component [α2] thus obtained had 0.40 mass% titanium, 1.6 mass% magnesium, and 0.12 mass% 2-ethylhexyl alcohol residues.

[Chem. 51]

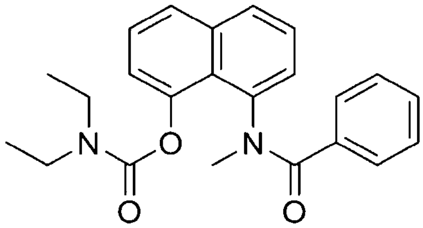

Compound 2

<Polymerization>

Polymerization of propylene was performed in the same manner as Example 1, except that 0.004 mmol (in terms of titanium atom) of the solid titanium catalyst component [α2] was used in place of the solid titanium catalyst component [α1]. The results are shown in Table 1.

[Example 3]

<Preparation of solid titanium catalyst component [α3]>

A solid titanium catalyst component [α3] was obtained in the same manner as Example 1, except that 1.97 g of the following compound 3 was used in place of 1.83 g of the compound 1.

[Chem. 52]

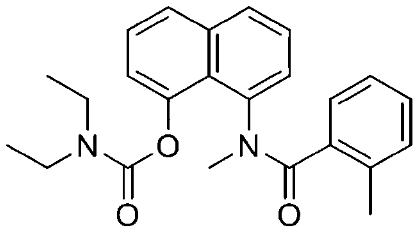

Compound 3

<Polymerization>

Polymerization of propylene was performed in the same manner as Example 1, except that 0.0032 mmol (in terms of titanium atom) of the solid titanium catalyst component [α3] was used in place of the solid titanium catalyst component [α1], the amount of triethylaluminum used was changed from 0.5 mmol to 0.4 mmol, and the amount of cyclohexylmethyldimethoxysilane used was changed from 0.1 mmol to 0.08 mmol. The results are shown in Table 1.

[Example 4]

<Preparation of solid titanium catalyst component [α4]>

A solid titanium catalyst component [α4] was obtained in the same manner as Example 2, except that 1.52 g of the following compound 4 was used in place of 1.22 g of the compound 2.

[Chem. 53]

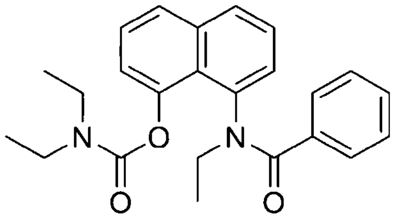

Compound 4

<Polymerization>

Polymerization of propylene was performed in the same manner as Example 1, except that 0.0028 mmol (in terms of titanium atom) of the solid titanium catalyst component [α4] was used in place of the solid titanium catalyst component [α1], the amount of triethylaluminum used was changed from 0.5 mmol to 0.35 mmol, and the amount of cyclohexylmethyldimethoxysilane used was changed from 0.1 mmol to 0.07 mmol. The results are shown in Table 1.

[Example 5]

<Preparation of solid titanium catalyst component [α5]>

A solid titanium catalyst component [α5] was obtained in the same manner as Example 1, except that 0.91 g of the following compound 5 was used in place of 1.83 g of the compound 1.

[Chem. 54]

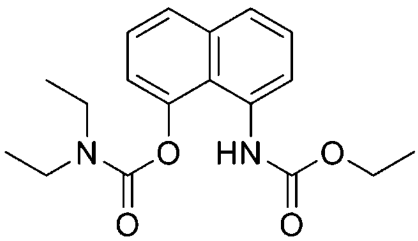

Compound 5

<Polymerization>

Polymerization of propylene was performed in the same manner as Example 3, except that the solid titanium catalyst component [α5] was used in place of the solid titanium catalyst component [α3]. The results are shown in Table 1.

[Example 6]

<Preparation of solid titanium catalyst component [α6]>

A solid titanium catalyst component [α6] was obtained in the same manner as Example 1, except that 1.74 g of the following compound 6 was used in place of 1.83 g of the compound 1.

[Chem. 55]

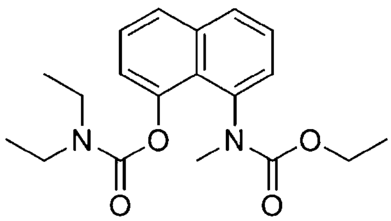

Compound 6

<Polymerization>

Polymerization of propylene was performed in the same manner as Example 1, except that the solid titanium catalyst component [α6] was used in place of the solid titanium catalyst component [α1]. The results are shown in Table 1.

[Example 7]

<Preparation of solid titanium catalyst component [α7]>

A solid titanium catalyst component [α7] was obtained in the same manner as Example 1, except that 1.81 g of the following compound 7 was used in place of 1.83 g of the compound 1.

[Chem. 56]

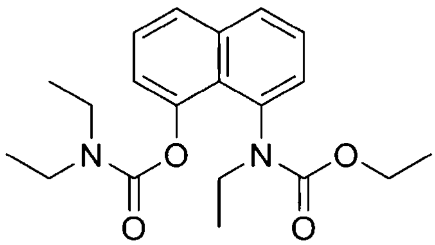

Compound 7

<Polymerization>

Polymerization of propylene was performed in the same manner as Example 4, except that 0.0028 mmol (in terms of titanium atom) of the solid titanium catalyst component [α7] was used in place of the solid titanium catalyst component [α4]. The results are shown in Table 1.

[Example 8]

<Preparation of solid titanium catalyst component [α8]>

A solid titanium catalyst component [α8] was obtained in the same manner as Example 2, except that 1.16 g of the following compound 8 was used in place of 1.22 g of the compound 2.

[Chem. 57]

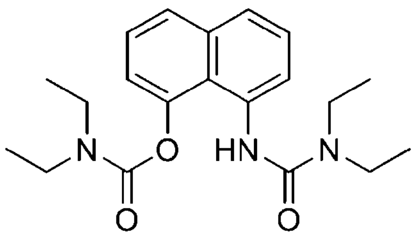

Compound 8

<Polymerization>

Polymerization of propylene was performed in the same manner as Example 1, except that the solid titanium catalyst component [α8] was used in place of the solid titanium catalyst component [α1]. The results are shown in Table 1.

[Comparative Example 1]

<Preparation of solid titanium catalyst component [β1]>

A solid titanium catalyst component [β1] was obtained in the same manner as Example 1, except that 1.86 g of the

following compound c1 was used in place of 1.83 g of the compound 1.

[Chem. 58]

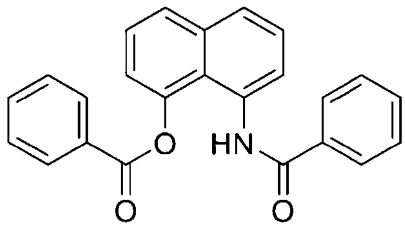

Compound c1

<Polymerization>

Polymerization of propylene was performed in the same manner as Example 1, except that 0.004 mmol (in terms of titanium atom) of the solid titanium catalyst component [β1] was used in place of the solid titanium catalyst component [α1]. The results are shown in Table 1.

[Comparative Example 2]

<Preparation of solid titanium catalyst component [β2]>

A solid titanium catalyst component [β2] was obtained in the same manner as Example 1, except that 1.32 g of the following compound c2 was used in place of 1.83 g of the compound 1.

[Chem. 59]

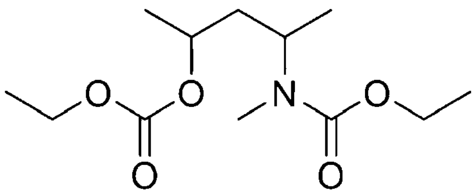

Compound c2

<Polymerization>

Polymerization of propylene was performed in the same manner as Example 1, except that 0.004 mmol (in terms of titanium atom) of the solid titanium catalyst component [β2] was used in place of the solid titanium catalyst component [α1]. The results are shown in Table 1.

[Comparative Example 3]

<Preparation of solid titanium catalyst component [β3]>

A solid titanium catalyst component [β3] was obtained in the same manner as Example 1, except that 1.57 g of the following compound c3 was used in place of 1.83 g of the compound 1 and the rotation number of stirring titanium tetrachloride was set at 350 rpm.

[Chem. 60]

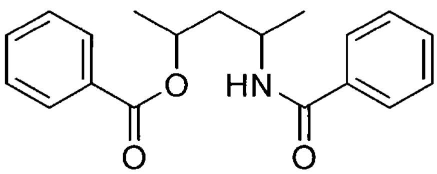

Compound c3

<Polymerization>

Polymerization of propylene was performed in the same manner as Example 1, except that 0.0032 mmol (in terms of titanium atom) of the solid titanium catalyst component [β3] was used in place of the solid titanium catalyst component [α1]. The results are shown in Table 1.

[Example 9]

<Preparation of solid titanium catalyst component [α9]>

A solid titanium catalyst component [α9] was obtained in the same manner as Example 2, except that 1.57 g of the following compound 9 was used in place of 1.22 g of the compound 2.

[Chem. 61]

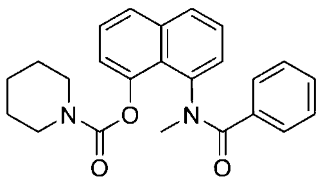

Compound 9

<Polymerization>

Polymerization of propylene was performed in the same manner as Example 3, except that the solid titanium catalyst component [α9] was used in place of the solid titanium catalyst component [α3]. The results are shown in Table 1.

[Example 10]

<Preparation of solid titanium catalyst component [α10]>

A solid titanium catalyst component [α10] was obtained in the same manner as Example 1, except that 2.03 g of the following compound 10 was used in place of 1.83 g of the compound 1.

[Chem. 62]

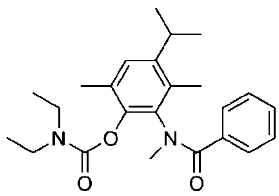

Compound 10

<Polymerization>

Polymerization of propylene was performed in the same manner as Example 3, except that the solid titanium catalyst component [α10] was used in place of the solid titanium catalyst component [α3]. The results are shown in Table 1.

[Example 11]

<Preparation of solid titanium catalyst component [α11]>

A solid titanium catalyst component [α11] was obtained in the same manner as Example 1, except that 1.86 g of the following compound 11 was used in place of 1.83 g of the compound 1.

[Chem. 63]

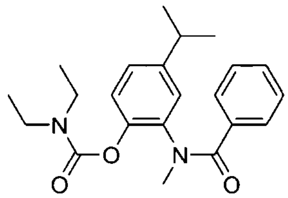

Compound 11

<Polymerization>

Polymerization of propylene was performed in the same manner as Example 1, except that the solid titanium catalyst component [α11] was used in place of the solid titanium catalyst component [α1]. The results are shown in Table 1.

[Example 12]

<Preparation of solid titanium catalyst component [α12]>

A solid titanium catalyst component [α12] was obtained in the same manner as Example 1, except that 1.79 g of the following compound 12 was used in place of 1.83 g of the compound 1.

[Chem. 64]

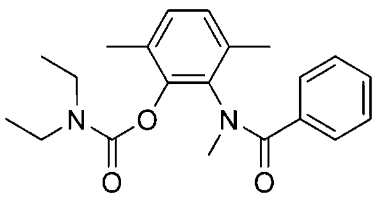

Compound 12

<Polymerization>

Polymerization of propylene was performed in the same manner as Example 1, except that the solid titanium catalyst component [α12] was used in place of the solid titanium catalyst component [α1]. The results are shown in Table 1.

[Table 1]

| Experiment No. | Activity (kg-PP/g-Cat) | Bulk specific gravity (g/ml) | MFR (g/10 min) | Amount of decane-soluble parts (wt%) | Mw | Mw/Mn | Mz/Mw |
|---|---|---|---|---|---|---|---|
| Example 1 | 34.1 | 0.47 | 1.1 | 1.72 | 602000 | 11.22 | 5.45 |
| Example 2 | 64.0 | 0.49 | 0.2 | 0.73 | 1260000 | 15.90 | 5.04 |
| Example 3 | 27.8 | 0.48 | 2.1 | 2.47 | 625000 | 12.52 | 7.66 |
| Example 4 | 58.3 | 0.48 | 0.2 | 0.72 | 1300000 | 17.37 | 5.57 |
| Example 5 | 33.3 | 0.48 | 7.4 | 3.36 | 382000 | 9.13 | 8.32 |
| Example 6 | 48.4 | 0.49 | 1.1 | 0.97 | 663000 | 11.48 | 5.71 |
| Example 7 | 40.5 | 0.48 | 1.3 | 1.03 | 635000 | 13.48 | 6.76 |
| Example 8 | 23.0 | 0.48 | 3.2 | 3.90 | 518000 | 11.66 | 7.29 |
| Example 9 | 52.0 | 0.48 | 0.5 | 0.72 | 902000 | 11.71 | 5.81 |
| Example 10 | 61.5 | 0.48 | 0.7 | 1.25 | 829000 | 12.34 | 6.05 |
| Example 11 | 21.4 | 0.45 | 4.3 | 5.13 | 504000 | 11.18 | 8.76 |
| Example 12 | 48.6 | 0.49 | 0.9 | 1.45 | 770000 | 14.21 | 5.76 |

(continued)

| Experiment No. | Activity (kg-PP/g-Cat) | Bulk specific gravity (g/ml) | MFR (g/10 min) | Amount of decane-soluble parts (wt%) | Mw | Mw/Mn | Mz/Mw |
|---|---|---|---|---|---|---|---|
| Comparative Example 1 | 37.5 | 0.48 | 2.7 | 3.78 | 461000 | 9.74 | 5.50 |
| Comparative Example 2 | 19.4 | 0.47 | 7.6 | 4.60 | 339000 | 8.19 | 5.92 |
| Comparative Example 3 | 36.2 | 0.27 | 9.0 | 2.37 | 536000 | 10.10 | 5.03 |

[Table 1] (continued)

| Experiment No. | Mw/Mn+Mz/Mw | Tmf (°C) | Tm (°C) | Tc (°C) | ΔH (1st-Cool) (J/g) |
|---|---|---|---|---|---|
| Example 1 | 16.67 | 172.35 | 163.66 | 117.08 | -91.10 |
| Example 2 | 20.94 | 173.05 | 165.99 | 116.83 | -98.34 |
| Example 3 | 20.18 | 171.74 | 162.09 | 116.26 | -97.44 |
| Example 4 | 22.94 | 172.84 | 165.26 | 115.78 | -98.62 |
| Example 5 | 17.45 | 170.16 | 159.97 | 114.98 | -93.89 |
| Example 6 | 17.19 | 172.65 | 164.22 | 116.71 | -99.77 |
| Example 7 | 20.24 | 171.77 | 163.09 | 116.51 | -99.84 |
| Example 8 | 18.95 | 170.58 | 161.41 | 115.67 | -94.60 |
| Example 9 | 17.52 | 172.84 | 164.85 | 116.35 | -99.31 |
| Example 10 | 18.39 | 172.68 | 164.10 | 114.77 | -97.75 |
| Example 11 | 19.94 | 170.85 | 160.47 | 113.38 | -88.90 |
| Example 12 | 19.97 | 173.23 | 164.79 | 116.05 | -97.46 |
| Comparative Example 1 | 15.24 | 170.59 | 165.00 | 111.10 | -81.80 |
| Comparative Example 2 | 14.11 | 170.62 | 160.47 | 115.44 | -86.82 |
| Comparative Example 3 | 15.13 | 171.55 | 162.98 | 114.84 | -88.76 |

From the results of the Examples and Comparative Examples described above, it is clear that propylene polymers with high values of Mw/Mn and/or Mz/Mw can be produced when propylene is polymerized in the presence of catalysts for olefin polymerization using the solid titanium catalyst components of the present invention. This point is also evident in the comparison using the sum of the "Mw/Mn" value and the "Mz/Mw" value as an index.

It is also clear that the propylene polymers of Examples of the present invention tend to have a high melting point and crystallization temperature, and especially high heat of fusion. Such propylene polymers can be expected to be molded materials that are excellent in both moldability and heat resistance.

## Claims

1. A solid titanium catalyst component (I) comprising titanium, magnesium, halogen, and a compound (a) represented by the following formula (1):

[Chem. 1]

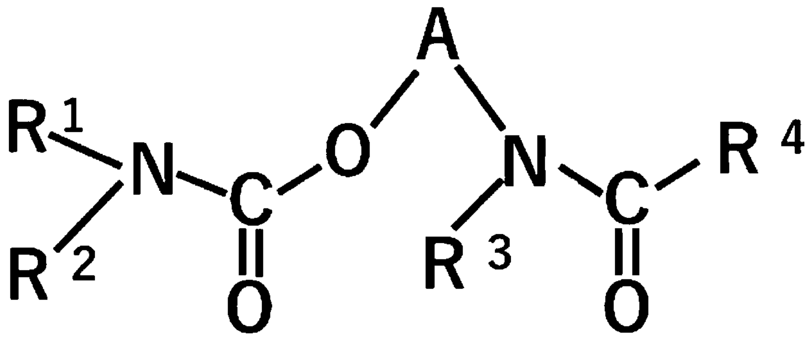

(1)

wherein

A is a substituent having a "$-CR_2-R^{100}-CR_2-$" structure; $R^1$ and $R^2$ are each a substituent having an "$R^{10}-CR_2-$" structure;
$R^3$ is a hydrogen atom or a substituent having an "$R^{10}-CR_2-$" structure;
$R^4$ is a substituent selected from a substituent having an "$R^{10}-CR_2-$" structure, a substituent having an "$R^{10}-At^{16}-$" structure, and a substituent having an "$R^{10}_2-At^{15}-$" structure;
$At^{15}$ is a Group 15 atom of the periodic table and $At^{16}$ is a Group 16 atom of the periodic table;
R and $R^{10}$ are each a group containing an atom selected from carbon, hydrogen, and elements in Groups 15, 16, and 17 of the periodic table;
$R^{100}$ is each a group containing an atom selected from carbon, hydrogen, and elements in Groups 15, 16, and 17 of the periodic table, or a bond selected from a single bond, a double bond, and a triple bond;
$R^1$ to $R^4$ and A may be bonded to each other to form a monocyclic ring or a polycyclic ring; and
a plurality of R and $R^{100}$ in A may be bonded to each other to form a monocyclic ring or a polycyclic ring, or form a multiple bond.

**2.** The solid titanium catalyst component (I) according to claim 1, wherein $R^{100}$ is a group containing an atom selected from carbon, hydrogen, and elements in Groups 15, 16, and 17 of the periodic table.

**3.** The solid titanium catalyst component (I) according to claim 1, wherein A is a cyclic structure.

**4.** The solid titanium catalyst component (I) according to claim 1, wherein A is an aromatic structure.

**5.** The solid titanium catalyst component (I) according to claim 1, wherein $R^3$ is a substituent having an "$R^{10}-CR_2-$" structure.

**6.** The solid titanium catalyst component (I) according to claim 1, wherein $R^4$ is a substituent having an "$R^{10}-CR_2-$" structure.

**7.** The solid titanium catalyst component (I) according to claim 1, wherein $At^{15}$ is a nitrogen atom.

**8.** The solid titanium catalyst component (I) according to claim 1, wherein $At^{16}$ is an oxygen atom.

**9.** A catalyst for olefin polymerization, comprising the solid titanium catalyst component (I) according to claim 1 and an organometallic compound catalyst component (II) containing a metal element selected from Groups 1, 2, and 13 of the periodic table.

**10.** The catalyst for olefin polymerization according to claim 9, further comprising an electron donor (III).

**11.** An olefin polymerization method, comprising polymerizing an olefin in the presence of the catalyst for olefin polymerization according to claim 9 or 10.

## INTERNATIONAL SEARCH REPORT

International application No.
**PCT/JP2024/013471**

**A. CLASSIFICATION OF SUBJECT MATTER**

***C08F 4/654***(2006.01)i; ***C08F 10/00***(2006.01)i
FI: C08F4/654; C08F10/00 510

According to International Patent Classification (IPC) or to both national classification and IPC

**B. FIELDS SEARCHED**

Minimum documentation searched (classification system followed by classification symbols)

C08F4

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2016-528307 A (BASELL POLIOLEFINE ITALIA S.R.L.) 15 September 2016 (2016-09-15)<br>claims, tables 1-1, 1-2 | 1-6, 9-11<br>7, 8 |
| Y<br>A | JP 2013-512996 A (DOW GLOBAL TECHNOLOGIES LLC) 18 April 2013 (2013-04-18)<br>claims, paragraph [0033], table 1 | 1-6, 8-11<br>7 |
| Y | JP 60-104102 A (MITSUI SEKIYU KAGAKU KOGYO K.K.) 08 June 1985 (1985-06-08)<br>claims, p. 3, lower left column | 1-6, 8-11 |
| Y | JP 2013-515835 A (HYOSUNG CORPORATION) 09 May 2013 (2013-05-09)<br>claims | 1-6, 8-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/013471**

**C. DOCUMENTS CONSIDERED TO BE RELEVANT**

| Category* | Citation of document, with indication, where appropriate, of the relevant passages | Relevant to claim No. |
|---|---|---|
| Y | JP 2006-528271 A (BASELL POLIOLEFINE ITALIA S.R.L.) 14 December 2006 (2006-12-14) claims | 1-6, 8-11 |
| Y | JP 2019-516852 A (W.R. GRACE & CO.-CONN.) 20 June 2019 (2019-06-20) claims | 1-6, 8-11 |
| Y | WO 2022/197491 A1 (W.R. GRACE & CO.-CONN.) 22 September 2022 (2022-09-22) claims | 1-6, 8-11 |
| Y | JP 2022-549144 A (W.R. GRACE & CO.-CONN.) 24 November 2022 (2022-11-24) claims | 1-6, 8-11 |
| A | JP 2008-533243 A (INEOS USA LLC) 21 August 2008 (2008-08-21) entire text | 1-11 |
| A | JP 2013-521341 A (DOW GLOBAL TECHNOLOGIES LLC) 10 June 2013 (2013-06-10) entire text | 1-11 |

Form PCT/ISA/210 (second sheet) (July 2022)

**INTERNATIONAL SEARCH REPORT**
**Information on patent family members**

International application No.
**PCT/JP2024/013471**

| Patent document cited in search report | Publication date (day/month/year) | Patent family member(s) | Publication date (day/month/year) |
|---|---|---|---|
| JP 2016-528307 A | 15 September 2016 | US 2016/0208027 A1<br>claims, tables 1-1, 1-2<br>EP 3044239 A1<br>CN 105492469 A<br>KR 10-2016-0044585 A | |
| JP 2013-512996 A | 18 April 2013 | US 2011/0130529 A1<br>claims, paragraph [0032], table 1<br>EP 2507269 A1<br>CN 102712704 A<br>KR 10-2012-0102094 A | |
| JP 60-104102 A | 08 June 1985 | (Family: none) | |
| JP 2013-515835 A | 09 May 2013 | US 2012/0283089 A1<br>claims<br>EP 2520594 A2<br>KR 10-2012-0047072 A<br>CN 102666598 A | |
| JP 2006-528271 A | 14 December 2006 | US 2007/0021295 A1<br>claims<br>EP 1626996 A2<br>KR 10-2006-0015322 A<br>CN 1798774 A | |
| JP 2019-516852 A | 20 June 2019 | US 2019/0270831 A1<br>claims<br>EP 3464391 A4<br>KR 10-2019-0026678 A<br>CN 109790238 A | |
| WO 2022/197491 A1 | 22 September 2022 | EP 4308615 A1<br>claims<br>KR 10-2023-0156389 A<br>CN 117355546 A<br>TW 202302660 A | |
| JP 2022-549144 A | 24 November 2022 | US 2022/0220060 A1<br>claims<br>WO 2021/055430 A1<br>EP 4031590 A4<br>KR 10-2022-0084293 A<br>CN 114729074 A | |
| JP 2008-533243 A | 21 August 2008 | US 2008/0125614 A1<br>entire text<br>EP 1866347 A2 | |
| JP 2013-521341 A | 10 June 2013 | US 2012/0316299 A1<br>entire text<br>EP 2539379 A1<br>CN 102918068 A<br>KR 10-2013-0020771 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57063310 A
- JP 2005517746 A
- WO 2008010459 A
- WO 2022045232 A
- WO 2022138634 A
- WO 2006077945 A
- JP 2001354714 A
- EP 585869 A1
- EP 0585869 A
- WO 2004016662 A